# EUROPEAN PATENT APPLICATION

(11) **EP 1 754 523 A2**
(43) Date of publication of application: **21.02.2007**
(21) Application number: 06017034.7
(22) Date of filing: 16.08.2006
(51) Int. Cl.: A63F 13/02, A63F 13/08, A63F 13/12

(54) **Gaming machine**

(30) Priority: 18.08.2005 JP 2005237961; 07.10.2005 JP 2005295645; 26.10.2005 JP 2005310818; 23.08.2005 JP 2005241777; 07.10.2005 JP 2005295646; 26.10.2005 JP 2005310819; 23.08.2005 JP 2005241778; 12.10.2005 JP 2005298047; 04.11.2005 JP 2005321578
(71) Applicant: Aruze Corporation, Tokyo 135-0063 (JP)
(72) Inventor: Okada, Kazuo, Koto-ku Tokyo 135-0063 (JP); Fujimoto, Jun, Koto-ku Tokyo 135-0063 (JP)
(74) Representative: HOFFMANN EITLE

(57) **Abstract**

A game machine (1) includes a main game machine body (20) that includes a main control device (80); and a plurality of terminal devices (30) each of which includes an input operation means (72), a sensation generating device (65), and a sub-control means (90). The terminal device (30) includes a seat (31). The sub-control means (90) controls the sensation generating means (65). Since the main control device (80) drives the sensation generating device (65) of the terminal device (30) and other terminal devices (30) on the basis of the positional data of the operation character and the environment data of the game area generated according to the game program, one or more sensation generating control signals stored in advance are transmitted to each sub-control device (90).

## Description

### FIELD OF THE INVENTION

The present invention relates to a multi-player-type game machine in which plural players participate.

### RELATED ART

In a first aspect of the background art, conventionally, multi-player-type game machines for commercial use, in which numerous players participate, commonly referred to as multi-player game machines, are known. In recent years, there has been a horse-racing game machine as such a multi-player game machine. This horse-racing game machine includes, for example, a main game machine body to which a large main display part is provided and a plurality of terminal devices to which sub-display parts which are attached to the main game machine body are provided.

These plural terminal devices are respectively provided with seats which seat the players and face the main display part. In this terminal device, each player sits in the seat and performs various operations while watching the sub-display part.

In this horse-racing game machine, the race horses and the odds are shown in the main display part and the sub-display part. Each player selects a race horse from among the race horses shown and bets medals. Then, racing is performed by these race horses in the main display part and medals are paid out to each player according to the results, based on odds set beforehand.

In a horse-racing game machine such as this, a realistic feeling of being at the racetracks can be enjoyed by listening to the sounds output from a speaker while viewing a video shown in the main display part.

In addition, as a multi-player game, there is an integrated gaming system which includes a cockpit for seating a plurality of players within a theater which is provided with a large screen (refer to Patent Reference 1). In this integrated game system a personal computer device provided in each cockpit is connected to an integrated computer device for gaming, and these devices operate together to run a game. In addition, a realistic feeling and tension which cannot be attained through a privately-owned game machine is provided by generating loud sounds and vibrating sensations among the players within the theater.

Patent Reference 1: Japanese Unexamined Patent Application Laid-Open Publication Heisei 10-314450

In a second aspect of the background art, conventionally, multi-player-type game machines for commercial use, wherein numerous players participate, commonly referred to as multi-player game machines, are known. In recent years, there has been a horse-racing game machine as such a multi-player game machine. This horse-racing game machine includes, for example, a main game machine body to which a large main display part is provided and a plurality of terminal devices to which sub-display parts which are attached to the main game machine body are provided.

These plural terminal devices are respectively provided with seats which seat the players and face the main display part. In this terminal device, each player sits in the seat and performs various operations while watching the sub-display part.

In this multi-player game machine, the race horses and the odds are shown in the main display part and the sub-display part. Each player selects a race horse from among the race horses shown and bets medals. Then, racing is performed by these race horses in the main display part and medals are paid out to each player according to the results, based on odds set beforehand.

In a multi-player game machine such as this, each terminal device is connected respectively to the main game machine body by a communication cable. Information necessary for gaming are exchanged by performing bi-directional communication via these communication cables (refer to Patent Reference 2).

Incidentally, in multi-player game machines such as this, it is assumed in most cased that the player will play the game for a long period of time, such as by using horse-racing as the theme of the game as in the foregoing. Therefore, high-quality seats which have been modified so that the person sitting does not get tired even when sitting for long periods of time are implemented as seats in which the players sit.

Patent Reference 2: Japanese Unexamined Patent Application Laid-Open Publication Heisei 8-206355

In a third aspect of the background art, for example, multi-player-type game machines for commercial use, in which numerous players participate, commonly referred to as multi-player game machines, are known. In recent years, there has been a horse-racing game machine as such a multi-player game machine. This horse-racing game machine includes, for example, a main game machine body to which a large main display part is provided and a plurality of terminal devices to which sub-display parts which are attached to the main game machine body are provided.

These plural terminal devices are respectively provided with seats which seat the players and face the main display part. In this terminal device, each player sits in the seat and performs various operations while watching the sub-display part.

In this horse-racing game machine, the race horses and the odds are shown in the main display part and the sub-display part. Each player selects a race horse from among the race horses shown and bets medals. Then, racing is performed by these race horses in the main display part and medals are paid out to each player according to the results, based on odds set beforehand.

In a horse-racing game machine such as this, a realistic feeling of being at the racetracks can be enjoyed by listening to the sounds output from a speaker while viewing a video shown in the main display part.

In addition, as a multi-player game, there is an integrated gaming system which includes a cockpit for seating a plurality of players within a theater which is provided with a large screen (refer to Patent Reference 1). In this integrated game system a personal computer device provided in each cockpit is connected to an integrated computer device for gaming, and these devices operate together to run a game. In addition, a realistic feeling and tension which cannot be attained through a privately-owned game machine is provided by generating loud sounds and vibrating sensations among the players within the theater.

### DISCLOSURE OF THE INVENTION

### SUMMARY OF THE INVENTION

However, in multi-player game machines such as those above, the players cannot stimulate sensations individually, and it was difficult to enhance the enjoyment of each player.

In light of the foregoing circumstances, as a first issue of the present invention, an object of the invention is to provide a game machine in which sensations are stimulated individually for each player and the enjoyment of each player is enhanced.

### MEANS USED TO SOLVE THE ABOVE-MENTIONED PROBLEMS

The present invention provides a game machine such as that below, in order to overcome the foregoing problems.

In a first aspect of the present invention, a game machine includes: a game controller (for example, an input operation part 72, described hereafter) for receiving input from a player; a monitor (for example, a sub-display part 61 and a main display device 22, described hereafter) for receiving externally or generating internally and showing a game screen, generated according to a multi-player fighting game program; and a seat (for example, a seat 31, described hereafter) for seating the player; and a sensation generating means for generating sensations according to input from the game controller and input from an opposing player.

According to the first aspect of the invention, in a game machine which includes a game controller for receiving input from a player, a monitor for receiving externally or generating internally and showing a game screen, generated according to a multi-player fighting game program, and a seat for seating the player, because the seat further includes a sensation generating means for generating sensations in relation to input from the game controller and input from an opposing player, the player can view a game screen based on the multi-player fighting game program, and at the same time, sensations in relation to input from the game controller and input from an opposing player can be provided to the player. Therefore, through sensations by the sensation generating means, a game which is more realistic than conventional games can be experienced.

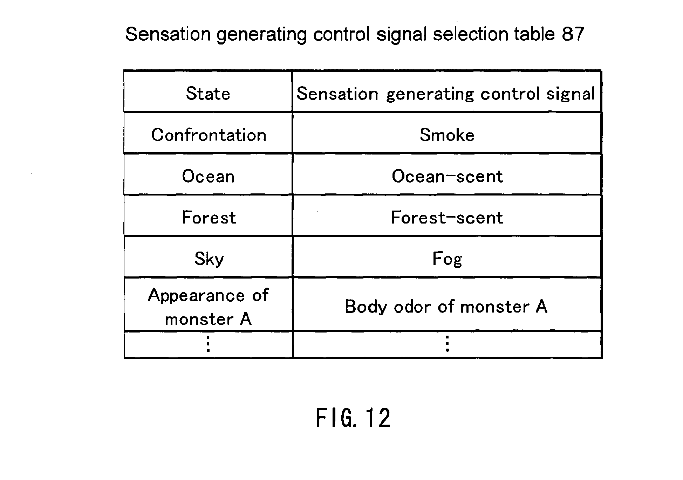

In a second aspect of the present invention, a game machine includes: a main game machine body (for example, a main game machine body 20, described hereafter) including a memory means (for example, a database 84, described hereafter) for storing a game program and a main control means (for example, a main control device 80, described hereafter) for executing the game program stored in the memory means; and a plurality of terminal devices (for example, terminal devices 30, described hereafter) each of which including an input means (for example, an input operation part 72, described hereafter), a sensation generating device (for example, a sensation generating device 65, described hereafter) for generating sensations in a player, a sub-control means (for example, a sub-control device 90, described hereafter) connected to the main game machine body through wireless or wired connection, for transmitting game input data according to input from the input means to the main game machine body, and a sub-display means (for example, a sub-display part 61, described hereafter) for showing image data; in which the main control means receives a plurality of game input data from the plurality of terminal devices, generates image data corresponding to each terminal device based on these game input data, transmits the generated image data to the corresponding terminal device; the sub-control means shows the received image data in the sub-display means; the terminal device includes a seat (for example, a seat 31, described hereafter) for enabling the player to operate the input means while seated; the sub-control means includes a sensation generating device control means (for example, a CPU 91, described hereafter) for controlling the sensation generating device; the game input data includes positional data of an operation character which can be moved over a single game area generated according to the game program; and, in order to drive the sensation generating devices in this terminal device and other terminal devices according to the positional data of the operation character and an environment data (for example, the situations in Fig. 12 are ocean and forest) set for each of a plurality of game areas in the game area, the main control means transmits, to respective sub-control means, one or more sensation generating control signals stored according to the environment data set beforehand for each of a plurality of game areas.

According to the second aspect of the present invention, because the main game machine body drives the sensation generating device of the terminal device based on the positional data of the operation character and the environment data of the game area generated according to the game program, sensations suitable for the game area can be provided to the player using the terminal device. For example, the sensation generating device can generate the scent of the ocean or trees if the environment data is of an ocean, forest or the like, generate fog if the environment data is of fog, and produce a feeling of flying in the air by strengthening the output of the fog if the environment data is of the sky, and thus, provide the player with sensations.

In a third aspect of the present invention, the game machine according to the second aspect of the invention has a sensation generating device in the terminal device which includes a plurality of storage containers for storing plural types of fragrances of differing scents, a spray means for selectively spraying the fragrances stored in the plurality storage containers, a memory means for storing table data (for example, the sensation generating control signal selection table 87) in which the environment data set for each game area and the sensation generating control signal for providing sensation corresponding to this environment data are correlated; and a sensation generating device driving means for selecting one storage container from the storage containers, based on the sensation generating control signal, and spraying the fragrance stored in the selected storage container with the spray means.

According to the third aspect of the present invention, the sensation generating device includes a plurality of storage containers for storing plural types of fragrances of differing scents and a spray means for selectively spraying the fragrances stored in the plurality storage containers, in which one storage container is selected from the storage containers, based on the sensation generating control signal, and the fragrance stored in the selected storage container is sprayed with the spray means. Therefore, the player's olfactory sense is stimulated, various information on the game environment are transmitted to the player and the enjoyment of the player can be enhanced. For example, the regions in the game environment (game areas) in which scents are generated in the real world, such as oceans and forests in the game environment and the scent of food in a cafeteria, can be presented more realistically. In addition, a game world which is further realistic can be presented by generating body odors and perfume scents of the characters, the smell of monsters, and the like appearing in the game environment.

In a fourth aspect of the present invention, a game machine according to the second or third aspect of the invention has a terminal device which includes a traveling means (for example, a traveling part 32, described hereafter) for enabling movement in predetermined regions; in which the main control means transmits a movement-control signal to the terminal device so that the plurality of terminal devices have a predetermined positional relationship through the traveling means, and at the same time, outputs a spotlight lighting control signal for lighting a spotlight (for example, a spotlight 25, described hereafter) to the plurality of terminal devices.

According to the fourth aspect of the present invention, the main game machine body of the game machine transmits a movement-control signal to the terminal device, transmits a movement-control signal to the terminal device so that the plurality of terminal devices have a predetermined positional relationship (for example, a confrontational position), and at the same time, outputs a spotlight lighting control signal for lighting a spotlight (for example, spotlight 25) to the plurality of terminal devices. Therefore, for example, a terminal device which is positioned in a predetermined positional relationship (for example, a confrontational position) and lit by a spotlight can draw attention on the field, and a player operating a terminal device which is not lit by a spotlight can be notified that another player is in a confrontation, even when he is playing his own game.

In a fifth aspect of the present invention, a game machine according to second or third aspect of the invention has: a sensation generating device in the terminal device which includes a mist generating device (for example, a spray device 68, described hereafter) for generating fog-like mist; and a sensation generating device driving means for driving the mist generating device driving means in response to the reception of a sensation generating control signal by the terminal device.

According to the fifth aspect of the present invention, in response to the reception of a sensation generating control signal by the terminal device of the game machine, the sensation generating device driving means drives the mist generating device. Therefore, for example, these terminal devices can draw attention of the field by the driving of the mist generating device, and a player operating a terminal device which is not lit by a spotlight can be made aware of other players through the generation of mist, even when he is playing his own game. Furthermore, the enjoyment of the player of the terminal device running the mist generating device can be enhanced and, for example, a feeling of floating the air can be produced by concealing the lower part of the main seat body from the view of the player with mist.

In a sixth aspect of the present invention, a game machine according to the fifth aspect of the invention has: a mist generating device which includes a water storage container for storing water and a mist spray means for spraying water stored in the water storage container from the lower part of the seat; and a sensation generating device driving means for driving the mist spray means based on the sensation generating control signal.

According to the sixth aspect of the present invention, the sensation generating device includes a storage container for storing water and a spray means for spraying water stored in the storage container from the lower part of the seat, as a mist spray means. Therefore, mist, fog and the like in the game environment can be presented realistically, various information on the game environment can be transmitted to the player, and the enjoyment of the player can be enhanced. For example, a feeling of floating the air can be produced by concealing the lower part of the main seat body from the view of the player with mist.

In a seventh aspect of the present invention, a game machine includes: a main game machine body (for example, a main game machine body 20, described hereafter) including a memory means (for example, a data base 84, described hereafter) for storing a game program, and a main control means (for example, a main control device 80, described hereafter) for executing the game program stored in the memory means; and a plurality of terminal devices (for example, terminal devices 30, described hereafter) including an input means (for example, an input operation part 72, described hereafter), a sensation generating device (for example, a sensation generating device 65, described hereafter) for generating sensations in a player, and a sub-control means (for example, a sub-control device 90, described hereafter), connected to the main game machine body through wireless or wired connection, for transmitting game input data according to input from the input means to the main control means; and a display means (for example, a main display part 22 and a sub display part 61, described hereafter) for showing image data; in which the main control means receives a plurality of game input data from the plurality of terminal devices, generates a single game data according to the game program based on this plurality of game input data, and generates and outputs to the display means image data which is shared by all terminal devices based on this single game data; the terminal device includes a seat (for example, a seat 31, described hereafter) for enabling the player to operate the input means while seated; the sub-control means includes a sensation generating device control means (for example, a CPU 91, described hereafter) for controlling the sensation generating device; the single game data generated in the main control means includes positional data of a plurality of operation characters, which can be moved within a single game area generated according to the game program based on respective game input data input by the input means of the plurality of terminal devices; and when the positional data of one operation character which is motion-operated by one terminal device among the plurality of terminal devices and positional data of another operation character which is motion-operated by another terminal device among the plurality of terminal devices meet predetermined conditions, the main control means transmits one or more sensation generating control signals stored beforehand to respective sub-control means, in order to drive the sensation generating devices in the one terminal device and the other terminal devices.

Here, the display means can be provided individually in each terminal device or shared therewith.

Predetermined conditions means, for example, to fall within threshold data in which the difference values of the positional data of the plurality of operation characters are determined beforehand. This indicates that a plurality of operation characters is in close proximity or has collided. When this condition is met, for example, the players are positioned within their mutual range enabling attack and fighting between the players start (fighting mode).

According to the seventh aspect of the present invention, the sensation generating device of the terminal devices of these players are driven when the positional data of the operation character a player operates and the operation character another player operates meet a predetermined condition, or in other words, the positional relationships of the operation characters meet a predetermined condition, in a single game area.

Therefore, because sensations are stimulated only for players whose operation character is in a predetermined positional relationship, sensations can be stimulated individually for each player and the enjoyment of each player can be enhanced.

In an eighth aspect of the present invention, a game machine according to any of the second, third and seventh aspect in which: the main game body includes a play area (for example, a play area 21, described hereafter) in which the plurality of terminal devices is placed; the terminal device includes a moving means (for example, a traveling part 32, described hereafter), which is provided on the lower part of the seat, for moving the terminal device on the play area; the sub-control means includes a movement control means (for example, a CPU 91, described hereafter) for driving the moving means according to a movement-control signal from an external source and moving the terminal device to the predetermined position; and the main control means includes a movement-control signal transmitting means for transmitting the movement-control signal to the specified terminal device, when the positional data of the operation character of a specific terminal device among the plurality of terminal devices meet the predetermined condition.

According to the eighth aspect of the present invention, because a moving means is provided in the terminal device, this moving means is driven by a movement-control signal from the main control means, and the terminal device moves to a predetermined position, each player can play the game by changing the position of the terminal device.

In addition, by reflecting the positional relationship of a plurality of operation characters within the game area in the positional relationship of the plurality of terminal devices, the positional relationships between the operation characters in the game area can be presented more realistically on the play area, and thus, the enjoyment of the player is further enhanced. For example, if a plurality of players fight against each other, the players can be made aware that they are enemies by bringing the terminal devices of the competing players closer together, and tension between the opposing players can be enhanced.

According to the foregoing invention, the enjoyment of the player can be enhanced by providing a game machine which stimulates sensations according to the game situation for the player operating the terminal device.

In a ninth aspect of the present invention, a game device (for example, terminal devices 30, described hereinafter) includes: a control means (for example, a CPU 91, described hereinafter) for receiving game data generated according to a game program; a display means (for example, sub-display part 61; described hereinafter); and a seat (for example, seat 31, described hereinafter) with a head rest for enabling the player to operate the input means while seated; wherein the control means is connected to a spray means (for example, spray device 68, described hereinafter) for spraying fragrance-containing air from the head rest (for example, fragrance spraying nozzle 76, described hereinafter), and causes the spray means to spray the fragrance in accordance with data that is input via the input means by the player as a condition for starting the game based on the game program.

According to the ninth aspect of the present invention, the player can determine whether to cause fragrance to be emitted at the start of the game regardless of the content of the game. In other words, a game device can be provided that can respond to the preferences of each player, i.e., when a player becomes tired in the game or at other times and desires to cause a preferred fragrance to be emitted in order to relax, or when the player desires to stop the emission of fragrance in advance even in situations in which fragrances are emitted in relation to the content of the game. In addition, the olfactory sense of the players can be reliably stimulated because fragrance is sprayed from the head rest.

The tenth aspect of the present invention is the game device according to the ninth aspect, in which the control means outputs and displays a fragrance selection screen (for example, a fragrance selection screen 88B, described hereinafter) on the display means in prescribed conditions, and causes the spray means to spray the fragrance in accordance with selection input data of the player on the fragrance selection screen.

According to the tenth aspect of the present invention, a game device can be provided that can respond with greater detail to the preferences of each player in that a fragrance selection screen is displayed on the display screen of the game device at the start of the game, after a prescribed time has elapsed after the start of the game, or in other prescribed conditions, in order to allow the players to select whether to emit fragrance, and in the case a fragrance is to be emitted, allow the players to select the type of fragrance and the emission timing regardless of the relationship to the content of the game.

According to the above-described invention, a game machine suited to the preferences of the player can be provided in which the players can freely cause a desired fragrance to be emitted at the desired time without regard to the content of the game, in the multiplayer game machine.

In addition, the multi-player game machine according to a second aspect of the background art has a second issue such as that below. For example, it is assumed that, if the player plays the game for a long period of time, the player will wish to purchase products such as drinks. In addition, it is also assumed that a problem will occur in the terminal device. However, in these cases, the enjoyment of the game may be reduced because the player must leave the seat within the terminal device each time.

In light of the foregoing circumstances, as a second issue of the present invention, an object of the present invention is to provide a game machine which enables the player operating the terminal device to smoothly and quickly call for the manager who manages the game hall without leaving the terminal device.

In a ninth aspect of the present invention, a game machine includes: a game controller (for example, an input operation part A72, described hereafter) for receiving input from a player; a monitor (for example, a sub-display part A61 and a main display device A22, described hereafter) for receiving externally or generating internally and showing a game screen, generated according to a multi-player fighting game program; and a seat (for example, a seat A31, described hereafter) for seating the player; in which the seat further includes a light display means (for example, a light display device A325) for showing requests to the outside through light emissions in a plurality of distinct optical patterns.

According to the eleventh aspect of the present invention, the game machine includes a seat which receives input from the player, receives externally or generates internally and shows a game screen, generated according to a game program, and enables the player to sit, in which this seat further includes a light display device for showing requests to the outside through light emissions in a plurality of distinct optical patterns. This game machine can show requests to the outside through light emissions in a plurality of distinct optical patterns.

In a twelfth aspect of the present invention, a game machine includes: a main game machine body (for example, a main game machine body A20, described hereafter) including a memory means (for example, a data base A84, described hereafter) for storing a game program and a main control means (for example, a main control device A80, described hereafter) for executing the game program stored in the memory means; and a plurality of terminal devices (for example, terminal devices A30, described hereafter) including an input means (for example, an input operation part A72, described hereafter), and a sub-control means (for example, a sub-control device A90, described hereafter), connected to the main game machine body through wireless or wired connection, for transmitting game input data according to input from the input means to the main control means; and a display means (for example, a main display device A22, a management display part A87, and a sub-display part A61, described hereafter) for showing images based on image data output from the main control means; in which the terminal device includes a seat (for example, a seat A31, described hereafter) for enabling the player to operate the input means while seated, and a light display means (for example, a light display device A325, described hereafter) for emitting light; the sub-control means includes a light control means (for example, a CPU A91, described hereafter) for lighting the light display means, based on input by the input means; and the light display means is provided in a position which can be viewed from outside of the terminal device to which the light display device is provided.

According to the twelfth aspect of the present invention, because the game machine lights the light display means based on input from the input means and this light control means is provided in a position which can be viewed from outside of the terminal device to which the light display means is provided, for example, when the player calls for the manager who manages the game hall in order to receive services, such as delivery of products such as drinks, and repair work when a malfunction occurs in the terminal device, the player enters this into the input means, while seated in the seat of the terminal device. The light control means illuminates the light display means provided in the terminal device, based on the input of this input means. Because the light display means is provided in a position which can be viewed from outside of the terminal device to which the light display means is provided, there are instances when the manager notices the lighting of the light display means easily and, in response, goes to the player who called for the manager. In other words, the player can smoothly and easily call for the manager in some instances.

In a thirteenth aspect of the present invention, a game machine according to the twelfth aspect of the invention has a light display means emits light with a plurality of lighting aspects (for example, purple, yellow, white, green, blue, and red); and a light control means illuminates the light display means in a predetermine lighting aspect, according to the input from the input means.

According to the thirteenth aspect of the present invention, the light display means emits light with differing lighting aspects, according to the input from the input means. Therefore, for example, the type of service desired by the player may be recognized by viewing the lighting aspects of this light display means. For example, the player enters into the input means the type of product he wants delivered, such as drinks, or the type of service he desires, such as repair work when a malfunction occurs in the terminal device, namely according to the content of the order. In response, the light control means is illuminated with differing lighting aspects, and thus, the manager can identify the type of service, the content of the order and the like.

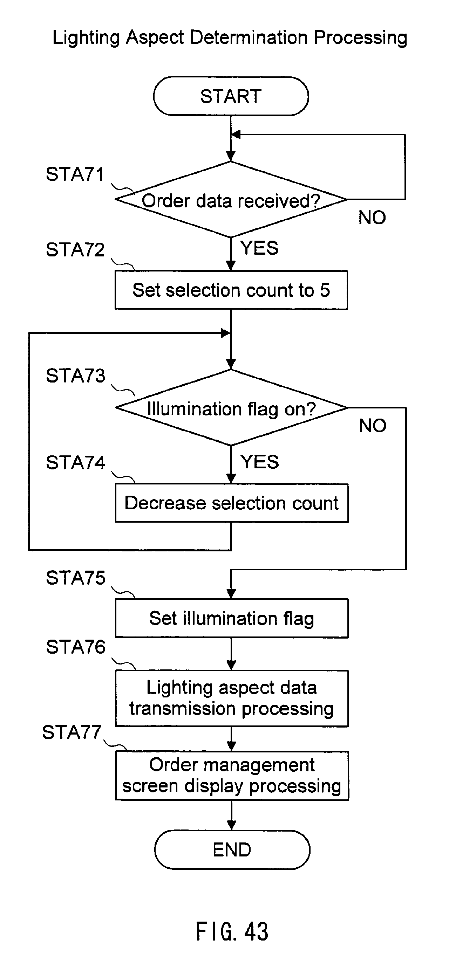

In a fourteenth aspect of the present invention, a game machine according to the thirteenth aspect of the invention has: a terminal device which further includes a moving means (for example, a traveling part 32, described hereafter) which is provided on the lower part of the seat, for moving the terminal device; a sub-control means which includes a movement control means (for example, a CPU A91, described hereafter), connected to the main game machine body through wireless or wired connection, for driving the moving means according to an input from an input means ; a light control means which illuminates the light display means according to lighting aspect data from an outer source; a main control means which further includes a lighting aspect determination means (for example, a lighting aspect determination processing shown in Fig. 43, described hereafter) for determining the lighting aspect of the light display means of the terminal device which transmitted the game input data, based on the game input data received from the sub-control means; in which the main control means transmits the determined lighting aspects as lighting aspect data.

According to the fourteenth aspect of the present invention, the player enters into the input according to the desired service. The sub-control means transmits the game input data based on this input to the main control means. The lighting aspect determination means determined the lighting aspect of the light display means of the terminal device which transmitted the game input data, based on the received game input data. In addition, the lighting aspect determination means determines the lighting aspect so that the lighting aspects of the light display means provided in each of the plural terminal devices are not the same, when determining the lighting aspects of the light display means. Then, the main control means transmits the determined lighting aspects as the lighting aspect data to the sub-control means. The light control means illuminates the light display means according to the received lighting aspect data, which is based on the input from the input means. Therefore, the light display means provided in each terminal device is illuminated with differing lighting aspects, and thus, the manager can match the content of the order and the lighting aspect of the light display means.

In a fifteenth aspect of the present invention, a game machine according to any of twelfth to fourteenth aspect of the invention has a light display means which includes an light emission means (for example, an LED chip, described hereafter) for emitting light of differing colors (for example, purple, yellow, white, green, blue, and red).

According to the fifteenth aspect of the present invention, because the light display means emits light of differing colors based on the input operations by the player, the manager can see the light display means with more clarity, in some instances. In addition, because light of differing colors are emitted, it can be effective as presentation of the game hall, in some instances.

In a sixteenth aspect of the present invention, a game machine according to any of the twelfth to fourteenth aspect of the invention has: a terminal device which includes a sub-display means (for example, a sub-display part A61, described hereafter) for showing image data; a game program which includes a product acquisition event which is generated according to the operation of the input means; a main control means which includes a product memory means (for example, a data base A84, described hereafter) for storing product data of a product corresponding to the product acquisition event, and in which the player operating the terminal device transmits product data according to the product acquisition event to the terminal device, within the game environment realized by the game program; a sub-control means which shows a product image data included in the product data in the sub-display means according to the received product data; and a light control means which illuminates the light display means with the lighting aspect corresponding to the product, according to the selection of the product made by the player, based on the product image data.

According to the sixteenth aspect of the present invention, in the game program executed by the main control means, within the game environment, the main control means transmits acquired product data to the terminal device, in response to the acquisition of the product by the user through the product acquisition event. The sub-control means of the terminal device which received this product data shows the product image data included in the product data in the sub-display means and illuminates the light display means with the lighting aspect corresponding to the product, when the player has selected this product. Therefore, for example, if the player selects a product acquired virtually in the game (for example, a drink, described hereafter) so as to exchange the acquired product with a real product, the manager (store staff, etc.) is notified by the illuminating of the light display means and an actual product can be received. Thus, this game machine can enhance the enjoyment of the game to the player, by correlating the virtual game contents with real products.

In a seventeenth aspect of the present invention, a game machine according to any of twelfth to fourteenth aspect of the invention has: a light display means which includes a light emission means (for example, an LED chip, described hereafter) for emitting light of differing colors; and a light control means which enables the light emission means of differing colors to illuminate according to the product acquired by the player in the game program.

According to the seventeenth aspect of the present invention, in the game program executed by the main control means, the light control means illuminated the light emission means according to the product, in response to the performance of a presentation in which the player acquired a product. Therefore, for example, the manager is notified accurately by the illumination of the light emission means that the product (for example, a drink, described hereafter) acquired virtually in the game by the player is one product among a plurality of types of products, and this one product can be received from the manager. Thus, this game machine can enhance the enjoyment of the game to the player, by correlating the virtual game contents with real products.

According to the foregoing invention, the player enters into the input means, while seated in the seat of the terminal device, when calling for a manager who manages the game hall, in order to receive services such as the delivery of products such as drinks and repair work when a malfunction occurs in the terminal device. The light control means illuminated the light display means provided in the terminal device according to the input from the input means. Because the light display means is provided in a position which can be viewed from outside of the terminal device to which the light display means is provided, there are instances when the manager notices the lighting of the light display means easily and, in response, goes to the player who called for the manager. In other words, the player can smoothly and easily call for the manager in some instances.

In an eighteenth aspect of the present invention, a game device includes: a control means (for example, CPU A91, described hereinbelow) for receiving game data generated according to the game program; an input means (for example, input operation unit A72, described hereinafter); a display means (for example, sub-display part A61, described hereinafter); a seat (for example, a seat A31, described hereafter) for enabling the player to operate the input means while seated, and a light-emitting means (for example, light-emitting plate A330, described hereinafter) disposed in a viewable position from the exterior of the game device; in which: the light-emitting means includes a plurality of transparent plates on which images of a plurality of drinks are drawn, and the control means outputs and displays a selection screen for drinks or other products on the display means in accordance with an operation by the player from the input means, and causes the light-emitting means to light up the plate that corresponds to the selection input data in accordance with the selection input data of the player on the selection screen for drinks or other products.

According to the eighteenth aspect of the game machine, a game device can be provided that allows the player to display on the display screen of the game machine a menu of drinks or the like regardless of the content of the game and notify the store staff of an order for a drink or the like at any time during the game or during a short break in the game. The player can thereby concentrate on the game without leaving the seat and suspending the game each time to order a drink or the like.

In addition, the player can light up a plate that corresponds to a notification of terminal trouble provided to the light emission means, when the player desires to call the manager who is managing the game machine in order to request repair or other services when the game machine malfunctions.

Furthermore, the light emission means is disposed in a position that can be viewed from the exterior of the game device including the display means, and the store staff or manager can therefore easily see the lighted plate of the light emission means, and in accordance therewith can go to the player who called for attention. In other words, the player can smoothly and easily call the store staff or the like.

According to the game machine above-described, the player can provide notification while remaining seated in the seat of the game device when the player desires to call the store staff or the like of the game area in order to have drinks delivered, have repair work performed when the game device has malfunctioned, or to receive other service.

However, the multi-player game machine according to a third aspect of the background art has a third issue such as that below, in particular. In other words, because the game machine provides the player with realistic feelings and tension for a long period of time, the player becomes tired psychologically or physically and wishes to take a short break. In cases such as this, it is known that the game machine halts the game by including an input means for halting the game (PAUSE button, etc.). However, after halting the game in this way, the player adjusts the seat for resting and manually switches the screen of the monitor showing the game.

In light of the foregoing circumstances, as a third issue of the present invention, an object of the present invention is to provide a game machine which halts the game or switches a game screen shown in a monitor to another image when the player operating the game machine merely changes the angle of the backrest of the seat in the game machine.

Another issue is that the player cannot leave during play, and therefore must choose to suspend the game and move away from the terminal device of the game or to continue play. In the former case, the terminal would be yielded to another player and the game cannot be immediately continued. In the latter case, the player cannot any longer sufficiently enjoy the game due to strong sensations of fatigue rather than a realistic feeling and tension.

In light of the foregoing, a second object of the third aspect of the present invention is to provide a game machine in which a reclining mechanism is provided to the seat of the terminal device.

Another issue is that the player must move away from the game device in order to rest. In such a case, the game device is yielded to another player, and the game therefore cannot be immediately continued. Also, the player cannot enjoy the memories of the game while at the site.

In light of the foregoing, a third object of the third aspect of the present invention is to provide a game machine in which the seat of the terminal device is provided with a massage mechanism.

In a nineteenth aspect of the present invention, a game machine includes: a game controller (for example, an input operation part B72, described hereafter) for receiving input from a player; a monitor (for example, a sub-display part B61 and a main display device B22, described hereafter) for receiving externally or generating internally and showing a game screen, generated according to a game program; and a seat (for example, a seat B31, described hereafter) for seating the player; in which the seat includes reclining function, a sensor for detecting the angle at which the backrest of the seat is reclined by the reclining function, and a control means (for example, a reclining driving device B35, described hereafter) for halting the progress of the game by the game program or switching the game screen shown in the monitor to another image, according to the angle detected by the sensor.

According to the nineteenth aspect of the present invention, the game machine includes a seat having a reclining function, in which this seat is provided with a control means which has a sensor for detecting the angle at which the backrest of the seat is reclined by the reclining function and halts the progress of the game by the game program or switches the game screen shown in the monitor to another image, according to the angle detected by the sensor. Therefore, the player can halt the game or switch the game screen shown in the monitor to another image merely by changing the angle of the backrest of the seat in the game machine, in some instances.

In a twentieth aspect of the present invention, a game machine includes: a main game machine body including a main control means for generating image data according to the game program regulating the progress of the game, game input data, and the progress of the game; and a main display means for showing images based on the image data; and a terminal device which comprises a reception means for receiving input from the player and outputting the game input data, a sub-display means which is provided so as to face the player, and a seat which enables the player to operate the reception means while seated; in which: a reclining function for changing the position of the player and a position operation means for operating the reclining function are provided in the seat; and the seat includes reclining function, as well as a control means, having a sensor for detecting the angle at which the backrest of the seat is reclined by the reclining function, for halting the progress of the game by the game program or switching the game screen shown in the sub-display means to another image, according to the angle detected by the sensor.

According to the twentieth aspect of the present invention, the game machine includes a seat having a reclining function, in which this seat is provided with a control means which has a sensor for detecting the angle at which the backrest of the seat is reclined by the reclining function and halts the progress of the game by the game program or switches the game screen shown in the monitor to another image, according to the angle detected by the sensor. Therefore, the player can halt the game or switch the game screen shown in the monitor to another image merely by changing the angle of the backrest of the seat in the game machine. For example, if a plurality of players is playing a game in a game machine such as this, the game time often becomes long because the game is played together with other players. In this game machine, there are instances in which each player can take a break easily, even in cases such as this. Furthermore, for example, there are instances in which other images such as television can be shown in the sub-display means by the operation of the reclining function. As a result, there are instances in which the player can, for example, halt the game, take a break, and enjoy the images shown in the sub-display means (for example, external images such as television).

In a twenty-first aspect of the present invention, a game machine according to the nineteenth or twentieth aspect of the invention has a seat which further includes a backrest part for supporting the back of the player, a reclining driving means for tilting the backrest part, and a reclining operation means for operating the reclining driving means; in which the main control means is controlled when the gradient angle of the backrest part is within the range of a predetermined angle.

According to the twenty-first aspect of the present invention, because the game machine controls the main control means when the gradient angle of the backrest part is within the range of a predetermined angle, the player can control the progress of the game by reclining the backrest part. Therefore, for example, a game in progress can be halted or an input image by an external image data input means (for example, external image data such as television) can be provided to the player, when the player merely reclines the backrest part.

According to the foregoing invention, the player operating the game machine can halt the game or switch the game screen shown in the monitor to another image merely by changing the angle of the backrest of the seat in the game machine.

In a twenty-second aspect of the present invention, a game machine includes: a main game machine body which includes a main control means for generating image data according to the game program regulating the progress of the game, game input data, and the progress of the game and a main display means for showing images based on the image data; and a terminal device which includes a reception means for receiving input from the player and outputting the game input data, a sub-display means which is provided so as to face the player, and a seat which enables the player to operate the reception means while seated; in which: a reclining function for changing the position of the player and a position operation means for operating the reclining function are provided in the seat; and the terminal device further includes a game progress control means for controlling the progress of the game carried out by the main control means.

The twenty-third aspect of the present invention is the game device according to the twenty-second aspect including a plurality of the terminal devices.

According to the twenty-second and twenty-third aspects of the present invention, because the terminal device is provided with a seat having a reclining mechanism, the player can rest in the seat without moving away from the terminal device.

Also, because the terminal device is provided with a game progress control means for controlling the main control means in accordance with the conditions of the reclining mechanism, the game progress control means can be configured to set the main control means into a break mode for only a certain player when, for example, the player operates the reclining mechanism to take a break. The player can safely take a break because the player is not treated unfairly in terms of the game progress even when the player thereby suspends operation of the game.

The twenty-fourth aspect of the present invention is the game machine according to the twenty-third aspect, in which the main game machine body further includes a memory means for storing the game program, and a main control means for executing the game program; each terminal device comprises a sub-control means for transmitting the game input data to the main control means; the sub-control means is wirelessly connected to the main game machine body; and the main control means generates single units of game data according to the game input data, the game program, and the state of the reclining mechanism of each terminal device, and generates and outputs to the sub-display unit shared image data that is shared with each terminal device according to the single units of game data.

According to the twenty-fourth aspect of the present invention, the main control means generates a single unit of game data according to the state of the reclining mechanism of each terminal device, and also generates shared image data that is shared with each terminal device according to the single unit of game data. Because each player can see the shared image data displayed on each sub-display means, the player can determine whether another player is taking a break, and can plan sophisticated game strategy while giving consideration to the rules of the game. Therefore, the player can enjoy the game to a greater extent.

The twenty-fifth aspect of the present invention is the game machine according to any of the twenty-second to twenty-fourth aspects, in which the seat further includes a backrest part for supporting the back of the player, a reclining drive means for tilting the backrest part, and a reclining operation means for driving the reclining drive means; and the game progress control means controls the main control means when the tilt angle of the backrest part is in a prescribed angle range.

According to the twenty-fifth aspect, because the game progress control means controls the main control means when the tilt angle of the backrest part is in a prescribed angle range, the player can suspend the game and take a break by merely bringing down the backrest part.

The twenty-sixth aspect of the present invention is the game machine according to any of the twenty-second to twenty-fourth aspects, in which the seat includes a massage ball for massaging the back of the player, and a massage ball drive means for sliding the massage ball; and the game progress control means furthermore operates the massage ball drive means when the tilt angle of the backrest part is in a prescribed angle range.

According to the twenty-sixth aspect of present invention, because the seat has a massage function, the player can alleviate fatigue by suitably using the massage function.

According to the game machine described above, because the game machine is provided with a reclining mechanism in the seat of the terminal device, the player can take a break without moving away from the terminal device of the game machine.

In the twenty-seventh aspect of the present invention, a game device (for example, terminal devices 30, described hereinafter) includes: a control means (for example, a CPU B91, described hereinafter) for receiving game data generated according to a game program; an input means (for example, input operation part B72, described hereinafter); a display means (for example, sub-display part B61, described hereinafter); and a seat (for example, seat B31, described hereinafter) enabling the player to operate the input means while seated; in which the seat includes a massage ball for massaging the back of the player, and a massage ball drive means for pivoting the massage ball; and the control means is connected to the massage ball drive means, and determines that the game has reached a prescribed result when the game based on the game program has ended, and sets the time for actuating the massage ball drive means.

According to the twenty-seventh aspect of the game machine, a game device is provided in which a massage for alleviating the fatigue of the players is carried out for a fixed period of time according to the game results at the end of the game in the multiplayer game system, and the massage time can be configured (extended or reduced). A player objective can thereby be added to the game, anticipation at the end of the game can be increased, and the motivation for playing the game can be enhanced even when the game is accompanied by realistic feeling and tension for a long period of time.

### BRIEF DESCRIPTION OF THE DRAWINGS

Fig. 1 is a perspective view showing an outward aspect of the game machine according to an embodiment of the present invention;
Fig. 2 is a perspective view showing an outward aspect of the terminal device of the game machine;
Fig. 3 is an enlarged perspective view of one section of a traveling part of the terminal device;
Fig. 4 is a perspective view of the of the seat of the terminal device in seat mode;
Fig. 5 is a perspective view of the seat of the terminal device in bed mode;
Fig. 6 is a perspective view showing a state in which a sub-monitor of the terminal device is pulled out from within a storage space;
Fig. 7 is a perspective view showing a state in which the display screen of the sub-monitor of the terminal device is turned toward the player;
Fig. 8 is a perspective view showing a state in which the position of the sub-monitor of the terminal device is adjusted;
Fig. 9 is a block diagram showing a configuration of a sensation generating device of the terminal device;
Fig. 10 is a block diagram showing an overall configuration of the game machine;
Fig. 11 is a block diagram showing a configuration of a main control device of the main game machine body;
Fig. 12 is a sensation generating control signal selection table of the main game machine body;
Fig. 13 is another embodiment of the sensation generating control signal selection table of the main game machine body;
Fig. 14 is a block diagram showing a configuration of a sub-control device of the terminal device;
Fig. 15 is a main flowchart of a game executed in the game machine;
Fig. 16 is a flowchart of the game processing of the game program executed in the game machine;
Fig. 17 is a flowchart of each player in the game program executed in the game machine;
Fig. 18 is a flowchart of when a player encounters another player in a game area in the game program;
Fig. 19 is a flowchart of when a macroquest is generated in the game environment in the game program;
Fig. 20 is a perspective view showing a state in which a macroquest is generated in the game environment in the game program of the game machine;
Fig. 21 is a perspective view showing a state in which fellow players participate in a macroquest generated in the game environment in the game program of the game machine;
Fig. 22 is a flowchart of a sensation generating control signal transmission processing of the main game machine body;
Fig. 23 is a perspective view showing an outward aspect of the game machine when a spotlight is lit;
Fig. 24 is a flowchart of a spotlight processing of the game machine;
Fig. 25 is an example of the fragrance selection table;
Fig. 26 is an example of the fragrance selection table;
Fig. 27 is an example of the fragrance selection screen;
Fig. 28 is a perspective view showing an outward aspect of the game machine according to an embodiment of the present invention;
Fig. 29 is a perspective view showing an outward aspect of the terminal device of the game machine;
Fig. 30 is a perspective view of the of the seat of the terminal device in seat mode;
Fig. 31 is a perspective view of the seat of the terminal device in bed mode;
Fig. 32 is a block diagram showing an overall configuration of the game machine;
Fig. 33 is a block diagram showing a configuration of a main control device of the main game machine body;
Fig. 34 is a block diagram showing a configuration of a sub-control device of the terminal device;
Fig. 35 is a lighting aspect table referenced in the game machine;
Fig. 36 is a display example of an order selection screen shown in the sub-display part of the terminal device;
Fig. 37 is a display example of an order management screen shown in the management display part of the main game machine body;
Fig. 38 is a perspective view showing a state in which a macroquest is generated in the game field in the game program of the game machine;
Fig. 39 is a perspective view showing a state in which fellow players participate in a macroquest generated in the game field in the game program of the game machine;
Fig. 40 is a flowchart of an order data transmission processing performed by the sub-control device of the terminal device;
Fig. 41 is a flowchart of a lighting aspect data reception processing performed by the sub-control device of the terminal device;
Fig. 42 is a flowchart of a lights-off data transmission processing performed by the sub-control device of the terminal device;
Fig. 43 is a flowchart of a lighting aspect determination processing performed by the main control device of the main game machine body;
Fig. 44 is a flowchart of an illumination flag update processing performed by the main control device of the main game machine body;
Fig. 45 is a flowchart of a product data transmission processing, based on a product acquisition event performed by the main control device of the main game machine body;
Fig. 46 is an example of a product acquisition event corresponding table;
Fig. 47 is a flowchart of a illumination processing of a light display device performed by the sub-control device of the terminal device;
Fig. 48 is an example of a lighting aspect table;
Fig. 49 is a perspective view showing the external appearance of the terminal device constituting the game machine;
Fig. 50 is a view showing the light-emitting plate;
Fig. 51 is a display example of the order management screen displayed on the management display part of the main game machine body;
Fig. 52 is a perspective view showing an outward aspect of the game machine according to an embodiment of the present invention;
Fig. 53 is a perspective view showing an outward aspect of the terminal device of the game machine;
Fig. 54 is a perspective view of the of the seat of the terminal device in seat mode;
Fig. 55 is a block diagram showing an overall configuration of the game machine;
Fig. 56 is a perspective view of the seat of the terminal device in bed mode;
Fig. 57 is a block diagram showing a configuration of a main control device of the main game machine body;
Fig. 58 is a block diagram showing a configuration of a sub-control device of the terminal device;
Fig. 59 is a flowchart of the game progression in the game program executed in the game machine;
Fig. 60 is a perspective view showing a state in which a macroquest is generated in the game field in the game program of the game machine;
Fig. 61 is a perspective view showing a state in which fellow players participate in a macroquest generated in the game field in the game program of the game machine;
Fig. 62 is a perspective view showing the external appearance of the terminal device constituting the game machine;
Fig. 63 is a block diagram showing a configuration of a sub-control device of the terminal device;

### BEST MODE FOR CARRYING OUT THE INVENTION

A game machine in a preferred embodiment is described below.

### [Example 1]

### Overall Configuration of the Game Machine

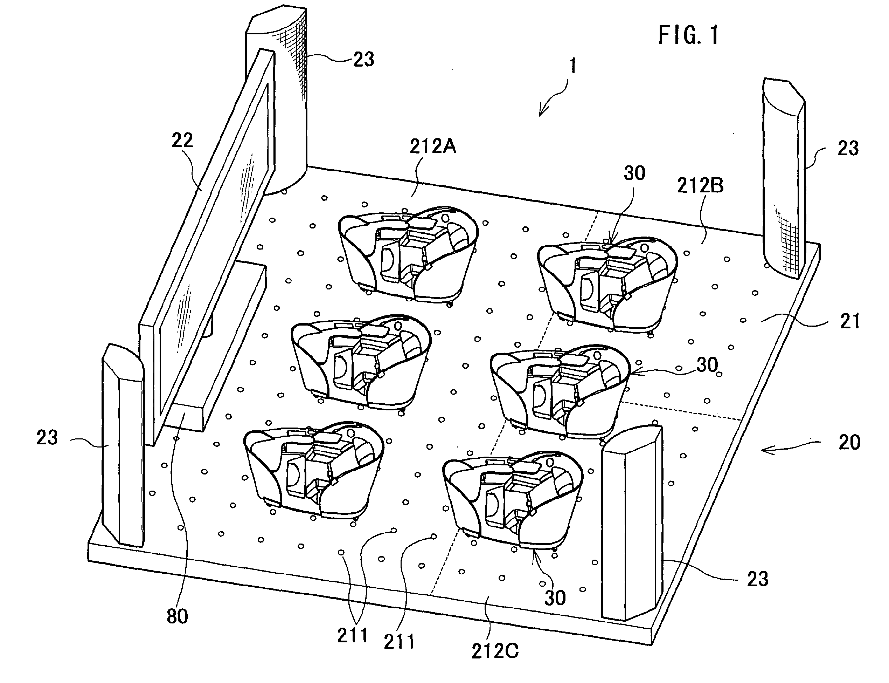

Fig. 1 is a perspective view showing an outward aspect of the game machine 1 according to an embodiment of the present invention.

The game machine 1 is a multi-player game machine, including a main game machine body 20 which includes a flat, rectangular play area 21 and a plurality of terminal devices 30 which are placed on this play area 21.

Aside form the play area 21, the main game machine body 20 includes a main display device 22 which is placed along one side of the play area 21, a speaker device 23 which is placed in the four corners of the play area 21, and a main control device 80 for controlling these main display device 22 and speaker device 23.

The play area 21 is divided into a plurality of sub-areas 212. As these sub-areas 212, there are city areas 212A, ocean areas 212B, and forest areas 212C. In addition, IC tags 211 are buried in grid-form in the play area 21. Positional information of the inside of the play area 21 is stored to this IC tag 211.

The main display device 22 is a large projector display device showing images based on image data output from the main control device 80. The main display device 22 is not limited thereto and can also be a large monitor.

The main control device 80 can communicate with each terminal device 30 bi-directionally through a wireless LAN and can provide each player with a common virtual space by executing the predetermined game program and bi-directionally communicating with each terminal device 30.

Each terminal device 30 is placed facing towards the main display device 22. This terminal device 30 is connected to the main control device 80 through wireless LAN and can be moved over the play area 21 according to the instructions from the main control device 80 or by player operation.

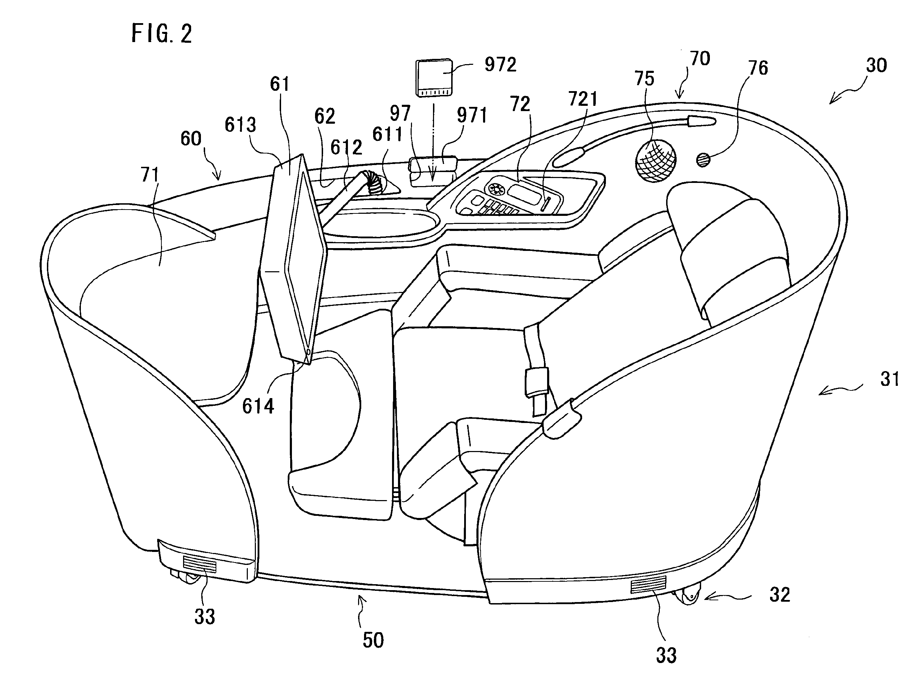

Fig. 2 is a perspective view showing an outward aspect of each terminal device 30.

The terminal device 30 includes a seat 31, and a traveling part 32, which is provided on the lower part of the seat 31, for moving the seat 31 over the play area 21.

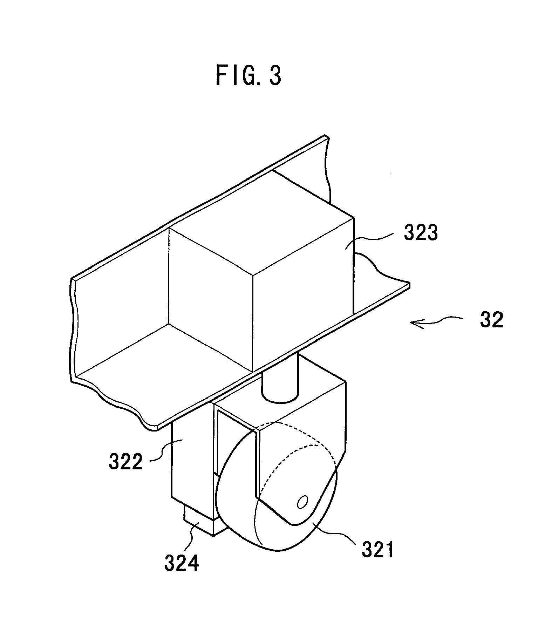

Fig. 3 is an enlarged perspective view of one section of the traveling part 32.

The traveling part 32 includes four traveling tires 321, a driving control device 322 for rotation-driving these traveling tires 321, a direction control device 323 for controlling the direction of the traveling tires 321, and a rechargeable battery, not shown, for supplying the driving control device 322 and direction control device 323 with power. The traveling part 32 can move a seat 31 to an arbitrary position on the play area 21 by the driving control device 322 and the direction control device A323.

The foregoing rechargeable battery can be recharged through connection to an external power source, but is not limited thereto, and can be recharged by self-induced electromotive force due to a magnetic field, by embedding a magnetic field generating device in the play area 21 and generating a magnetic field by this magnetic field generating device.

In addition, an IC tag detection part 324 for detecting IC tags 211, which are buried in the play area 21, is provided below the driving control device 322 of the traveling part 32. Configuration of the Seat

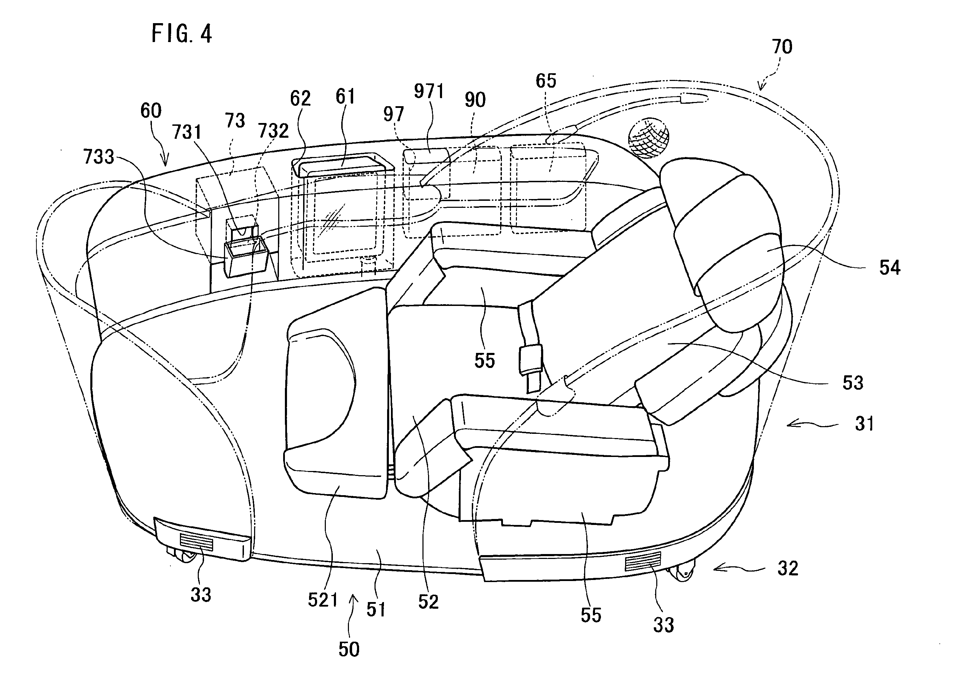

Fig. 4 is a perspective view of the seat 31 in seat mode.

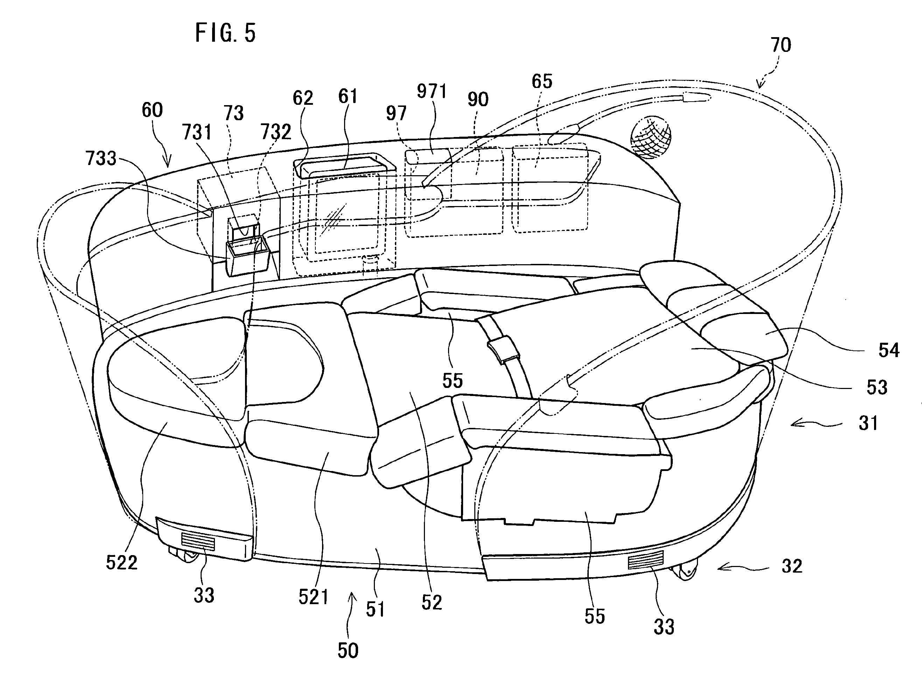

Fig. 5 is a perspective view of the seat 31 in bed mode.

The seat 31 includes a main seat body 50, a side unit 60 which is provided along one side surface of the main seat body 50, and a seat shell 70 which surrounds the main seat body 50 on three sides, excluding the other side surface side. The mode of this seat 31 can be adjusted in multiple steps, between the seat mode shown in Fig. 4 and the bed mode shown in Fig. 5.

The main seat body 50 includes a flat base part 51, a seating part 52 which is provided on this base part 51, a backrest 53 which is attached to enable changing of its angle to the seating part 52, a head rest 54 which is provided on the top part of the backrest 53, and a pair of side arms 55 which are provided in positions on the seat surface of the seating part 52 and both sides of the backrest 53.

A mist spray nozzle 33, constituting a sensation generating device 65, described hereafter, is provided in the four corners of the base part 51 and in the vicinity of the traveling tires 321 of the traveling part 32. Mist is released from this mist spray nozzle 33 and the traveling part 32 becomes hidden from the player.

The seating part 52 moves back and forth on the base part 51 when the player operates the input operation part 72(refer to Fig. 2). The main seat body 50 changes from the seat mode shown in Fig. 4 to the bed mode shown in Fig. 5, when this seating part 52 is slid forward, and forms a bed.

The seating part 52 includes a leg rest 521 which is provided on the front surface side and a foot rest 522 which is stored in the tip of this leg rest 521. The leg rest 521 turns upward according to the sliding motion, when the seating part 52 is slid forward, and becomes a seat surface which continues from the seat surface of the seating part 52. At the same time, the foot rest 522 projects from the leg rest 521 and becomes a seat surface which continues from the leg rest 521.

The backrest 53 falls backward, according to the back and forth movement of the seat part 52 on the base part 51.

The front surface side of the side arm 55 turns slightly upward, when the main seat body 50 is placed in bed mode.

A bag component, into which air can be injected, is embedded respectively within the seat surface of the seating part 52, the lower part of the backrest 53 (which comes into contact with the lower back of the player) and the head rest 54. When air is injected into these bag components by an air pump, the surface swells and can support the user while accommodating the contours of the body surface of the user.

The sub-display part 61 which is configured to include a liquid crystal display panel is stored in the side unit 60.

As shown in Fig. 2, the sub-display part 61 includes a first support arm 611 which is supported by the side unit 60, a second support arm 612 which is attached to the tip of the first support arm 611, and a flat, rectangular sub-monitor 613 which is attached to the tip of the second support arm 612 and performs liquid crystal display.

The first support arm 611 can be extended and retracted freely in the direction vertical to the side unit 60. The second support arm 612 can extend and retract freely and can be fixed to an arbitrary angle to the axis direction of the first support arm 611. The sub-monitor 613 can be fixed to an arbitrary angle to the axis direction of the second support arm 612.

A small CCD camera 614 is embedded into the sub-monitor 613. This CCD camera 614 is used when creating an avatar in the game environment.

The image taken by the CCD camera 614 is displayed constantly in the sub-display part 61 in the terminal device 30, by operating an input operation part 72 (described hereafter). Because the expressions of the player can be viewed during the game, in this way, enjoyment increases. In this case, the photographed image can be shown on the entire screen of the sub-monitor 613 or in one section of the screen.

A sub-monitor storage space 62 which extends in the vertical direction is provided in the side unit 60, and the foregoing first support arm 611, a second support arm 612, and a sub-monitor 613 are stored within the sub-monitor storage space 62.

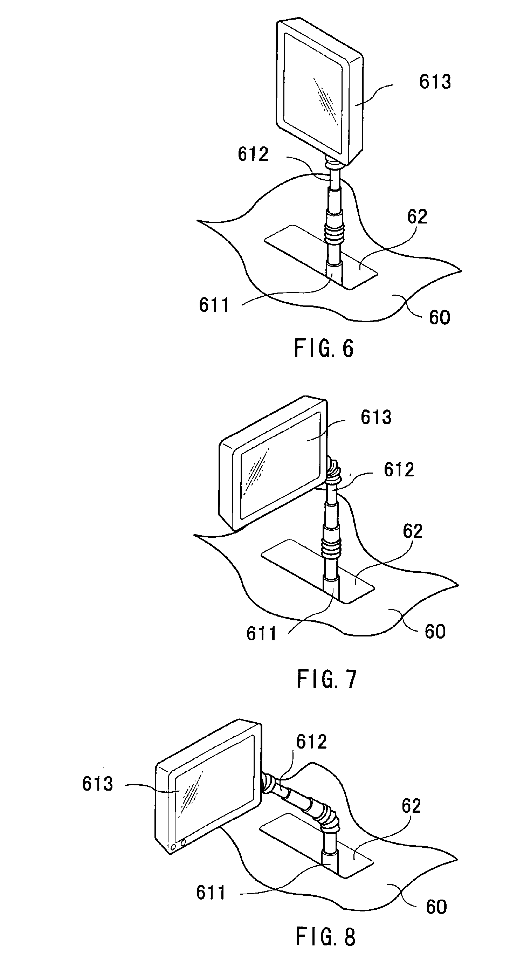

The procedure by which the player pulls out the sub-monitor 613 from the storage space 62 is explained, with reference to Fig. 6 to Fig. 8.

First, as shown in Fig. 6, the player slides the sub-monitor 613 upward from the sub-monitor storage space 62 and extends the first support arm 611 and the second support arm 612, while seated in the main seat body 50. Then, as shown in Fig. 7, the display screen of the sub-monitor 613 is turned toward the player by twisting the sub-monitor 613. Subsequently, as shown in Fig. 8, the sub-monitor 613 is positioned to the player's eye level by adjusting the relative angles of the first support arm 611 and the second support arm 612 and the relative angles of the second support arm 612 and the sub-monitor 613.

A sub-control device 90 which is connected by wireless LAN to the main control device 80 and a plurality of board storage slots 97 which configure this sub-control device 90 are provided within the side unit 60.

The sub-control device 90 controls the sub-display part 61 and the traveling part 32, based on instructions from the main control device 80, as well as transmitting signals input by the input operation part 72 (described hereafter) to the main control device 80.

A cover part 971 is provided to open and close freely on the upper part of the board storage slots 97. By opening the cover part 971 and inserting a terminal control board 972 from above, as shown in Fig. 2, the terminal control board 972 can be attached to the board storage slot 97.

The back-side of the seat shell 70 extends upward and can support the backrest 53 and the head rest 54. In addition, speakers 75 and a fragrance spray nozzle 76, constituting a sensation generating device 65, described hereafter, are provided on both sides of the head rest 54 of the seat shell 70. This fragrance spray nozzle 76 is provided in the vicinity of the head rest 54 so that scents are caught only by specific players.

The back-sides of the side surfaces of the seat shell 70 extends upward so that the player seated in the main seat body 50 cannot be viewed by other players.

A table 71 is attached from one side surface of the main seat body 50 to the front surface, on the upper edge of the seat shell 70. The space beneath this table 71 accepts the leg rest 521 and the foot rest 522 when the main seat body 50 is placed in bed mode.

The input operation part 72 is provided in the vicinity of the side arm 55 on the table 71, or in other words, a position wherein the player can perform operations while seated in the main seat body 50, and includes a keyboard, a jog dial and the like. A card slot 721 for inserting credit cards and membership cards is provided in this input operation part 72.

Although the input operation part 72 is provided on the table 71 in the present embodiment, this is not limited thereto, and can be provided as a touch-panel on the sub-monitor 613.

A medal payout opening 731 from which medals are paid out from a medal collection part 73 provided within the side unit 60, and a medal receiving part 732 for receiving the medals which are paid out are provided below the table 71 and in front of the side arm 55. A holder, not shown, for attaching a medal storage container 733 is provided in the medal reception part 732.

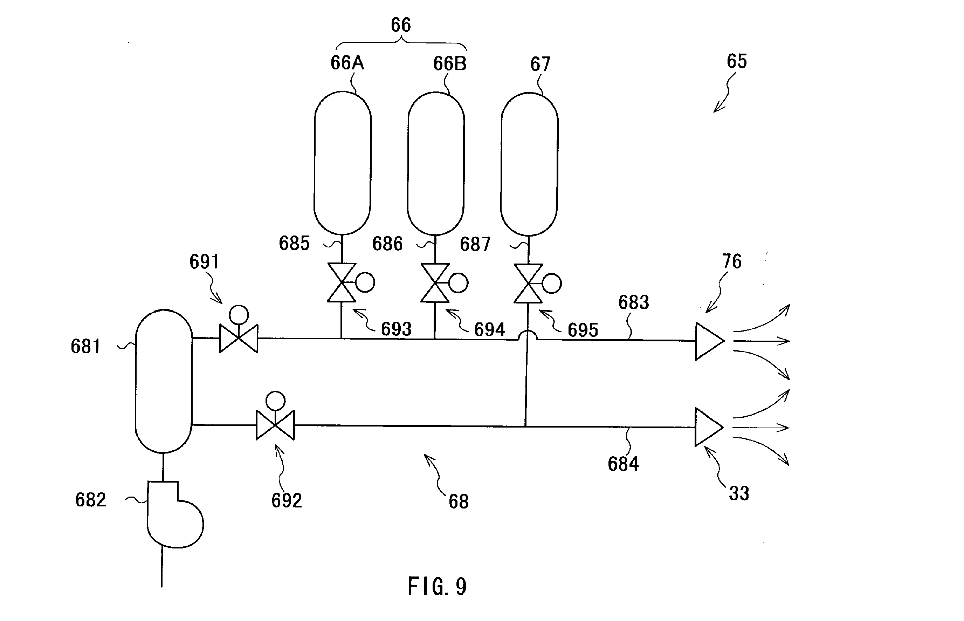

Fig. 9 is a block diagram showing a configuration of the sensation generating device 65.

The sensation generating device 65 includes a plurality of storage containers 66A and 66B for storing a plurality of types of fragrances of differing scents, a storage container 67 for storing water, and a spray device 68 which selectively sprays fragrances stored in the storage containers 66A and 66B or water stored in the storage container 67 (as fog) from the head rest 54 or sprays water stored in the storage container 67 from the lower part of the seat 31 as mist.

The storage containers are not limited to three containers as in the example of Fig. 9, and containers may be added in which aromas having a relaxing effect are stored.

Here, mist refers to water and gas resulting when a mist generating device (for example, a spray device 68) sprays water stored in the storage container 67 from the lower part of the seat 31.

The storage container 66A which stores ocean-scented fragrance and storage container 66B which stores forest-scented fragrance, for example, are storages containers 66.

The spray device 68 includes a compressed air tank 681 which stores compressed air, a compressor 682 which supplies compressed air to the compressed air tank 681, a duct 683 which extends from the compressor 682 to the fragrance spray nozzle 76, a duct 684 which extends from the compressor 682 to the mist spray nozzle 33, a duct 685 which extends from the storage container 66A to the duct 683, a duct 686 which extends from the storage container 66B to the duct 683, and a duct 687 which extends from the storage container 67 to the duct 684.

An electromagnetic open and close valve 691 is provided in the duct 683, an electromagnetic open and close valve 692 is provided in the duct 684, an electromagnetic open and close valve 693 is provided in the duct 685, an electromagnetic open and close valve 694 is provided in the duct 686, and an electromagnetic open and close valve 695 is provided in the duct 687.

The foregoing compressor 682 and electromagnetic open and close valves 691 to 695 are controlled by the sub-control device 90.

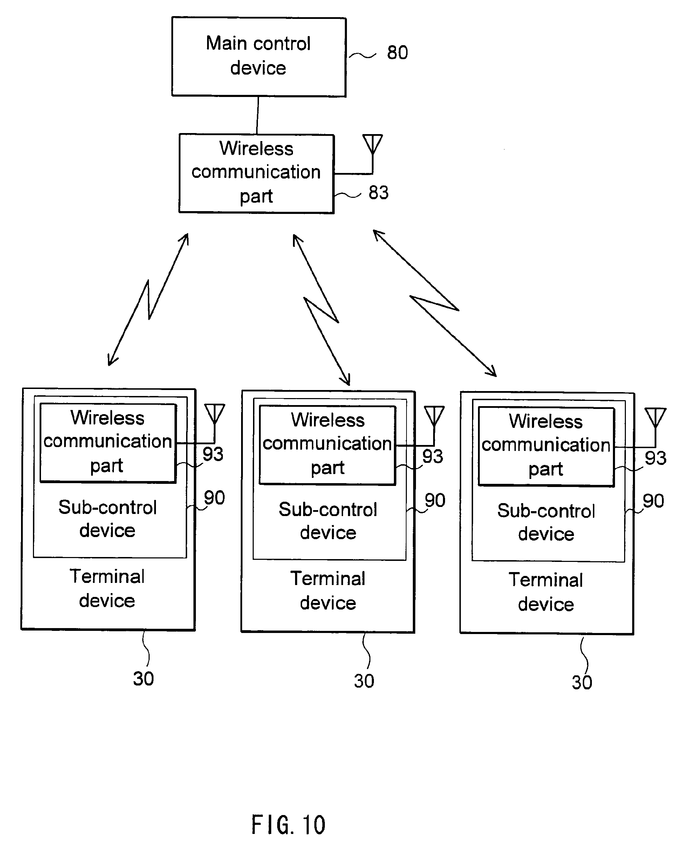

Fig. 10 is a block diagram of an overall configuration of the game machine 1.

In this game machine 1, the main control device 80 of the main game machine body 20 had a wireless communication part 83 and the sub-control device 90 of the terminal device 30 has a wireless communication part 93. These wireless communication parts 83 and 93 can be interconnected by a wireless LAN, and thus, the transfer of voice data and character data can be performed between the main control device 80 and the sub-control device 90.

### Configuration of the Main Control Device

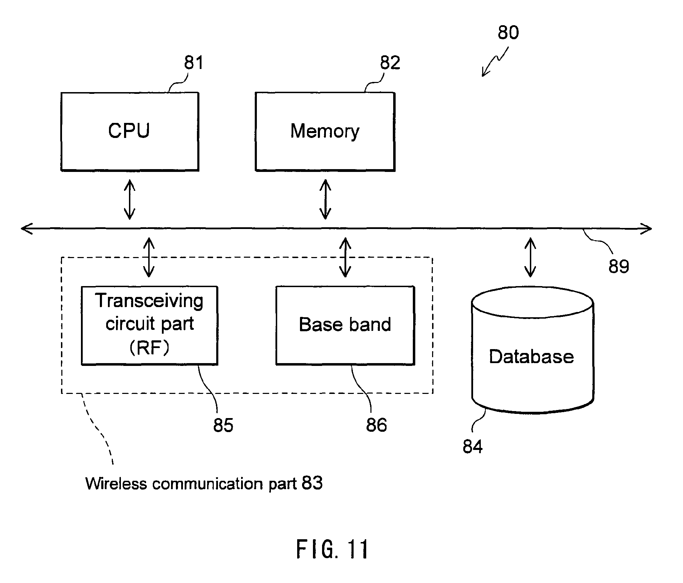

Fig. 11 is a block diagram showing the configuration of the main control device 80.

The main control device 80 has a CPU 81, a memory 82, a wireless communication part 83 and a database 84 which are connected to a data bus 89.

The wireless communication part 83 includes a transceiving circuit part (RF) 85 for transmitting and receiving signals with the sub-control device 90, and a base band processing part 86 for converting RF (Radio Frequency) signals received by the transceiving circuit part 85 into base band signals and also converting base band signals to be transmitted into RF signals.

The database 84 is a circuit board which includes a memory part to which a game program is stored or a storage medium (for example, a hard disk or ROM cassette) to which the game program and a sensation generating control signal selection table(refer to Fig. 12) are stored.

A slot to which these circuit boards and storage mediums can be attached and removed is provided in the main control device 80. By attaching and removing these circuit boards and storage mediums from the slot, the game program stored to the database 84 can be replaced, accordingly, and other game programs can be executed. Replacing the game program is not limited to that via hardware, as such, and the game program can be replaced directly by downloading via a communication circuit.

CPU 81 transmits and receives data with the sub-control devices 90 of each terminal device 30, via the wireless communication part 83, by the procedure below.

Specifically, the CPU 81 converts data into packet data when transmitting data to the sub-control device 90 of the terminal device 30. At this time, the IP address of the identified terminal device 30, which is the destination, is added to the packet data. In addition, the CPU 81 identifies the terminal device which is the transmission source of the data when receiving data from the sub-control device 90 of the terminal device 30, based on the IP address added to the packet data.

The foregoing CPU 81 executes the game program and performs various processing as a result. In other words, the CPU 81 reads the game program stored in database 84 to the memory 82 and runs the game according to this game program.

Specifically, the CPU 81 receives data including game input data, described hereafter, respectively, from the plurality of terminal devices 30, and generates a single game data according to the game program, based on these data. Then, the CPU 81 generates image data which is shared with all of the terminal devices 30, based on the generated single game data, and outputs this data to the main control device 80.

Here, the single game data includes a plurality of operation character data which can be moved within the single game field generated according to the game program, based on the respective game input data of the plurality of terminal devices 30, and the positional data of this plurality of operation characters.

If a plurality of game input data is received from a plurality of terminal devices 30, the CPU 81 identifies the terminal device 30 which transmitted the game input data, based on the IP address, and moves the operation character of this identified terminal device 30 based on this game input data.

Furthermore, if the positional data of operation character of the identified terminal device 30, out of the plurality of terminal devices 30, meets predetermined conditions, the CPU 81 transmits, to the identified terminal device 30, movement control signal (movement signal deta) which designates the position of the terminal device 30.

In addition, when the positional data of one operation character movement-operated by one terminal device, out of a plurality of terminal devices 30, and the positional data of another operation character movement-operated by another terminal device 30, out of the plurality of terminal devices 30, meet a predetermined condition, the CPU 81 selects at least one sensation generating control signal from the sensation generating control signal selection table 87 and transmits this as sensation generating control signals to the sub-control devices 90 of the one terminal device 30 and the other terminal device 30.

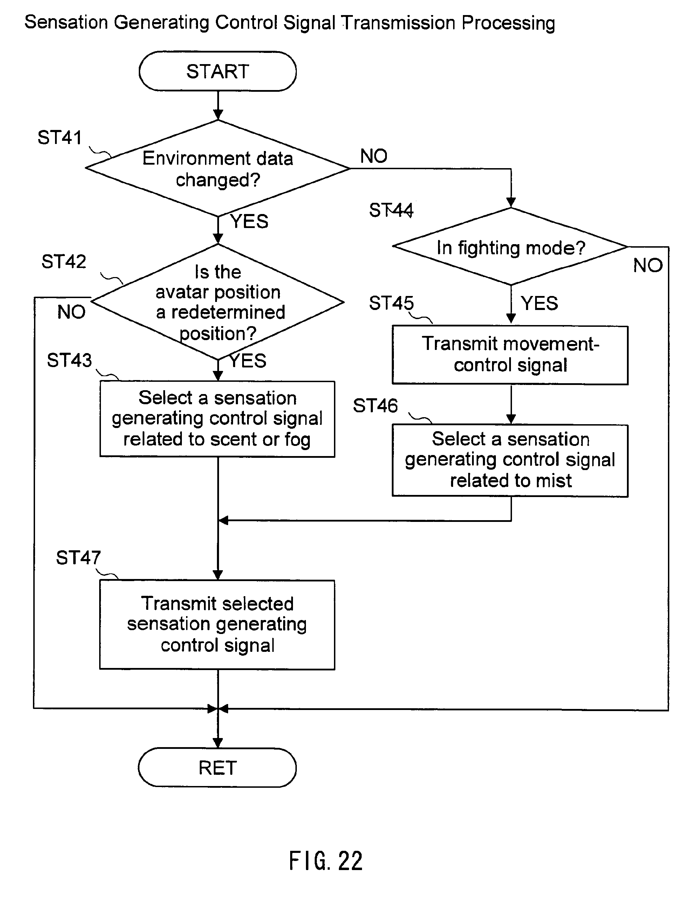

Specifically, for example, if the difference values of the positional data of one operation character movement-operated by one terminal device 30 and the positional data of another operation character movement-operated by another terminal device 30 fall within predetermined threshold data, it is determined that a plurality of operation characters is in close proximity or has collided (moved to fighting mode), within a single game area. The CPU 81 determined that a certain terminal device 30 has entered fighting mode from the positional data of one terminal device 30 and another opposing terminal device 30. In this case, as described hereafter in the flowchart in Fig. 22, the main control device 80 transmits movement-control signals to the one terminal device 30 and the other terminal device 30. Then, the main control device 80 selects "mist", which is a sensation generating control signal for "confrontation", from the sensation generating control signal selection table 87 and transmits the sensation generating control signal to the one terminal device 30 and the other terminal device 30. Here, confrontation refers to a placement in which two or mode terminal devices 30 face each other.

In another specific mode, when the difference value between the positional data of an operation character that is moved and operated by a terminal device 30 and the positional data of other operation characters that are moved and operated by other terminal devices 30 is within the predetermined threshold data, a determination is made that a plurality of characters has approached or collided in a single game field. In this case, "mist", which is a fragrance for the situation of "approach", is selected from the fragrance selection table 87B, and transmitted as sensation generating data to the sub-control device 90 of the terminal device 30 and the other terminal devices 30.

During the game, in response to a request of the terminal device 30, the CPU 81 extracts the game program, information expressing the game status corresponding to the time-line in the game at the time (namely, information expressing events and the like occurring in the game field) from the database 84 and transmits this to the terminal device 30, which is the request source, via wireless LAN. In addition, the CPU 81 receives information expressing the operation results of the player from each terminal device 30 and stores this in the memory 82.

The CPU 81 runs the game and stores the progress results of the game program to the database 84, based on the information expressing the operation results of the player stored to the memory 82.

Here, the information expressing the operation results of the player are, for example, selection results by the player from a selection shown to the player via the terminal device 30, based on the progress of the game program, or the results of the operation performed by the player of the character appearing in the game, and is information transmitted from the terminal device 30 as a result of the player operating their respective terminal devices 30. Other players can check the progress status of the current game stored to this database 84 (for example, high-score information, etc.)

### Sensation Generating Control Signal Selection Table

Fig. 12 shows an example of the sensation generating control signal selection table 87. The main control device 80 receives the status of the terminal device 30 and transmits the sensation generating control according to the status to the terminal device 30. The terminal device 30 which received the sensation generating control signal provides the player with a sensation according to the received sensation generating control signal.

In the game program executed by the main control device 80, the player's avatar (character) is operated by the player. Then this avatar moves within a game area which is a simulated game environment. At this time, the environment (ocean, forest, fog, sky, etc.) presented as the game area constitutes a part of the game environment as environment data (data related to virtually presented environment in the progression of the game program). For example, according to the development in the game, videos and images of the ocean, forest, fog, and sky are shown in the main display device 22 or the sub-display part 61. In response to the displaying of environment data images such as these to the main display device 22 or the sub-display part 61, the main control device 80 transmits a sensation generating control signal corresponding to the corresponding terminal device, according to the operation of the avatar. Furthermore, as described hereafter, the environment data can include a state in which the environment changes due the appearance of a monster.

The sensation generating control signal selection table 87 is a table which correlates the state developed in the game environment and the sensation generating control signal transmitted to the terminal device 30 in response thereto.

In addition, for example, the main control device 80 can transmit a corresponding sensation generating control signal to the terminal device 30, in response to states in which scents are generated (for example, a state in which the avatar moves to a cafeteria, or a state in which the avatar encounters a monster or character which has body odor or smells of perfume). In other words, as shown in Fig. 12, the main control device 80 can transmit a sensation generating control signal related to the body odor of monster A to the terminal device 30, in response to the appearance of the monster A.

Furthermore, for example, the main control device 80 transmits movement-control signals to the plurality of terminal devices 30 when, during the game progression, a plurality of terminal devices 30 enter a state in which they fight each other (fighting mode). The terminal devices 30 which received this movement-control signal move so as to confront each other. The confronting terminal devices 30 can be in a state in which one or more terminal devices 30 are placed facing each other (a total of two or more terminal devices).

In this way, when the plurality of terminal devices 30 are in a confrontation, the main control device 80 determines that the terminal device 30 is in a confrontation and transmits a sensation generating control signal related to mist to the terminal device 30, with reference to the sensation generating control signal selection table 87. The each terminal device 30 which received the sensation generating control signal sprays fragrance, fog or mist from a spray device 68, as described hereafter.

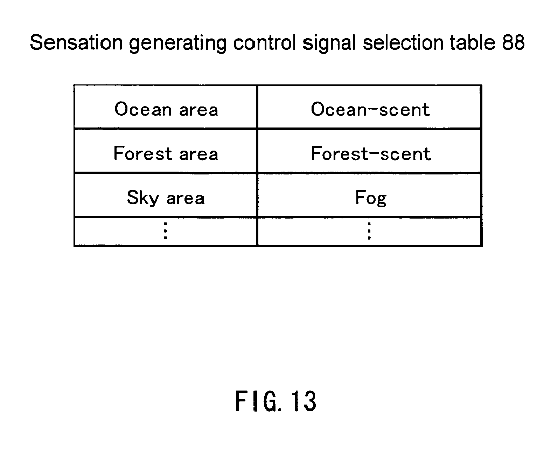

Fig. 13 is a sensation generating control signal selection table 88 for selecting a sensation generating control signal. The sensation generating control signal selection table 88 is a table of correlation with a selection of fragrances that differ from that in Fig. 12. According to this table, when the terminal device 30 moves to a predetermined area within the play area 21, the main control device 80 selects the sensation generating control signal corresponding thereto. For example, in response to the terminal device 30 moving to ocean area 212B, the main control device 80 selects the sensation generating control signal for ocean-scent.

### Sensation Generating Control Signal Transmission Processing

A sensation generating control signal transmission processing performed by the main control device 80 is explained using the flowchart in Fig. 22.

The main control device 80 determines whether the environment data has changed (ST41). In other words, the main control device 80 determines whether the environment data has changed during the progress of the game. Then, if it is determined that the environment data has changed, the main control device 80 further determines whether the position of the avatar in the game environment, corresponding to each terminal device 30, is the predetermined position (ST42). Here, if the positional data indicating the position of the avatar is a predetermined value, a sensation generating control signal related to the fragrance or fog corresponding to this environment (position) is selected, based on the sensation generating control signal selection table 87 (ST43).

For example, if the environment data changes to ocean data which presents an ocean, during the progress of the game, the main control device 80 determines that the positional data of the avatar is near the ocean and selects a sensation generating control signal related to ocean-scents (salty scent, etc.). In addition, if the environment data changes to sky data which presents a sky, the main control device 80 determines that the positional data of the avatar is near the clouds and selects a sensation generating control signal related to fog. When the main control device selects the sensation generating control signal related to fog, the output of the fog to be sprayed can be adjusted accordingly.

Here, the main control device 80 can determine that the environment data has changed when a monster appears. In other words, the environment changes due to the appearance of a monster which generates scent. In this way, the environment data can include a state in which the environment differs due to the appearance of a monster. In this case, the environment data changes due to the appearance of the monster and a sensation generating control signal related to the monsterscent is selected.

If the main control device 80 determines that the position of the avatar is not the predetermined position (ST42), the processing is terminated.

If the main control device 80 determines that the environment data is not changed (ST41) but two or more terminal devices 30 are in fighting mode (ST44), the main control device 80 transmits a movement-control signal to the two or more terminal devices 30 which are in fighting mode (ST45). Next, the main control device 80 selects a sensation generating control signal related to mist (ST46).

When the main control device 80 determines that the environment data is not changed (ST41) and two or more terminal devices 30 are not in fighting mode (ST44), the processing is terminated.

When a sensation generating control signal is selected, the main control device 80 transits the selected sensation generating control signal to the terminal device 30 (ST47).

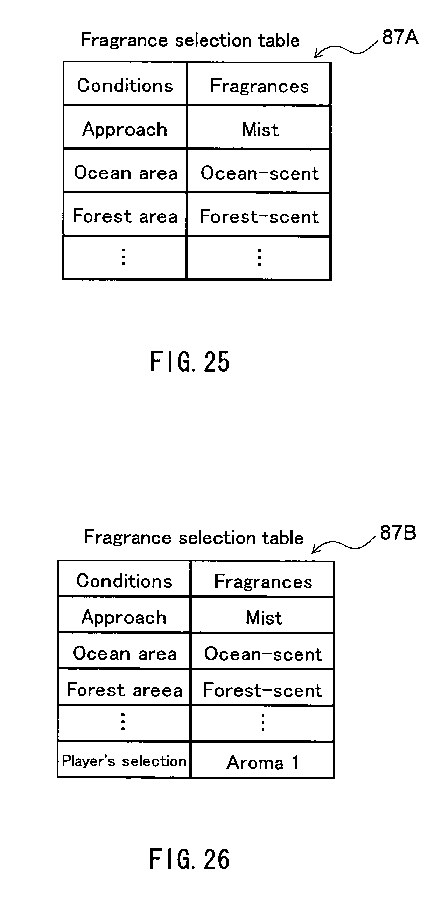

A fragrance selection table 87A, shown in Fig. 25, may be provided as another embodiment. Fig. 25 is the fragrance selection table 87A for selecting a fragrance. The fragrance selection table 87A shows the conditions in which fragrance is sprayed, and the type of fragrance to be sprayed in accordance with the conditions, as shown in Fig. 25.

The CPU 81 identifies the terminal device 30 that has transmitted game input data on the basis of an IP address when a plurality of game input data from a plurality of terminal devices 30 is received, and moves the operation character of the identified terminal device 30 on the basis of the game input data. Furthermore, the CPU 81 transmits to the identified terminal device 30 movement signal data that identifies the position of the terminal device 30 when the positional data of the operation character of the identified terminal device, out of the plurality of terminal devices 30, meets predetermined conditions.

Also, the CPU 81 may be a mode in which one or more fragrances are selected from the fragrance selection table 87A and sent as sensation generating data to the sub-control devices 90 of a terminal device 30 and other terminal devices 30 when predetermined conditions are met by the positional data of an operation character that is moved and operated by a terminal device 30 and the positional data of other operation characters that are moved and operated by other terminal devices 30. In this case, the game area described above corresponds to the game field.

Specifically, when the difference value between the positional data of an operation character that is moved and operated by a terminal device 30 and the positional data of other operation characters that are moved and operated by other terminal devices 30 is within a predetermined threshold data, a determination is made that a plurality of characters has approached or collided in a single game field. In this case, "mist," which is a fragrance for the situation of "approach," is selected from the fragrance selection table 87B and transmitted as sensation generating data to the sub-control device 90 of the terminal device 30 and the other terminal devices 30.

Also, during the game, the CPU 81 extracts the game program, information expressing the game status corresponding to the time-line in the game field at the time (namely, information expressing events and the like occurring in the game field) from the database 84 in accordance with a request from the terminal devices 30 and transmits this to the terminal device 30, which is the request source, via wireless LAN.

Fig. 26 is an example of the fragrance selection table 87B for selecting fragrance.

The fragrance selection table 87B shows the conditions for spraying fragrance and the type of fragrance sprayed in relation to the conditions, as shown in FIG. 26. The type of fragrance and the timing for spraying are determined by game conditions, and can also be arbitrarily selected by the player.

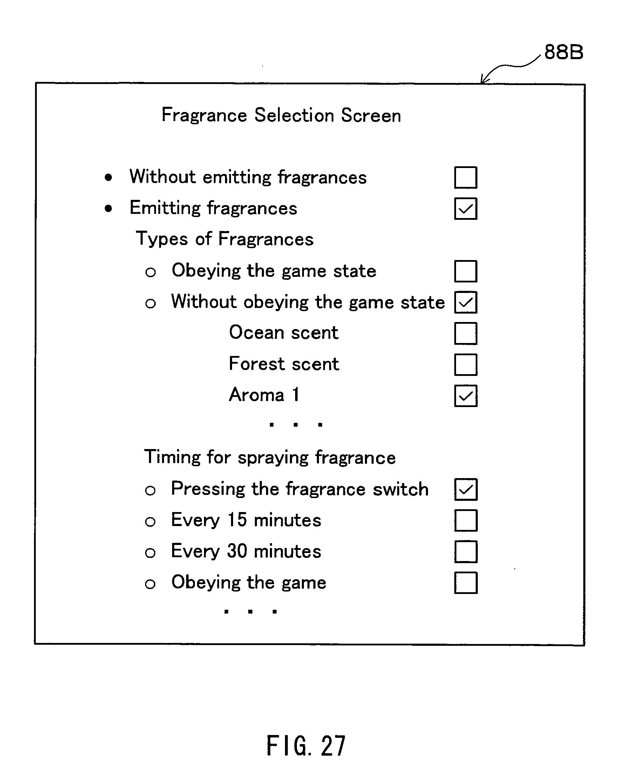

Fig. 27 is a display example of the fragrance selection screen 88B for allowing the player to designate the type of fragrance and the timing for emitting the fragrance. For example, this selection screen is displayed at the start of the game or when a prescribed time has elapsed, and the player can select whether a fragrance is emitted or not, what fragrance to emit if a fragrance is to be emitted, whether to time the emission in accordance with a situation in the game, or any other combination of fragrance and timing. The fragrance corresponding to the play area can be emitted and the realistic feeling of the game increased, as described hereinafter, in accordance with the progress of the game, but when the player does not prefer the fragrance emission itself, the system can be set from the fragrance selection table 88B so that fragrance is not emitted.

Alternatively, when the player desires to relax without relation to the game, the system can be set so as to emit a desired fragrance at any time. As used herein, the term "any timing" may refer to timing in which the player pushes a specific switch disposed on the input operation part 72, or may refer to automatically emitting fragrance when a fixed time period has elapsed.

In the example of Fig. 27, the type of fragrance is set to aroma 1 by marking the checkbox of the item in question, and the timing for emitting fragrance is set by pressing a specific switch on the input operation part 72 without regard to the progress of the game.

### Configuration of the Sub-Control Device

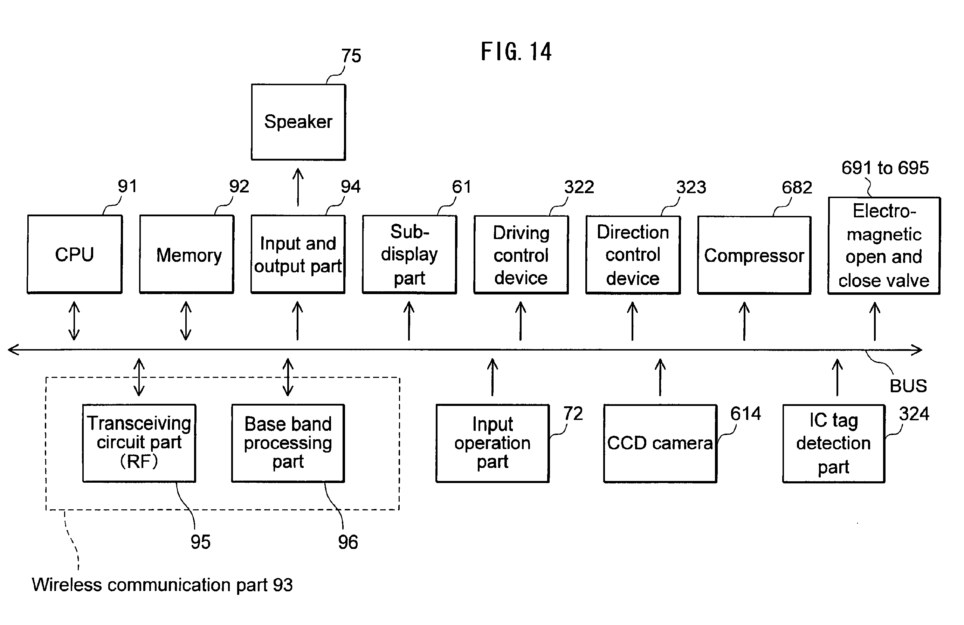

Fig. 14 is a block diagram showing the configuration of the sub-control device 90.

The sub-control device A90 has a CPU 91, a memory 92, a wireless communication part 93, and an input and output part 94 which is the interface with the speaker 75, which are connected to a data bus 99.

The wireless communication part 93 includes a transceiving circuit part (RF) 95 for transmitting and receiving signals with the main control device 80, and a base band processing part 96 for converting RF (Radio Frequency) signals received by the transceiving circuit part 95 into base band signals and also converting base band signals to be transmitted into RF signals.

The CPU 91 transmits and receives data with the main control device 80, via wireless communication part 93, by the procedure below.

Specifically, the CPU 91 divides data into packet data when transmitting data to the main control device 80. At this time, the IP address of the terminals device 30 which is the transmitting source is added to the packet data as an identifier for identifying respective terminal devices 30.

In addition, the CPU 91 receives the packet data if the IP address added to the packet data matches the IP address of the terminal device 30, when receiving data from the main control device 80, and destroys the packet data if it does not match.

The CPU 91 not only transmits and receives signals with the main control device 80, via the wireless communication part 93, but also controls the sub-display part 61, driving control device 322, direction control device 323, compressor 682, and electromagnetic open and close valves 691 to 695, based on the input signals from the input operation part 72, the CCD camera 614, and the IC tag detection part 324.

Specifically, the IC tag detection part 324 reads positional information from the IC tag 211 and outputs this as current-positional data. The CPU 91 transmits the game input data (data regarding character information, identified selection information, etc.) according to the input from the input operation part 72, the face image data taken by the CCD camera 614, and the current-positional data from the IC tag detection part 324 to the main control device 80.

Furthermore, when receiving movement-control signal which designates the position of the terminal device 30 from the main control device 80, the CPU 91 grasps the position of the terminal device 30 on the play area 21, based on current-positional data from the IC tag detection part 324, controls the driving control device 322 and the direction control device 323 of the traveling part 32, and moves the terminal device 30 to the position designated by the movement-control signal.

In addition, the CPU 91 can drive the driving control device 322 and the direction control device 323 of the traveling part 32, according to the game input data which is input by operating the input operation part 72.

The CPU 91 selects at least one storage container from the storage containers 66A, 66B, and 67 and sprays the fragrance stored within the selected storage container 66A, 66B, or 67 from the spray device 68 in accordance with a sensation generating control signal(sensation generating data).

In other words, the CPU 91 stores compressed air within the compressed air tank 681 by driving the compressor 682. Then, when a sensation generating control signal for "ocean-scent" is received, the CPU 91 opens the electromagnetic open and close valves 693 and 691, sends the compressed air stored within the compressed air tank 681 to ducts 683 and 685, and sprays the ocean-scent fragrance stored within the storage container 66A from the fragrance spray nozzle 76. Furthermore, when a sensation generating control signal for "forest-scent" is received, the CPU 91 opens the electromagnetic open and close valves 694 and 691, sends the compressed air stored within the compressed air tank 681 to ducts 683 and 686, and sprays the ocean-scent fragrance stored within the storage container 66B from the fragrance spray nozzle 76. Furthermore, when a sensation generating control signal for "mist" is received, the CPU 91 opens the electromagnetic open and close valves 695 and 692, sends the compressed air stored within the compressed air tank 681 to ducts 684 and 687, and sprays the moisture stored within the storage container 67 from the mist spray nozzle 33.

The following mode is also possible. The CPU 91 selects at least one container from amount storage containers 66A, 66B, and 67 on the basis of sensation generating data or a request from the player via the input operation part 72, and sprays the selected fragrance stored in storage containers 66A, 66B, and 67 by using the spray device 68. However, the type of fragrance and the timing of the fragrance spray are determined in accordance with the selection input data settings made from the selection screen in Fig. 27. In other words, the CPU 91 stores compressed air in the compressed air tank 681 by driving the compressor 682. When the CPU receives the sensation generating data "ocean scent," for example, in accordance with the settings made from the selection screen in Fig. 27, or in accordance with the selection input data of the player, the CPU opens the electromagnetic open and close valves 693 and 691, sends compressed air stored in the compressed air tank 681 to the ducts 683 and 685, and sprays the ocean-scented fragrance stored in the storage container 66A from the fragrance spray nozzle 76. Also, when the sensation generating data "forest scent" is received, or in accordance with the selection input data of the player, the CPU opens the electromagnetic open and close valves 694 and 691, sends compressed air stored in the compressed air tank 681 to the ducts 683 and 686, and sprays the forest-scented fragrance stored in the storage container 66B from the fragrance spray nozzle 76.

The CPU 91 executes the operation program stored in memory 92 and performs various processing, according to the program executed in CPU 81.

In other words, when receiving a game program or information expressing the status corresponding to the time-line in the game environment at that time from the main control device 80, after storing information on the game program and the like, transmitted by the main control device 80, to the memory 92, the CPU 91 presents the various occurrences, such as events, occurring in the game environment at this time, in the sub-display part 61 and outputs sound effects from the speaker 75.

In addition, by operating the input operation part 72 while viewing the game content (image, letter information, etc.) shown in the sub-display part 61, the players using respective terminal devices 30 can operate the characters shown in the main display device 22, participate in the progress of the game by operations such as selecting from a selection by letters, and move the terminal device 30 to an identified position on the play area 21. Spotlight Processing

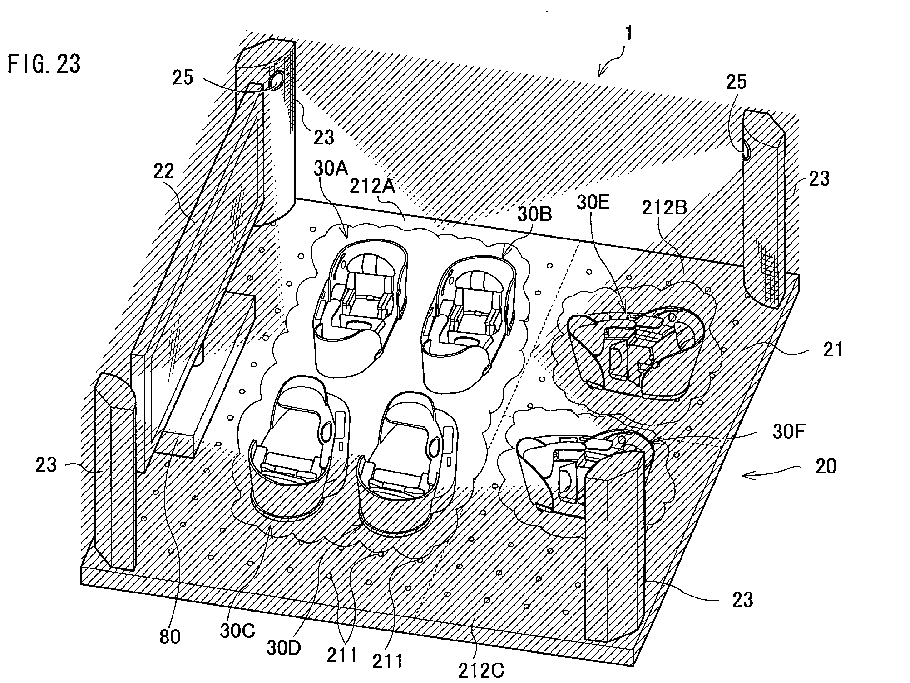

Fig. 23 shows the game machine 1 when a spotlight 25 is illuminated onto confronting terminal devices 30.

The spotlight 25 can be placed embedded into the speaker device 23 or can be a device separate from the speaker device 23. As shown in Fig. 23, the terminal devices 30A and 30C and the terminal devices 30B and 30D are confronting each other and the spotlight is illuminated onto these terminal devices 30A to 30D.

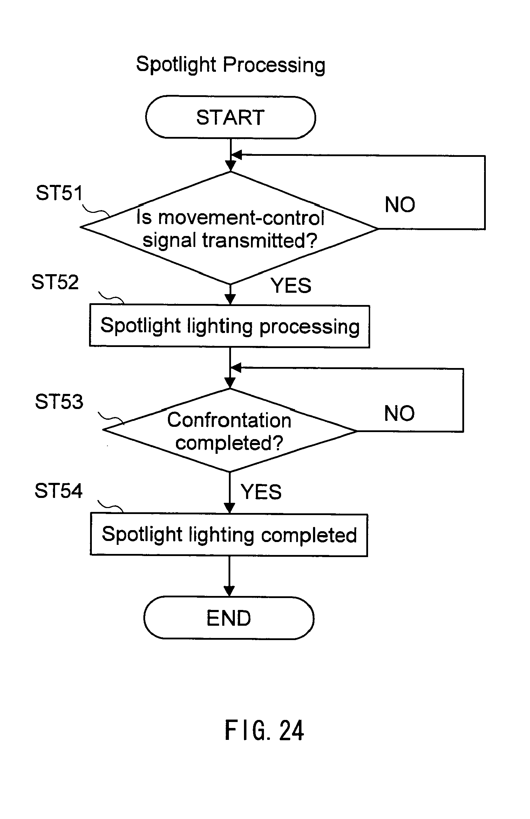

The processing by the main control device 80 for performing the spotlight processing is explained using Fig. 24. The main control device 80 determines that the terminal device 30 has transmitted a movement-control signal (ST51) and illuminates the spotlight 25 (ST52). Then, when the confrontation ends (ST53), during the game progression, the main control device 80 terminates the illumination of the spotlight 25 (ST54).

### Configuration of the Game Program

Next, a game program provided by the game machine 1 is explained. This game program is a role-playing game which is set in a fictional game environment which runs continuously by its own time-line. A plurality of towns exists in this fictional game environment, and guilds are formed respectively in each town.

Each player becomes an adventurer, visits each town, and aims to clear numerous events (quests) waiting in each guild by operating the avatar.

On the other hand, this game program generates a plurality of large events (macroquests) in the game environment and forms a large plot of the story. Each player becomes involved in the large events (macroquests), while solving the foregoing events (quests), and solves the macroquest with other players while sometimes cooperating, sometimes fighting, and sometimes competing with each other.

This game program changes the plot of the game environment by the operations of the terminal devices 30 of the players (game-play). In other words, the accumulation of the game-play (adventures) of each individual player creates the history of this game environment.

In this way, this game program is a role-playing game wherein a plurality of players can all experience the flow of history in a fictional world. In addition, in this game environment, history is created by a unique time-line which cannot be stopped, and therefore, the people appearing within this game environment are not immortal, but will grow old as in the real world.

The game program is configured to write the name of the player who has solved an event in the macroquest or achieved accomplishments such as winning in a competition against another player to a chronology which is stored to the database 84. In this way, players who were successful in the macroquest can leave their name in the history of the game environment.

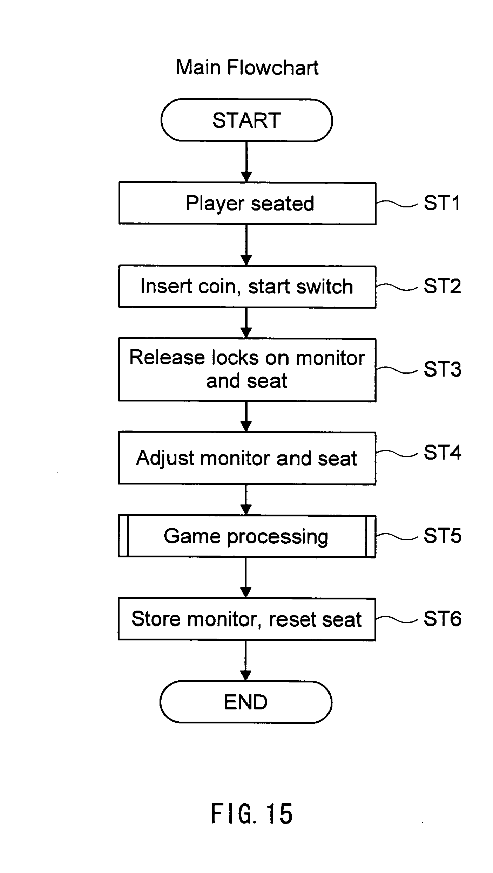

The operation of the game machine 1 is explained, with reference to the main flow chart shown in Fig. 15.

In ST1, each player selects a terminal device 30 of their choice from the terminal devices 30 placed on the play area 21 and sits in the seat 31 of the selected terminal device 30. Next, in ST2, each player inserts a coin into a coin insertion opening in the input operation part 72 and presses the start switch. Then, in ST3, the locks of the sub-monitor 613 and the seat 31 of the game machine 1 are released and, in ST4, the player can pull out the sub-monitor 613 from the storage space 62 in the side unit 60 and adjust the mode of the seat 31.

In ST5, the game machine 1 performs a game processing described hereafter. After the game is completed, in ST6, the game machine 1 stores the sub-monitor 613 and also returns the mode of the seat 31 to seat mode.

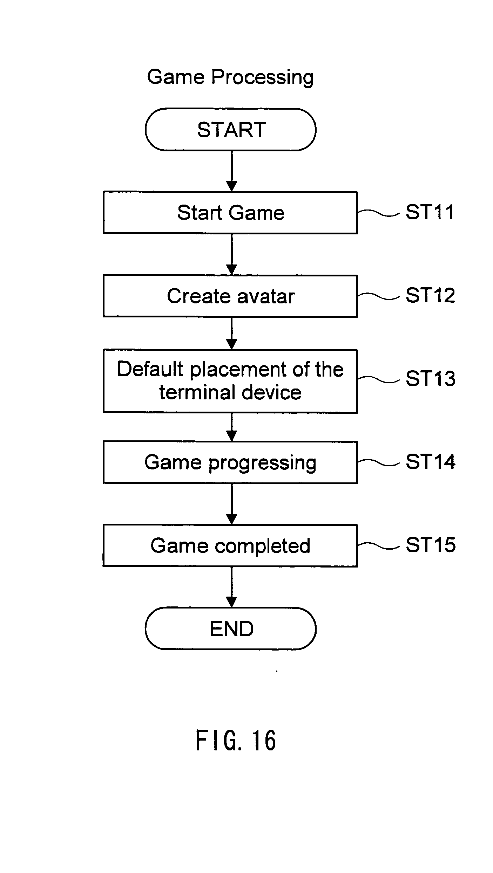

Fig. 16 is a flowchart of the game processing.

When the game is started in ST11, the game program creates an avatar of the player on ST12.

In other words, the game program shows an avatar creating screen in the sub-display part 61. In this avatar creation screen, the player creates an avatar, which is an alter-ego of the player, when participating in the game program. When an image of the players face is taken by the CCD camera 614 and the player enters personal information and the name to be used in the game environment to the input operation part 72, the game program creates an avatar based on this information and registers it to the database 84 of the main control device 80.

In ST13, the game program places the terminal device 30 in which the player is seated in the default position on the play area 21.

In other words, spaces developed by the game are divided into a plurality of game areas, and each game area has one town. Each game area is an ocean, a forest, or a large city. The play area 21 includes a plurality of sub-areas 212, such as a city area 212A, an ocean area 212B, and a forest area 212C, as stated earlier. These sub-areas 212 are quasi-spaces corresponding to the environment of the towns in the game environment.

In another mode, the game field may correspond to the play area 21. In ST13, the game program places the terminal device 30 in which the player is seated in the default position in the play area 21. In other words, the game field is divided into a plurality of game fields, and each game area has one town. Each game field is an ocean, a forest, or a large city. The play area 21 includes a plurality of sub-areas 212, such as a city area 212A, an ocean area 212B, and a forest area 212C, as stated earlier. These sub-areas 212 are quasi-spaces corresponding to the environment of the towns in the game field.

Therefore, the town each player is in is set by the game program in the game field when the game begins, and the program moves the terminal device 30 of the player to the sub-areas 212 that correspond to the town where each player is. Alternatively, the terminal device of the player is moved according to the operations of each player of the input operation part 72, and the town in which the player is in the game field is set according to this movement. The above-described mode may also be used.

In ST14, the game program runs the game according to a unique time-line, generating macroquests in which a plurality of players participate and quests in which only one player participates, and completed the game in ST15.

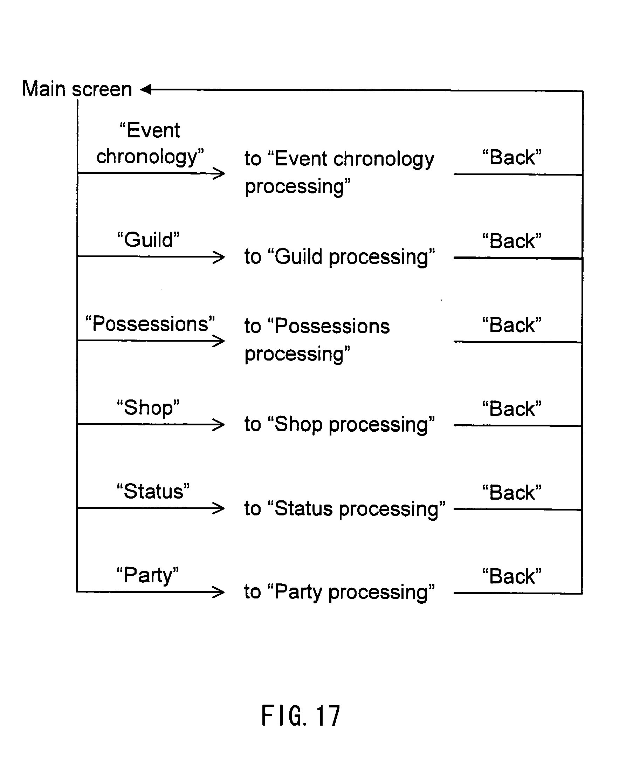

Fig. 17 is a flowchart of each player in the game program.

Each player can perform an event chronology processing, guild processing, possessions processing, shop processing, status processing, and party processing.

When the player selects "event chronology processing", the game program shows the event chronology in the sub-display part 61 by reading the event chronology from the database 84 in the main control device 80 and performing event chronology processing.

In this event chronology, the respective dates and quest name of each quest solved in the game environment is shown. Furthermore, when the player selects a quest name (event name), the game program shows the details of the selected event. Here, the details of the event are, for example, showing the player who solved the quest most quickly, if the winner is the player who solves the event (quest) most quickly, and shows the party if the winner is the party with the most number of cooperating players who have solved the event (quest).

When the player selects "guild", the game program performs a guild processing and shows a guild screen in the sub-display part 61. In this guild screen, the player can view the quests the player can try in the guild and select to go to another town in the game environment.

When the player selects "quest" in the guild screen, the game program shows a list of selectable quests in the sub-display part 61. If the player selects the desired "quest" from this list, the game program executes the selected quest.

When the player selects "Go to another town" in the guild screen, the game program shows a list of towns which can be selected as a transfer destination in the sub-display part 61. If the player selects a desired town from this list, the game program moves the player to the selected town. When the game program moves the player to another town within the game environment, the terminal device of each player is moved to the sub-areas 212 of the corresponding transfer destination town. Here, scents corresponding to the transfer destination sub-area 212 can be generated using the spray device 68. Specifically, if the transfer destination is the ocean area 212B, an ocean-scent can be sprayed from the fragrance spray nozzle 76 and if the transfer destination is the forest area 212C, a forest -scent can be sprayed from the fragrance spray nozzle 76.

However, fragrance is not sprayed in terminal devices that are set to not emit fragrance in the fragrance selection screen 88B.

In addition, the player can select menus such as "guild", "possessions", and "shop", even in the transfer destination town.

In the guild screen, a mode such as that described below may also be used. In other words, when the player selects "go to town" in the guild screen, the game program displays on the sub-display part 61 a list of selectable towns as a destination. When the player selects a desired town from the list, the game program moves the player to the selected town. When the player moves to another town in the game field, the game program moves the terminal device 30 of each player to the sub-area 212 that corresponds to the destination town, and may use the spray device 68 to emit a scent that corresponds to the destination sub-area 212.

When the player selects "possessions", the game program performs a possessions processing and shows a possessions (list of contents) screen, of weapons, tools, shoes, and the like in the sub-display part 61. If the player selects a specific possession in this possessions (list of contents) screen, the game program shows a plurality of items included in the selected possessions in the sub-display part 61. The player selects the desired item from these items and either "wear" or "dispose of" the selected item.

When the player selects "shop", the game program performs a shop processing and shows a shop screen in the sub-display part 61. This shop screen is a screen for barter exchanging items in possession or acquiring information from the shop owner, and the player can select either "listen" or "exchange".

When the player selects "exchange" in the shop screen, the game program shows a list of products in the sub-display part 61. The player can select a desired item from this product list.

When the player selects the desired item, the game program shows the items possessed by the player for exchanging with the selected desired item. When the player selects an item in possession for exchange, the game program shows the item posses by the player and the price thereof in the sub-display part 61.

When the player selects the desired item for exchange from the items in possession, shown here, the desired items in possession to be exchange are collected, and the player selects "execute", the game program executes an exchange of the desired item and the desired item in possession to be exchanged.

On the other hand, if the player selects "listen" in the shop screen, the game program shows "rumors" in the sub-display part 61. The player can acquire information in the game environment by the "rumors" shown in this screen.

When the player selects "status", the game program performs a status processing and shows a status screen in the sub-display part A61. This status screen shows the results of the player's accomplishments in the game environment, the possessions thereof and the like. Specifically, it shows name, title, fame, power, intelligence, number of monsters slain, number of quests cleared, number of people saved, and the like.

If the player selects any one of the items above, the game program shows the rankings related to this item in the sub-display part 61.

When the player selects "party", the game program performs a party processing and shows the names of fellow players in the sub-display part 61, if there are fellow players, and furthermore, shows "read mail", "send mail", "exchange item", "view status" and the like.

By selecting any one of the items above, the player can send and receive mail with fellow players, exchange items with fellow players, and view the status of fellow players.

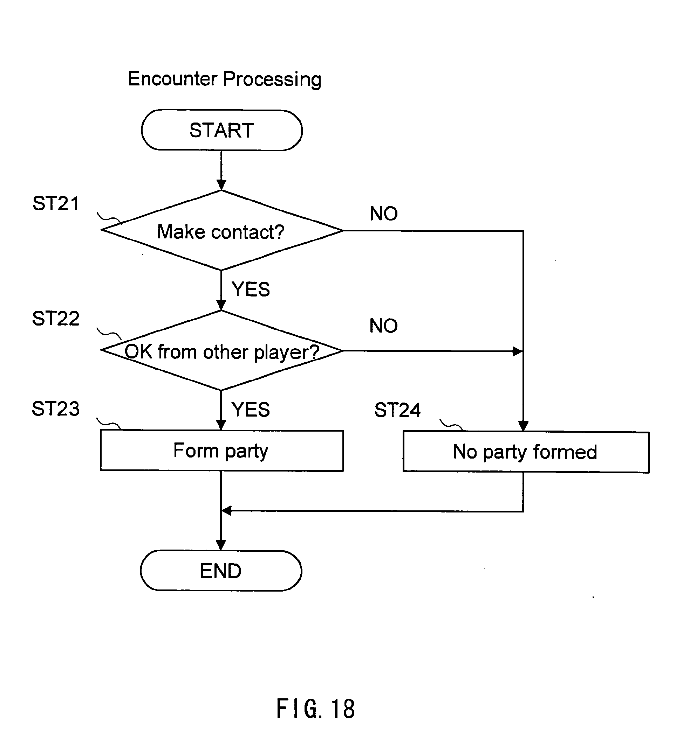

Fig. 18 is a flowchart of the encounter processing when the player encounters another player on the game environment.

In the progress of the game in ST14, the game program executes an encounter processing when the player encounters another player on the game environment.

In other words, in ST21, an encounter screen is shown in the sub-display part 61, and the player is prompted to select whether to make contact.

If the player selects "No", the process moves to ST24 and the encounter processing is terminated without forming a party. On the other hand, if the player selects "Yes", the process moves to ST22, and the game program transmits mail to the other player, and shows that the player is being invited to become a fellow player in the sub-display part 61 in the terminal device 30 of this player. Then, the game program prompts the other player to select whether to accept the invitation.

If the player receiving the invitation selects "Yes", the process moves to ST23 and the game program transmits the selected result to the player who is the inviter, shows that the player has become a fellow player in the sub-display part 61 of the player who is the inviter, a party is formed and the process is completed.

On the other hand, if the player receiving the invitation selects "No", the game program shows that the player could not be a fellow player to the player who is the inviter in the sub-display part 61, and the process moves to ST24, and terminates the encounter processing without forming a party.

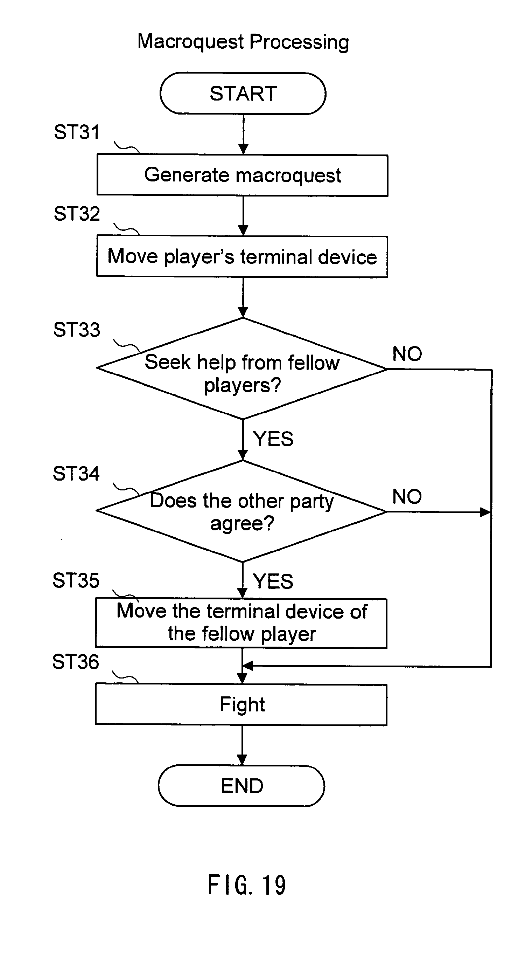

Fig. 19 is a flowchart of the macroquest processing when a macroquest is generated in the game environment.

If a macroquest involving a plurality of players is generated in ST31, the game program executes a macroquest processing.

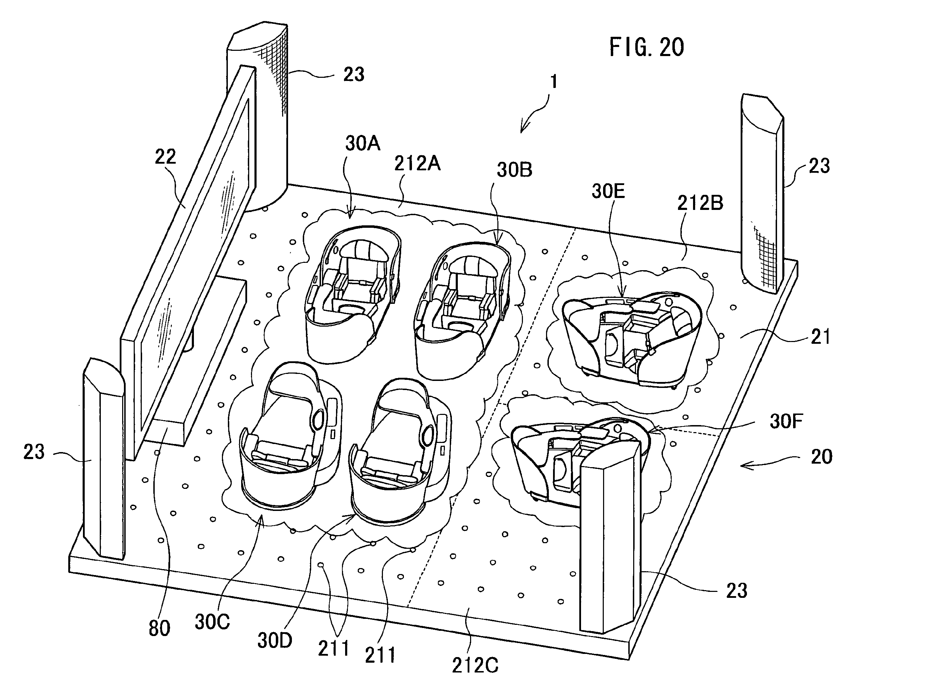

In other words, if a macroquest is generated in ST31, the process moves to ST32, shows the players involved in this macroquest in the main display device 22, also moves the terminal devices 30 of the players involved in this macroquest to the sub-area 212A in front of the main display device 22, and places them so that the terminal devices 30 of opposing players are close to and facing each other. In this way, the players become aware that they are mutually enemies. At the same time, the terminal devices 30 of opposing players spray scents according to the transfer destination sub-area 212 from the fragrance spray nozzle 76 and also spray mist from the mist spray nozzle 33 using the spray device 68, enhancing the presentation effect. Specifically, as shown in Fig. 20, there are six terminal devices, 30A to 30F, placed on the play area 21. Among these, the players of terminal devices 30A, 30B, and 30E are one party, and the players of terminal devices 30C, 30D, and 30F are another party. Then, each player in terminal devices 30A to 30D are caught in the macroquest in the city area 212A and are placed such that the parties oppose each other. In contrast, because the players in terminal devices 30E and 30F are respectively in the ocean area 212B and the forest area 212C, they are not involved in the macroquest, and thus, view the battle between the terminal devices 30A to 30D.

In order to clear the macroquest, the players caught in the macroquest select whether to call for help from fellow players in ST33.

If the player selects "No", the process moves to ST36.

On the other hand, if the player selects "Yes", the process moves to ST34, the game program transmits mail calling for help to the fellow players, and shows that help is being called for in the sub-display part 61 in the terminal device 30 of the player. Then, the game program prompts the fellow players to select whether to help the player.

If the fellow player whose help is requested selects "Yes", the process moves to ST35, and the game program transmits the selection results to the player requesting help and that the fellow player will participate is shown in the sub-display part 61 of the player. In addition, the game program shows the status of the gathering of newly participating fellow players in the main display device 22, and the terminal devices 30 of the newly participating fellow players are moved to the sub-area 212A in front of the main display device 22 and placed such that the terminal devices 30 of opposing players are close to and facing each other. At the same time, the terminal devices 30 of newly participating players spray scents according to the transfer destination sub-area 212 from the fragrance spray nozzle 76 and also spray mist from the mist spray nozzle 33 using the spray device 68, enhancing the presentation effect.

On the other hand, if the player whose help is requested selects "No", the game program shows that help had been denied in the sub-display part 61 of the player requesting for help, and the process moves to ST36.

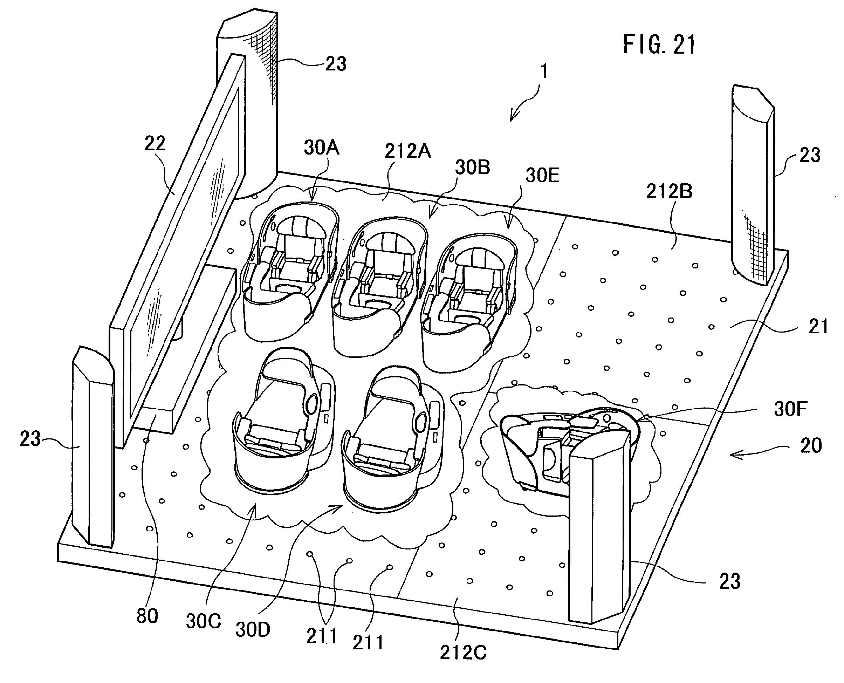

Specifically, as shown in Fig. 21, because the player in terminal device 30E is fellow players with the players in terminal devices 30A and 30B, this player's help is requested by the terminal devices 30A and 30B. The player in terminal device 30E, having agreed to help, is moved to the city area 212A and is placed in alignment with the terminal devices 30A and 30B.

On the other hand, although the player in terminal device 30F is fellow players with the players in terminal devices 30C and 30D, and this player's help is requested by the terminal devices 30C and 30D, he refuses to help and, therefore, remains in the forest area 212C.

In ST36, each player fights the opposing player or opposing party. Specifically, as shown in Fig. 21, the players of terminal devices 30A, 30B, and 30E and the players of terminal devices 30C and 30D fight in the city area 212A.

In this way, each player gets caught in a macroquest or is requested to help by fellow players caught in the macroquest, and whether to watch the battle between other players or to personally participate can be selected.

According to the present embodiment, when entering fight mode, the main control device 80 can transmit a sensation generating control signal (mist) to the terminal device 30 and simultaneously transmit a spotlight lighting control signal to the spotlight 25, by transmitting a movement-control signal to the terminal device 30. Therefore, the player can experience the generation of mist from the terminal device 30 and also his game machine can be illuminated by the spotlight. The presentation of fight mode can be enhances, compared with that of conventional game machines, through multiple presentations such as these.

Furthermore, according to the present invention, the following operational effects can be attained.

In a single game environment, if the difference value between the positional data of the operation character operated by one player and that of the operation character operated by another player falls within the predetermined threshold data, it is determined that the operation characters are close by. Then, these players fight through the macroquest.

At this time, the game machine 1 can spray scents according to the transfer destination sub-area 212 from the fragrance spray nozzle 76 and also spray mist from the mist spray nozzle 33 using the spray device 68, with regards to these terminal devices 30 of opposing players.

Therefore, because sensations are stimulated for only players of which the operation characters are in a predetermined positional relationship, sensations can be stimulated for each player individually, and there are instances in which the enjoyment of each player can be enhanced.

The sensation generating device 65 includes a plurality of storage containers 66A and 66B for storing a plurality of types of fragrances of differing scents, and a spray device 68 which selectively sprays fragrances stored in the plurality of storage containers 66A and 66B, in which one storage container is selected from storage containers 66A and 66B, and the fragrance stored within the selected storage container 66A or 66B is sprayed by the spray device 68. Thus, the player's olfactory sense is stimulated, various information on the virtual game area is transmitted to the player and the enjoyment of the player can be further enhanced. For example, the regions in the game area in which scents are generated in the real world, such as oceans and forests can be presented more realistically.

In addition, because the fragrances stored within the storage containers 66A and 66B are sprayed from the fragrance spray nozzle 76 of the head rest 54, the olfactory senses of each player are stimulated without fail.

The sensation generating device 65 includes a storage container 67 for storing water and a spray device 68 for spraying the water stored within the storage container 67 from the lower part of the seat 31. Therefore, fog and the like can be presented realistically in the game area, various information on the game area can be transmitted to the player and the enjoyment of the player can be further enhanced. For example, a feeling of floating in the air can be produced by concealing the lower part of the main seat body from the view of the player with mist.

Because a traveling part 32 is provided in the terminal device 30, this traveling part 32 is driven by a movement-control signal from the main control device 80, and the terminal device 30 moves to a predetermined position, each player can play the game by changing the position of the terminal device 30.

In addition, by reflecting the positional relationship of a plurality of operation characters within the game area in the positional relationship of the plurality of terminal devices, the positional relationships between the operation characters in the game area can be presented more realistically on the play area 21, and thus, the enjoyment of the player is further enhanced. For example, if a plurality of players fight against each other, the players can be made aware that they are enemies by bringing the terminal devices 30 of the competing players closer together, and tension between the opposing players can be enhanced.

The present embodiment has effects such as the following.
(1) If the difference value between the positional data of the operation character operated by one player and that of the operation character operated by another player falls within the predetermined threshold data in a single game field, it is determined that the operation characters are close by. Then, these players fight through the macroquest.
   At this time, the game machine 1 sprays scents that correspond to the transfer destination sub-area 212 from the fragrance spray nozzle 76, and also sprays mist from the mist spray nozzle 33 using the spray device 68 for the terminal devices 30 of opposing players.
   Therefore, because sensations are stimulated only for those players whose operation characters are in a predetermined positional relationship, sensations can be individually stimulated for each player, and there are instances in which the enjoyment of each player can be enhanced.
(2) The sensation generating device 65 is provided with a plurality of storage containers 66A and 66B for storing a plurality of fragrances having mutually different scents, and a spray device 68 for selectively spraying fragrances stored in the plurality of storage containers 66A and 66B. A single storage container is selected from among the storage containers 66A and 66B, and the fragrance stored in the selected storage container 66A or 66B is sprayed via the spray device 68. Therefore, the player's olfactory sense is stimulated, various information on the game field can be transmitted to the player, and the enjoyment of the player can be enhanced. For example, oceans, forests, and the like in the game fields in which scents are generated in the real world can be presented more realistically.
   Because fragrance stored in the storage containers 66A and 66B is sprayed from the fragrance spray nozzle 76 of the head rest 54, the olfactory sense of the each player can be reliably stimulated.
(3) The sensation generating device 65 is provided with a storage container 67 for storing water, and a spray device 68 for spraying water stored in the storage container 67 from under the seat 31. Thus, mist, fog and the like in the game field can be presented realistically, various types of information in the game field can be transmitted to the player, and the enjoyment of the player can be enhanced. For example, a feeling of floating in the air can be produced using mist to conceal the lower part of the main seat body from the view of the player.

Because a traveling part 32 is provided in the terminal device 30, this traveling part 32 is driven by movement-control data from the main control device 80, and the terminal device 30 moves to a predetermined position, each player can play the game by changing the position of the terminal device 30.

In addition, by reflecting the positional relationship of a plurality of operation characters within the game field in the positional relationship of the plurality of terminal devices, the positional relationships between the operation characters in the game field can be presented more realistically on the play area 21, and thus, the enjoyment of the player is further enhanced. For example, if a plurality of players fight against each other, the players can be made aware that they are enemies by bringing the terminal devices 30 of the competing players closer together, and tension between the opposing players can be enhanced.

According to the present embodiment, the following effects for enhancing the enjoyment of the game can be attained.

The sensation generating device 65 is provided with a plurality of storage containers 66A and 66B for storing a plurality of fragrances having mutually different scents, and a spray device 68 for selectively spraying fragrance stored in the plurality of storage containers 66A and 66B. Because the type and emission timing of the fragrance can be set by each player via the fragrance selection screen 88B, the system can be made to better correspond to the preferences of the player. For example, oceans, forests, and the like in the game fields in which scents are generated in the real world can be presented more realistically. Alternatively, because the player can cause a desired fragrance to be emitted at the desired time regardless of the game content, the player can enjoy both the game and the relaxing effects.

Also, because fragrance stored in the storage containers 66A and 66B is sprayed from the fragrance spray nozzle 76 of the head rest 54, the olfactory sense of the each player can be reliably stimulated.

### [Example 2]

### Overall Configuration of the Game Machine

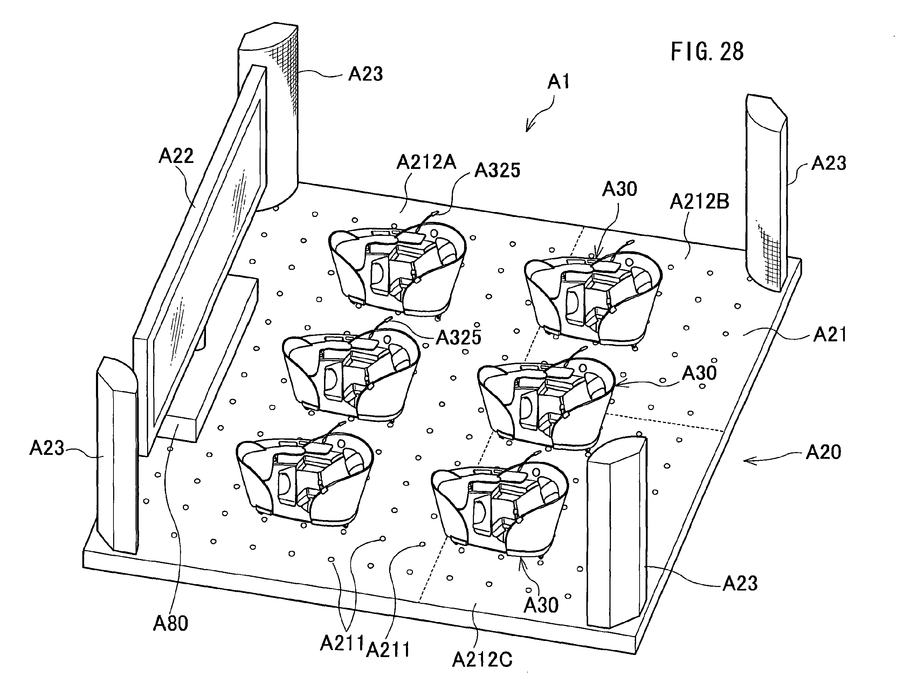

Fig. 28 is a perspective view showing an outward aspect of the game machine A1 according to an embodiment of the present invention.

The game machine A1 is a multi-player game machine, including a main game machine body A20 which includes a flat, rectangular play area A21 and a plurality of terminal devices A30 which are placed on this play area A21.

Aside form the play area A21, the main game machine body A20 includes a main display device A22 which is placed along one side of the play area A21, a speaker device A23 which is placed in the four corners of the play area A21, and a main control device A80 for controlling these main display device A22 and speaker device A23.

The play area A21 is divided into a plurality of sub-areas A212. As these sub-areas A212, there are city areas A212A, ocean areas A212B, and forest areas A212C. In addition, IC tags A211 are buried in grid-form in the play area A21. Positional information of the inside of the play area A21 is stored to this IC tag A211.

The main display device A22 is a large projector display device showing images based on image data output from the main control device A80. The main display device A22 is not limited thereto and can also be a large monitor.

The main control device A80 can communicate with each terminal device A30 bi-directionally through wireless LAN and can provide each player with a common virtual space by executing the predetermined game program and bi-directionally communicating with each terminal device A30.

Each terminal device A30 is placed facing towards the main display device A22. This terminal device A30 is connected to the main control device A80 through wireless LAN and can be moved over the play area A21 according to the instructions from the main control device A80 or by player operation.

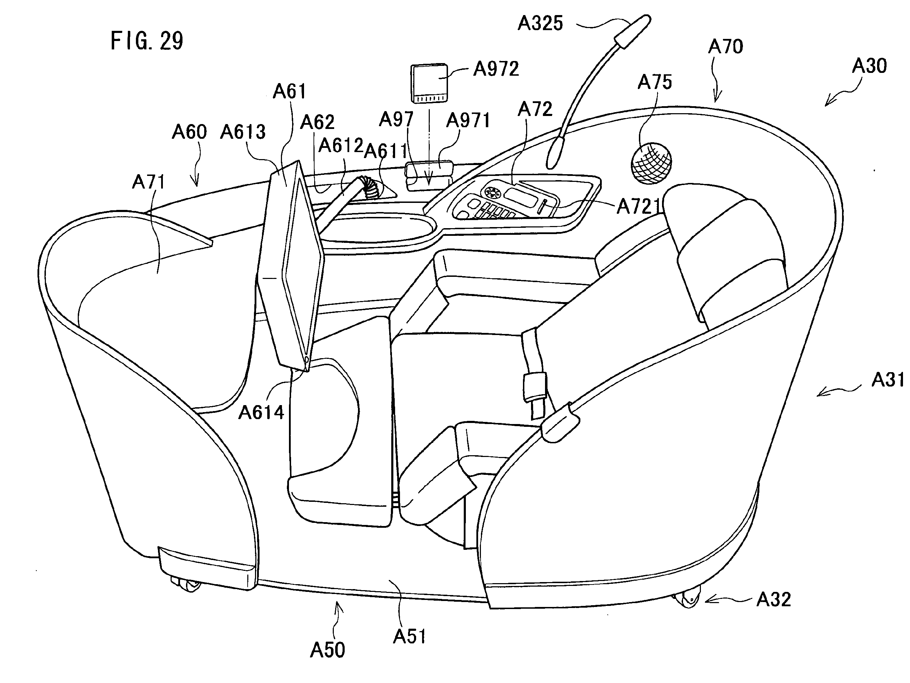

Fig. 29 is a perspective view showing an outward aspect of each terminal device A30.

The terminal device A30 includes a seat A31, and a traveling part 32, which is provided on the lower part of the seat A31, for moving the seat A31 over the play area A21. Here, this traveling part 32 is the same configuration of the foregoing traveling part 32 of the terminal device 30. Configuration of the Seat

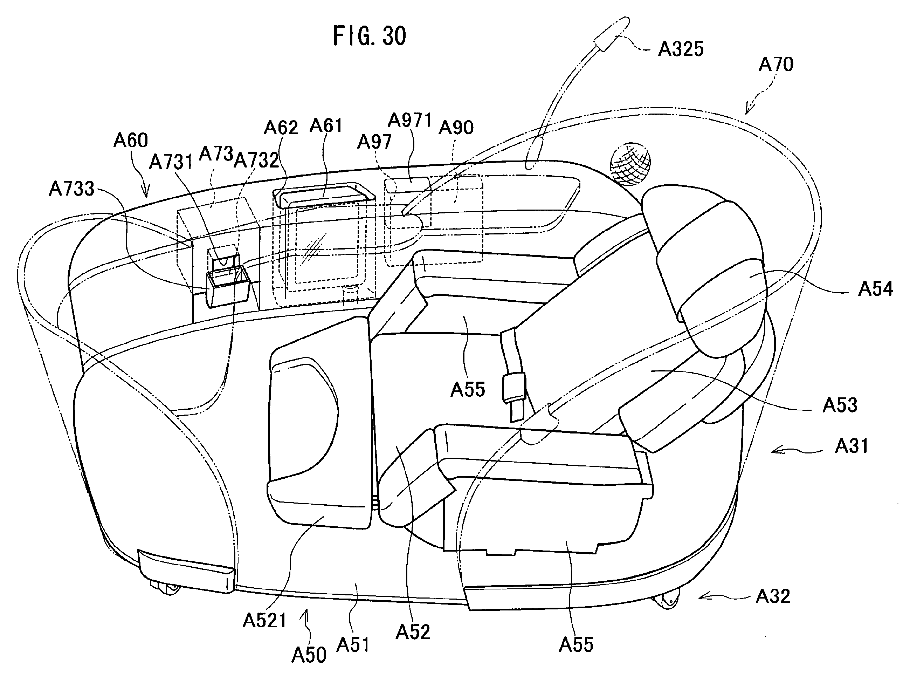

Fig. 30 is a perspective view of the seat A31 in seat mode.

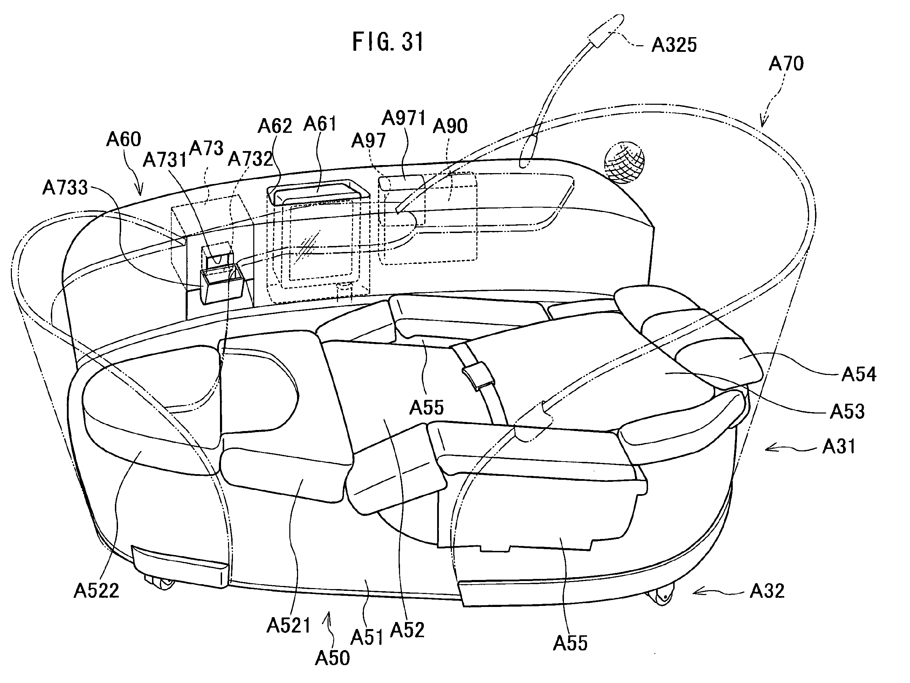

Fig. 31 is a perspective view of the seat A31 in bed mode.

The seat A31 includes a main seat body A50, a side unit A60 which is provided along one side surface of the main seat body A50, and a seat shell A70 which surrounds the main seat body A50 on three sides, excluding the other side surface side. The mode of this seat A31 can be adjusted in multiple steps, between the seat mode shown in Fig. 30 and the bed mode shown in Fig. 31.

The main seat body A50 includes a flat base part A51, a seating part A52 which is provided on this base part A51, a backrest A53 which is attached to enable changing of its angle to the seating part A52, a head rest A54 which is provided on the top part of the backrest A53, and a pair of side arms A55 which are provided in positions on the seat surface of the seating part A52 and both sides of the backrest A53.

The seating part A52 moves back and forth on the base part A51 when the player operates the input operation part A72 (refert to Fig. 29). The main seat body A50 changes from the seat mode shown in Fig. 30 to the bed mode shown in Fig. 31, when this seating part A52 is slid forward, and forms a bed.

The seating part A52 includes a leg rest A521 which is provided on the front surface side and a foot rest A522 which is stored in the tip of this leg rest A521. The leg rest A521 turns upward according to the sliding motion, when the seating part A52 is slid forward, and becomes a seat surface which continues from the seat surface of the seating part A52. At the same time, the foot rest A522 projects from the leg rest A521 and becomes a seat surface which continues from the leg rest A521.

The backrest A53 falls backward, according to the back and forth movement of the seat part A52 on the base part A51.

The front surface side of the side arm A55 turns slightly upward, when the main seat body A50 is placed in bed mode.

A bag component, into which air can be injected, is embedded respectively within the seat surface of the seating part A52, the lower part of the backrest A53 (which comes into contact with the lower back of the player) and the head rest A54. When air is injected into these bag components by an air pump, the surface swells and can support the user while accommodating the contours of the body surface of the user.

The sub-display part A61 which is configured to include a liquid crystal display panel is stored in the side unit A60.

As shown in Fig. 29, the sub-display part A61 includes a first support arm A611 which is supported by the side unit A60, a second support arm A612 which is attached to the tip of the first support arm A611, and a flat, rectangular sub-monitor A613 which is attached to the tip of the second support arm A612 and performs liquid crystal display.

The first support arm A611 can be extended and retracted freely in the direction vertical to the side unit A60. The second support arm A612 can extend and retract freely and can be fixed to an arbitrary angle to the axis direction of the first support arm A611. The sub-monitor A613 can be fixed to an arbitrary angle to the axis direction of the second support arm A612.

A small CCD camera A614 is embedded into the sub-monitor A613. This CCD camera A614 is used when creating an avatar in the game field.

The image taken by the CCD camera A614 is displayed constantly in the sub-display part A61 in the terminal device A30, by operating an input operation part A72 (described hereafter). Because the expressions of the player per se can be viewed during the game in this way, enjoyment increases. In this case, the photographed image can be shown on the entire screen of the sub-monitor A613 or in one section of the screen.

A sub-monitor storage space A62 which extends in the vertical direction is provided in the side unit A60, and the foregoing first support arm A611, a second support arm A612, and a sub-monitor A613 are stored within the sub-monitor storage space A62. Here, the procedure for pulling out the sub-monitor A613 from the storage space A62 is the same as foregoing sub-monitor 613.

A sub-control device A90 which is connected by wireless LAN to the main control device A80 and a plurality of board storage slots A97 which configure this sub-control device A90 are provided within the side unit A60.

The sub-control device A90 controls the sub-display part A61 and the traveling part 32, based on instructions from the main control device A80, as well as transmitting signals input by the input operation part A72 (described hereafter) to the main control device A80.

A cover part A971 is provided to open and close freely on the upper part of the board storage slots A97. By opening the' cover part A971 and inserting a terminal control board A972 from above, as shown in Fig. 29, the terminal control board A972 can be attached to the board storage slot A97.

The back-side of the seat shell A70 extends upward and can support the backrest A53 and the head rest A54. In addition, speakers A75 and a light display device A325 are provided on both sides of the head rest A54 of the seat shell A70.

The back-sides of the side surfaces of the seat shell A70 extends upward so that the player seated in the main seat body A50 cannot be viewed by other players.

A table A71 is attached from one side surface of the main seat body A50 to the front surface, on the upper edge of the seat shell A70. The space beneath this table A71 accepts the leg rest A521 and the foot rest A522 when the main seat body A50 is placed in bed mode.

The light display device A325 is provided on the tip of a rod-shaped support part attached to the side surface of the seat shell A70. This light display device A325 is provided in the highest position in the terminal device A30, which is a position visible from outside of the terminal device A30. By setting the light display device A325 in the highest position in the terminal device A30 in this way, it can be viewed by the manager of the game hall from any location outside of the play area A21.

This light display device A325 includes three types of LED chips, which emit red, blue, and green light, within, and additionally, a reflective frame is provided surrounding these LED chips. The red, blue, and green lights emitted from each LED chip are blended by the reflective frame, and thus, the light display device A325 illuminates with lighting aspects of six colors: purple, yellow, white, green, blue, and red, in the present embodiment.

The input operation part A72 is provided in the vicinity of the side arm A55 on the table A71, or in other words, a position wherein the player can perform operations while seated in the main seat body A50, and includes a keyboard, a jog dial and the like. A card slot A721 for inserting credit cards and membership cards is provided in this input operation part A72.

Although the input operation part A72 is provided on the table A71 in the present embodiment, this is not limited thereto, and can be provided as a touch-panel on the sub-monitor A613.

A medal payout opening A731 from which medals are paid out from a medal collection part A73 provided within the side unit A60, and a medal receiving part A732 for receiving the medals which are paid out are provided below the table A71 and in front of the side arm A55. A holder, not shown, for attaching a medal storage container A733 is provided in the medal reception part A732.

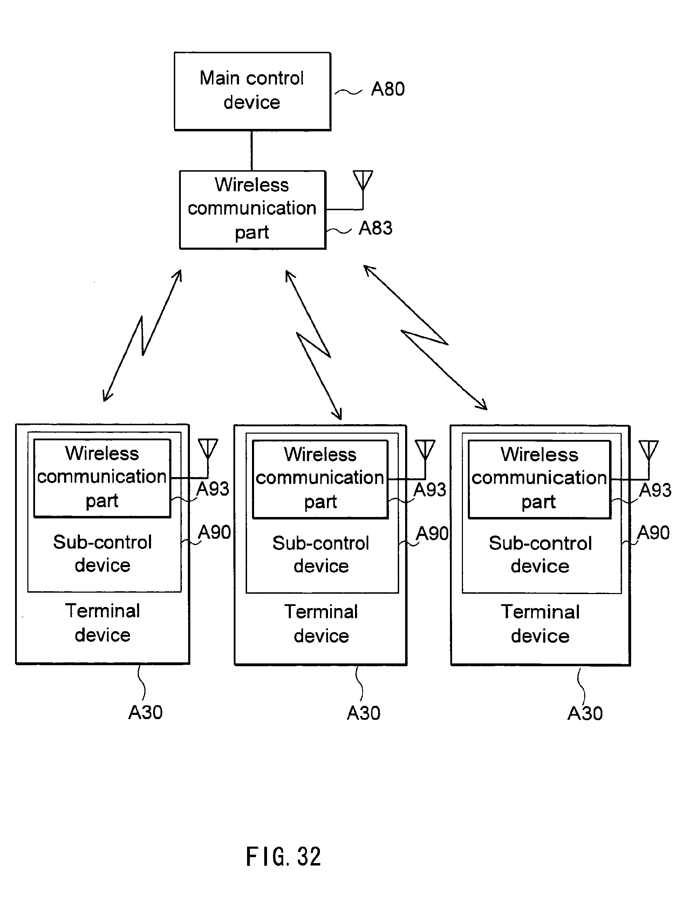

Fig. 32 is a block diagram of an overall configuration of the game machine A1.

In this game machine A1, the main control device A80 of the main game machine body A20 had a wireless communication part A83 and the sub-control device A90 of the terminal device A30 has a wireless communication part A93. These wireless communication parts A83 and A93 can be interconnected by a wireless LAN, and thus, the transfer of voice data and character data can be performed between the main control device A80 and the sub-control device A90. Configuration of the Main Control Device

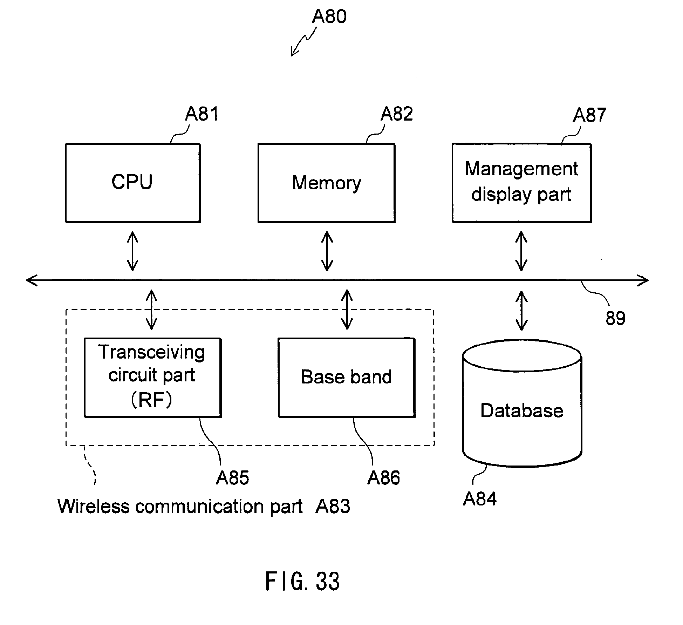

Fig. 33 is a block diagram showing the configuration of the main control device A80.

The main control device A80 has a CPU A81, a memory A82, a wireless communication part A83, a database A84, and a management display part A87, which are connected to a data bus A89.

The wireless communication part A83 includes a transceiving circuit part (RF) A85 for transmitting and receiving signals with the sub-control device A90, and a base band processing part A86 for converting RF (Radio Frequency) signals received by the transceiving circuit part A85 into base band signals and also converting base band signals to be transmitted into RF signals.

The database A84 is a circuit board which includes a memory part to which a game program is stored or a storage medium (for example, a hard disk or ROM cassette) to which the game program is stored.

Specifically, a slot to which these circuit boards and storage mediums can be attached and removed is provided in the main control device A80. By attaching and removing these circuit boards and storage mediums from the slot, the game program stored to the database A84 can be replaced, accordingly, and other game programs can be executed. Replacing the game program is not limited to that via hardware, as such, and the game program can be replaced directly by downloading via a communication circuit.

CPU A81 transmits and receives data with the sub-control devices A90 of each terminal device A30, via the wireless communication part A83, by the procedure below.

Specifically, the CPU A81 converts data into packet data when transmitting data to the sub-control device A90 of the terminal device A30. At this time, the IP address of the identified terminal device A30, which is the destination, is added to the packet data. In addition, the CPU A81 identifies the terminal device A30 which is the transmission source of the data when receiving data from the sub-control device A90 of the terminal device A30, based on the IP address added to the packet data.

The foregoing CPU A81 executes the game program and performs various processing as a result. In other words, the CPU A81 reads the game program stored in database A84 to the memory A82 and runs the game according to this game program.

Specifically, the CPU A81 receives data including game input data, described hereafter, respectively, from the plurality of terminal devices A30, and generates a single game data according to the game program, based on these data. Then, the CPU A81 generates image data which is shared with all of the terminal devices A30, based on the generated single game data, and outputs this data to the main control device A80.

Here, the single game data includes a plurality of operation character data which can be moved within the single game field generated according to the game program, based on the respective game input data of the plurality of terminal devices A30, and the positional data of this plurality of operation characters.

If a plurality of game input data is received from a plurality of terminal devices A30, the CPU A81 identifies the terminal device A30 which transmitted the game input data, based on the IP address, and moves the operation character of this identified terminal device A30 based on this game input data.

Furthermore, if the positional data of operation character of the identified terminal device A30, out of the plurality of terminal devices A30, meets predetermined conditions, the CPU A81 transmits, to the identified terminal device A30, movement signal data which designates the position of the terminal device A30.

In addition, during the game, in response to a request of the terminal device 30, the CPU A81 extracts the game program, information expressing the game status corresponding to the time-line in the game field at the time (namely, information expressing events and the like occurring in the game field) from the database A84 and transmits this to the terminal device A30, which is the request source, via wireless LAN. In addition, the CPU A81 receives information expressing the operation results of the player from each terminal device A30 and stores this in the memory A82.

The CPU A81 runs the game and stores the progress results of the game program to the database A84, based on the information expressing the operation results of the player stored to the memory A82.

Here, the information expressing the operation results of the player are, for example, selection results by the player from a selection shown to the player via the terminal device A30, based on the progress of the game program, or the results of the operation performed by the player of the character appearing in the game, and is information transmitted from the terminal device A30 as a result of the player operating their respective terminal devices A30. Other players can check the progress status of the current game stored to this database A84 (for example, high-score information, etc.)

The management display part A87 is a liquid crystal display device which includes a liquid crystal panel and a display control part for performing display control of this liquid crystal panel. This management display part A87 shows the contents of orders from the players operating each of the terminal devices A30 and the lighting aspects of the light display device A325 corresponding to the order contents. The manager of the game hall performs services to the player based on the content of the order and the lighting aspect shown in this management display part A87. Here, specific products which are order contents can be drinks or prizes and the like related to the game. The lighting aspects of the light display device A325 can be a lighted state differing by colors, such as red, blue and yellow, or can be lighted states such as flashing or indirect flashing. In addition, the types of colors illuminated by the light display device A325 can indicate the sequential order of product orders or the content of the product ordered, as described hereafter. Configuration of the Sub-Control Device

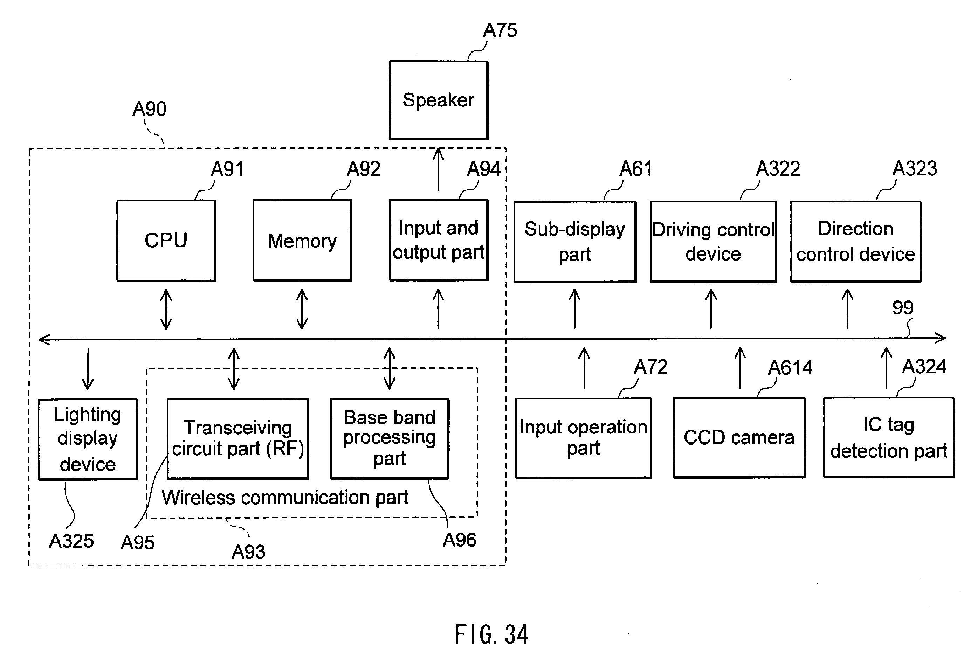

Fig. 34 is a block diagram showing the configuration of the sub-control device A90.

The sub-control device A90 has a CPU A91, a memory A92, a wireless communication part A93, and an input and output part A94 which is the interface with the speaker A75, which are connected to a data bus A99.

The wireless communication part A93 includes a transceiving circuit part (RF) A95 for transmitting and receiving signals with the main control device A80, and a base band processing part A96 for converting RF (Radio Frequency) signals received by the transceiving circuit part A95 into base band signals and also converting base band signals to be transmitted into RF signals.

The CPU A91 transmits and receives data with the main control device A80, via wireless communication part A93, by the procedure below.

Specifically, the CPU A91 divides data into packet data when transmitting data to the main control device A80. At this time, the IP address of the terminals device A30 which is the transmitting source is added to the packet data as an identifier for identifying respective terminal devices A30.

In addition, the CPU A91 receives the packet data if the IP address added to the packet data matches the IP address of the terminal device, when receiving data from the main control device A80, and destroys the packet data if it does not match.

The CPU A91 not only transmits and receives signals with the main control device A80, via the wireless communication part A93, but also controls the sub-display part A61, driving control device 322, direction control device 323, compressor A682, and electromagnetic open and close valves A691 to A695, based on the input signals from the input operation part A72, the CCD camera A614, and the IC tag detection part A324.

Specifically, the IC tag detection part A324 reads positional information from the IC tag A211 and outputs this as current-positional data. The CPU A91 transmits the game input data (data regarding character information, identified selection information, etc.) according to the input from the input operation part A72, the face image data taken by the CCD camera A614, and the current-positional data from the IC tag detection part A324 to the main control device A80.

Furthermore, when receiving movement signal data which designates the position of the terminal device A30 from the main control device A80, the CPU A91 grasps the position of the terminal device A30 on the play area A21, based on current-positional data from the IC tag detection part A324, controls the driving control device 322 and the direction control device 323 of the traveling part 32, and moves the terminal device A30 to the position designated by the movement signal data.

In addition, the CPU A91 can drive the driving control device 322 and the direction control device 323 of the traveling part 32, according to the game input data which is input by operating the input operation part A72.

The CPU A91 executes the operation program stored in memory A92 and performs various processing, according to the program executed in CPU A81.

In other words, when receiving a game program or information expressing the status corresponding to the time-line in the game environment at that time from the main control device A80, after storing information on the game program and the like, transmitted by the main control device A80, to the memory A92, the CPU A91 presents the various occurrences, such as events, occurring in the game environment at this time, in the sub-display part A61 and outputs sound effects from the speaker A75.

In addition, in response to receiving lighting aspect data transmitted from the main control device A80, the CPU A91 illuminates the light display device A325 with the lighting aspect corresponding to this lighting aspect data.

In addition, by operating the input operation part A72 while viewing the game content (image, letter information, etc.) shown in the sub-display part A61, the players using respective terminal devices A30 can operate the characters shown in the main display device A22, participate in the progress of the game by operations such as selecting from a selection by letters, and move the terminal device A30 to an identified position on the play area A21.

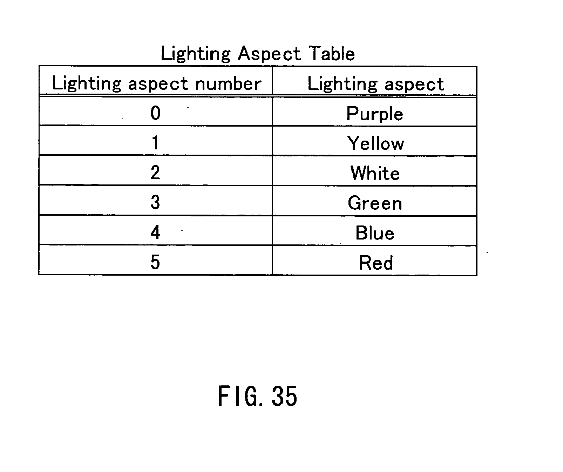

The lighting aspect table is explained, with reference to Fig. 35.

The lighting aspect table is stored in a memory A82 of the main control device A80 and a memory A92 of the sub-control device A90, and includes lighting aspect numbers, 0 to 5, and information on the lighting aspects of the light display device A325, which are purple, yellow, white, green, blue and red, corresponding to each of the numbers. This lighting aspect table is referenced during a lighting display processing and an order management screen display processing, described hereafter.

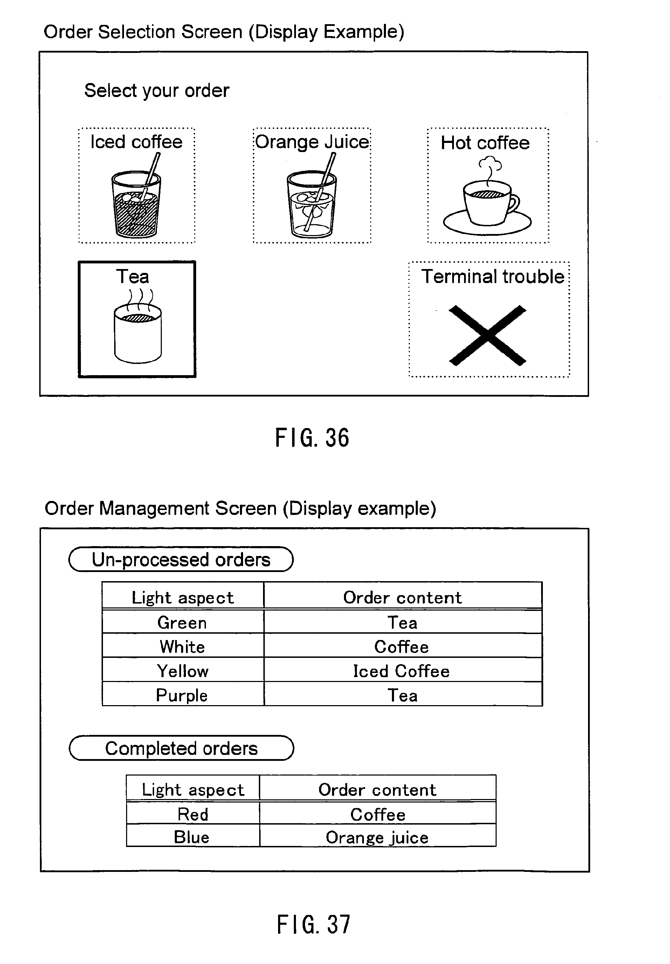

A display example of an order selection screen is explained with reference to Fig. 36.

Fig. 36 shows a display example of the order selection screen shown in the sub-display part A61 of the sub-control device A90. When a calling operation is performed by an input from the input operation part A72, the order selection screen is shown in the sub-display part A61 in the order selection screen display processing, described hereafter. This order selection screen is shown continuously until the player performs an order selection. In this display example, iced coffee, orange juice, hot coffee, tea, and terminal trouble is shown as the order contents, and the player is prompted to select from any of the order contents.

A display example of an order management screen is explained, with reference to Fig. 37.

Fig. 37 shows a display example of the order management screen shown in the management display part A87 of the main control device A80. The order management screen is shown in the management display part A87 in the order management screen display processing, described hereafter, based on reception of order data and light-off data as game input data from the sub-control device A90. This order management screen is divided into an un-processed order column and a completed order column, and order contents included in the order data and the lighting aspects of the light display device A325 corresponding to the order contents are shown in each column.

The lighting aspects in this embodiment are correlated with the sequential order of the order, rather than the content of the products ordered (type of drink, etc.). In other words, as shown in Fig. 35, the larger the lighting aspect number, the earlier the order, and the smaller the lighting aspect number, the later the order. As described hereafter, the main control device A80 performs the lighting aspect determination processing in Fig. 43. This is because the main control device A80, which manages the sequential order of product orders, among the terminal devices A30, determined the lighting aspects. Because the selection count in Fig. 43 is set to 5, the lighting aspect number 5, "red", is selected as the lighting aspect when an order is first made. If orders are made subsequently, the lighting aspect becomes blue, and then, green.

The order content and the lighting aspect corresponding to the order content is shown continuously in the un-processed order column, from the reception of the order data until the reception of the lights-off data. After the lights-off data is received, the order is shown in the completed order column as a completed order. Configuration of the Game Program

Next, a game program provided by the game machine A1 is explained. This game program is a role-playing game which is set in a fictional game environment which runs continuously by its own time-line. A plurality of towns exists in this fictional game environment, and guilds are formed respectively in each town.

Each player becomes an adventurer, visits each town, and aims to clear numerous events (quests) waiting in each guild by operating the avatar.

On the other hand, this game program generates a plurality of large events (macroquests) in the game field and forms a large plot of the story. Each player becomes involved in the large events (macroquests), while solving the foregoing events (quests), and solves the macroquest with other players while sometimes cooperating, sometimes fighting, and sometimes competing with each other.

This game program changes the plot of the game field by the operations of the terminal devices A30 of the players (game-play). In other words, the accumulation of the game-play (adventures) of each individual player creates the history of this game field.

In this way, this game program is a role-playing game wherein a plurality of players can all experience the flow of history in a fictional world. In addition, in this game field, history is created by a unique time-line which cannot be stopped, and therefore, the people appearing within this game field are not immortal, but will grow old as in the real world.

The game program is configured to write the name of the player who has solved an event in the macroquest or achieved accomplishments such as winning in a competition against another player to a chronology which is stored to the database A84. In this way, players who were successful in the macroquest can leave their name in the history of the game field.

The operation of the game machine A1 is explained, with reference to the main flow chart shown in Fig. 15.

In ST1, each player selects a terminal device A30 of their choice from the terminal devices A30 placed on the play area A21 and sits in the seat A31 of the selected terminal device A30. Next, in ST2, each player inserts a coin into a coin insertion opening in the input operation part A72 and presses the start switch. Then, in ST3, the locks of the sub-monitor A613 and the seat A31 of the game machine A1 are released and, in ST4, the player can pull out the sub-monitor A613 from the storage space A62 in the side unit A60 and adjust the mode of the seat A31.

In ST5, the game machine A1 performs a game processing described hereafter. After the game is completed, in ST6, the game machine A1 stores the sub-monitor A613 and also returns the mode of the seat A31 to seat mode.

Fig. 16 is a flowchart of the game processing. When the game is started in ST11, the game program creates an avatar of the player on ST12.

In other words, the game program shows an avatar creating screen in the sub-display part A61. In this avatar creation screen, the player creates an avatar, which is an alter-ego of the player, when participating in the game program. When an image of the player's face is taken by the CCD camera A614 and the player enters personal information and the name to be used in the game field to the input operation part A72, the game program creates an avatar based on this information and registers it to the database A84 of the main control device A80.

In ST13, the game program places the terminal device A30 in which the player is seated in the default position on the play area A21.

In other words, the towns in the game field are surrounded by the ocean or forests, or are large cities. Each game area is an ocean, a forest, or a large city. The play area A21 includes a plurality of sub-areas A212, such as a city area A212A, an ocean area A212B, and a forest area A212C, as stated earlier. These sub-areas A212 are quasi-spaces corresponding to the environment of the towns in the game environment.

Therefore, the game program sets the town each player is in, in the game field, and moves the terminal device A30 of the player to the sub-areas A212, corresponding to the town in which each player is, when the game begins. Alternatively, the terminal device A30 of the player is moved according to the operations of each player of the input operation part A72, and the town in which the player is in the game field is set according to this movement.

In ST14, the game program runs the game according to a unique time-line, generating macroquests in which a plurality of players participate and quests in which only one player participates, and completed the game in ST15.

Fig. 17 is a flowchart of each player in the game program.

Each player can perform an event chronology processing, guild processing, possessions processing, shop processing, status processing, and party processing.

When the player selects "event chronology processing", the game program shows the event chronology in the sub-display part A61 by reading the event chronology from the database A84 in the main control device A80 and performing event chronology processing.

In this event chronology, the respective dates and quest name of each quest solved in the game field is shown. Furthermore, when the player selects a quest name (event name), the game program shows the details of the selected event. Here, the details of the event are, for example, showing the player who solved the quest most quickly, if the winner is the player who solves the event (quest) most quickly, and shows the party if the winner is the party with the most number of cooperating players who have solved the event (quest).

When the player selects "guild", the game program performs a guild processing and shows a guild screen in the sub-display part A61. In this guild screen, the player can view the quests the player can try in the guild and select to go to another town in the game environment.

When the player selects "quest" in the guild screen, the game program shows a list of selectable quests in the sub-display part A61. If the player selects the desired "quest" from this list, the game program executes the selected quest.

When the player selects "Go to another town" in the guild screen, the game program shows a list of towns which can be selected as a transfer destination in the sub-display part A61. If the player selects a desired town from this list, the game program moves the player to the selected town. When the game program moves the player to another town within the game environment, the terminal device of each player is moved to the sub-areas A212 of the corresponding transfer destination town.

The player can select menus such as "guild", "possessions", and "shop", even in the transfer destination town.

When the player selects "possessions", the game program performs a possessions processing and shows a possessions (list of contents) screen, of weapons, tools, shoes, and the like in the sub-display part A61. If the player selects a specific possession in this possessions (list of contents) screen, the game program shows a plurality of items included in the selected possessions in the sub-display part A61. The player selects the desired item from these items and either "wear" or "dispose of" the selected item.

When the player selects "shop", the game program performs a shop processing and shows a shop screen in the sub-display part A61. This shop screen is a screen for barter exchanging items in possession or acquiring information from the shop owner, and the player can select either "listen" or "exchange".

When the player selects "exchange" in the shop screen, the game program shows a list of products in the sub-display part A61. The player can select a desired item from this product list.

When the player selects the desired item, the game program shows the items possessed by the player for exchanging with the selected desired item. When the player selects an item in possession for exchange, the game program shows the item posses by the player and the price thereof in the sub-display part A61.

When the player selects the desired item for exchange from the items in possession, shown here, the desired items in possession to be exchange are collected, and the player selects "execute", the game program executes an exchange of the desired item and the desired item in possession to be exchanged.

On the other hand, if the player selects "listen" in the shop screen, the game program shows "rumors" in the sub-display part A61. The player can acquire information in the game environment by the "rumors" shown in this screen.

When the player selects "status", the game program performs a status processing and shows a status screen in the sub-display part A61. This status screen shows the results of the player's accomplishments in the game environment, the possessions thereof and the like. Specifically, it shows name, title, fame, power, intelligence, number of monsters slain, number of quests cleared, number of people saved, and the like.

If the player selects any one of the items above, the game program shows the rankings related to this item in the sub-display part A61.

When the player selects "party", the game program performs a party processing and shows the names of fellow players in the sub-display part A61, if there are fellow players, and furthermore, shows "read mail", "send mail", "exchange item", "view status" and the like.

By selecting any one of the items above, the player can send and receive mail with fellow players, exchange items with fellow players, and view the status of fellow players.

Fig. 18 is a flowchart of the encounter processing when the player encounters another player on the game field.

In the progress of the game in ST14, the game program executes an encounter processing when the player encounters another player on the game environment.

In other words, in ST21, an encounter screen is shown in the sub-display part A61, and the player is prompted to select whether to make contact.

If the player selects "No", the process moves to ST24 and the encounter processing is terminated without forming a party. On the other hand, if the player selects "Yes", the process moves to ST22, and the game program transmits mail to the other player, and shows that the player is being invited to become a fellow player in the sub-display part A61 in the terminal device A30 of this player. Then, the game program prompts the other player to select whether to accept the invitation.

If the player receiving the invitation selects "Yes", the process moves to ST23 and the game program transmits the selected result to the player who is the inviter, shows that the player has become a fellow player in the sub-display part A61 of the player who is the inviter, a party is formed and the process is completed.

On the other hand, if the player receiving the invitation selects "No", the game program shows that the player could not be a fellow player to the player who is the inviter in the sub-display part A61, and the process moves to ST24, and terminates the encounter processing without forming a party.

Fig. 19 is a flowchart of the macroquest processing when a macroquest is generated in the game environment.

If a macroquest involving a plurality of players is generated in ST31, the game program executes a macroquest processing.

In other words, if a macroquest is generated in ST31, the process moves to ST32, shows the players involved in this macroquest in the main display device A22, also moves the terminal devices A30 of the players involved in this macroquest to the sub-area A212A in front of the main display device A22, and places them so that the terminal devices A30 of opposing players are close to and facing each other.

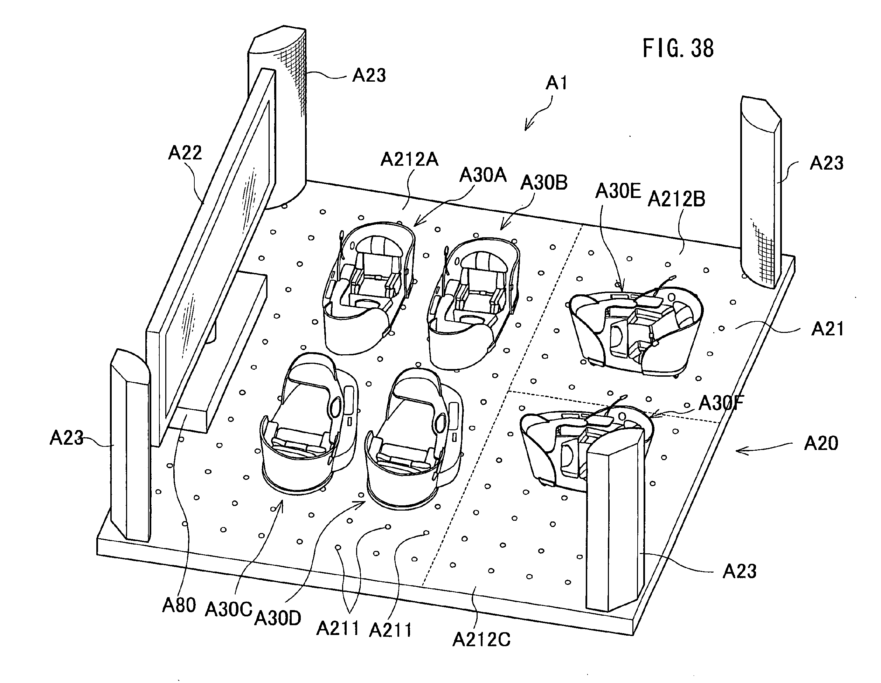

Specifically, as shown in Fig. 38 there are six terminal devices, A30A to A30F, placed on the play area A21. Among these, the players of terminal devices A30A, A30B, and A30E are one party, and the players of terminal devices A30C, A30D, and A30F are another party. Then, each player in terminal devices A30A to A30D are caught in the macroquest in the city area A212A and are placed such that the parties oppose each other. In contrast, because the players in terminal devices A30E and A30F are respectively in the ocean area A212B and the forest area A212C, they are not involved in the macroquest, and thus, view the battle between the terminal devices A30A to A30D.

In order to clear the macroquest, the players caught in the macroquest select whether to call for help from fellow players in ST33.

If the player selects "No", the process moves to ST36.

On the other hand, if the player selects "Yes", the process moves to ST34, the game program transmits mail calling for help to the fellow players, and shows that help is being called for in the sub-display part A61 in the terminal device A30 of the player. Then, the game program prompts the fellow players to select whether to help the player.

If the fellow player whose help is requested selects "Yes", the process moves to ST35, and the game program transmits the selection results to the player requesting help and that the fellow player will participate is shown in the sub-display part A61 of the player. In addition, the game program shows the status of the gathering of newly participating fellow players in the main display device A22, and the terminal devices A30 of the newly participating fellow players are moved to the city area A212A in front of the main display device A22 and placed such that the terminal devices A30 of opposing players are close to and facing each other.

On the other hand, if the player whose help is requested selects "No", the game program shows that help had been denied in the sub-display part A61 of the player requesting for help, and the process moves to ST36.

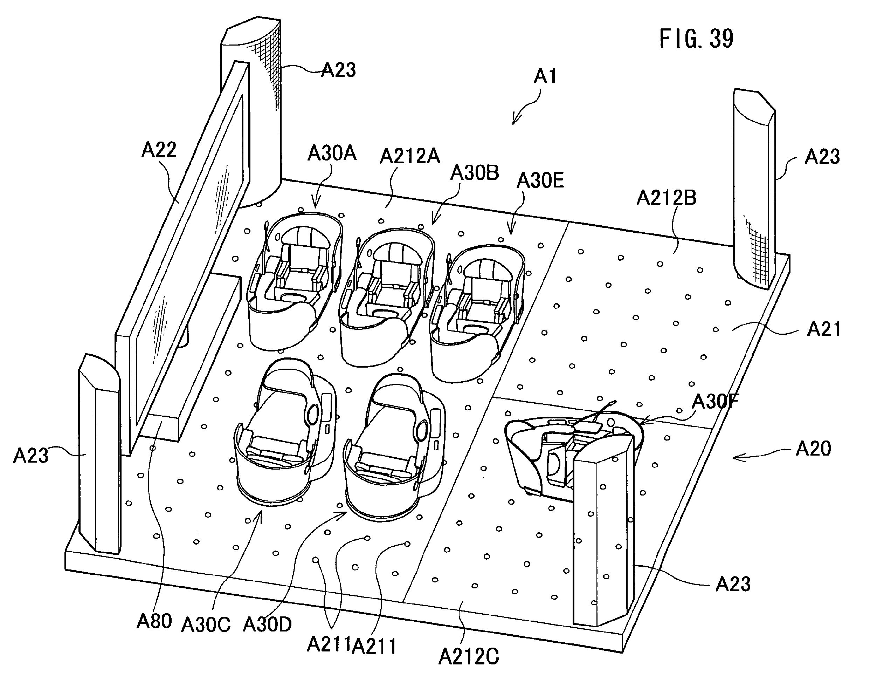

Specifically, as shown in Fig. 39, because the player in terminal device A30E is fellow players with the players in terminal devices A30A and A30B, this player's help is requested by the terminal devices A30A and A30B. The player in terminal device A30E, having agreed to help, is moved to the city area A212A and is placed in alignment with the terminal devices A30A and A30B.

On the other hand, although the player in terminal device A30F is fellow players with the players in terminal devices A30C and A30D, and this player's help is requested by the terminal devices A30C and A30D, he refuses to help and, therefore, remains in the forest area A212C.

In ST36, each player fights the opposing player or opposing party. Specifically, as shown in Fig. 39, the players of terminal devices A30A, A30B, and A30E and the players of terminal devices A30C and A30D fight in the city area A212A.

In this way, each player gets caught in a macroquest or is requested to help by fellow players caught in the macroquest, and whether to watch the battle between other players or to personally participate can be selected.

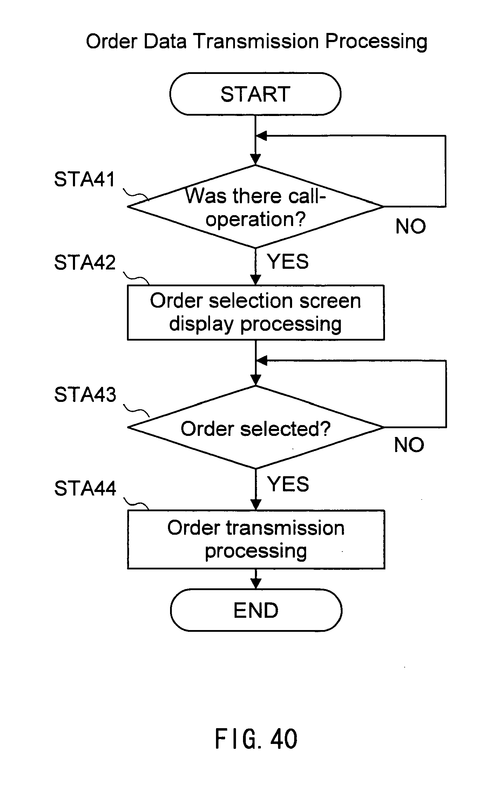

The control operations of the sub-control device A90 is explained, with reference to the flowcharts shown in Fig. 40 to Fig. 42. The processing performed in the flowcharts shown below are interrupt processing by the CPU A91 in the sub-control device A90 and are performed at predetermined intervals.

Fig. 40 is a flowchart of an order data transmission processing.

In STA41, the CPU A91 determines whether there has been a calling operation by input from the input operation part A72. If this is determined to be "YES", the process moves to STA42, and if it is "NO", the process moves to STA41. In STA42, the order selection screen display processing is performed. Specifically, the order selection screen (Fig. 36) is shown in the sub-display part A61, and the selection of order content is prompted. In STA43, the CPU A91 determines whether there has been a selection of the order by input from the input operation part A72. If this is determined to be "YES", the process moves to STA44, and if it is "NO", the process moves to STA43. In STA44, the order transmission processing is performed. Specifically, order data including the content of the selected order, to which the IP address of the terminal device A30 is added, is transmitted as game input data to the main control device A80, and the order data transmission processing is completed.

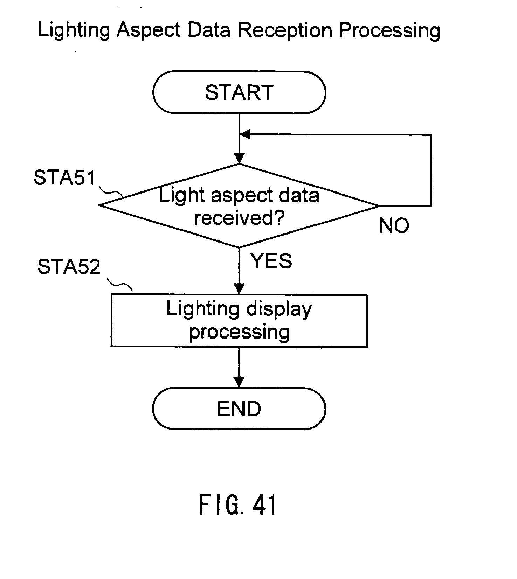

Fig. 41 is a flowchart of a lighting aspect data reception processing.

In STA51, the CPU A91 determines whether the lighting aspect data is received from the main control device A80. If this is determined to be "YES", the process moves to STA52, and if it is "NO", the process moves to STA51. In STA52, a lighting display processing is performed. Specifically, the light display device A325 is illuminated with the lighting aspect corresponding to the lighting aspect number included in the lighting aspect data, with reference to the lighting aspect table, and the lighting aspect data reception processing is completed.

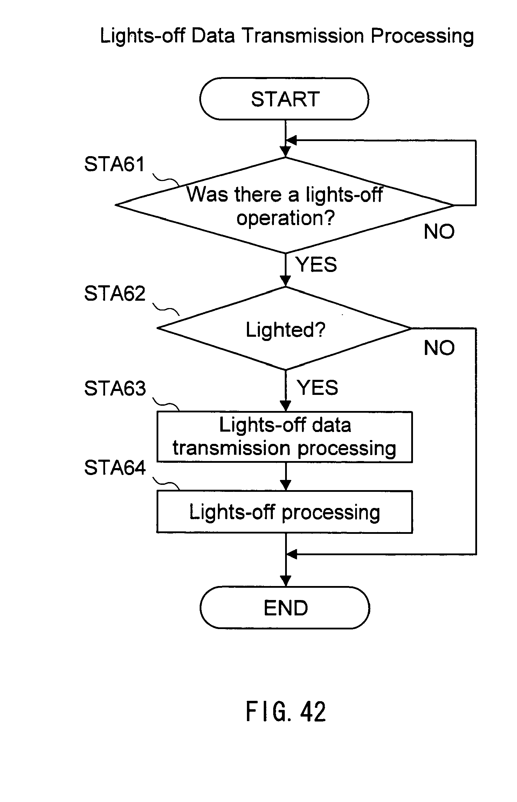

Fig. 42 is a flowchart of a lights-off data transmission processing.

In STA61, the CPU A81 determines whether there has been a light-off operation of the light display device A325 by input from the input operation part A72. If this is determined to be "YES", the process moves to STA62, and if it is "NO", the process moves to STA61. In STA62, the CPU A81 determines whether the light display device A325 is illuminated. If this is determined to be "YES", the process moves to STA63, and if it is "NO", the lights-off data transmission processing is completed. In STA63, a lights-off data transmission processing is performed. Specifically, the lighting aspect number corresponding to the lighting aspect of the light display device A325 is transmitted to the main control device A80 and the process moves to STA64. In STA64, the light in the light display device A325 is turned off and the lights-off data transmission processing is completed.

The control operations of the main control device A80 is explained, with reference to the flowcharts shown in Fig. 42 to Fig. 44. The processings performed in the flowcharts shown below are interrupt processings by the CPU A81 in the main control device A80 and are performed at predetermined intervals.

Fig. 43 is a flowchart of a lighting aspect determination processing.

In STA71, the CPU A81 determines whether an order data has been received as game input data from the terminal device A30. If this is determined to be "YES", the process moves to STA72, and if it is "NO", the process moves to STA71. In STA72, the selection count is set to 5, and the process moves to STA73. In STA73, the CPU A81 determines whether the illumination flag corresponding to the lighting aspect number of the same value as the selection count is on. If this is determined to be "YES", the process moves to STA74, and if it is "NO", the process moves to STA75. In STA74, the selection count is decreased by 1 and the process moves to STA73.

In STA75, the CPU A91 sets the illumination flag corresponding with the lighting aspect number of the same value as the selection count, and the process moves to STA76. In STA76, the lighting aspect number of the same value as the selection count, to which the IP address of the received order data is attached, is transmitted as lighting aspect data, and the process moves to STA77. In STA77, an order management screen display processing is performed. Specifically, an order management screen (Fig. 37), to which the order contents corresponding to the received order data and the lighting aspects corresponding to the transmitted lighting aspect numbers are added as un-processed orders, is shown in the management display part A87, and the lighting aspect determination processing is completed.

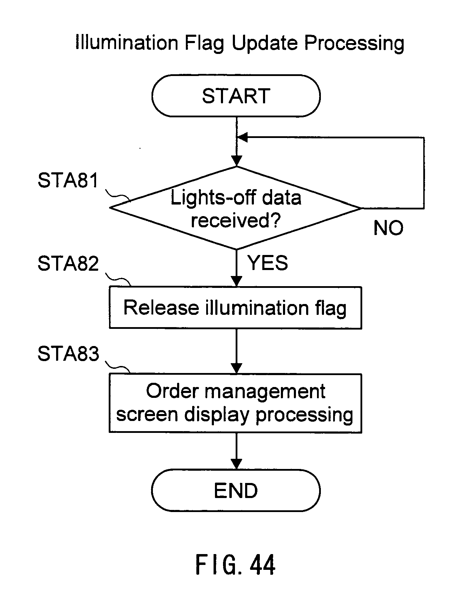

Fig. 44 is a flowchart of an illumination flag update processing.

In STA81, the CPU A91 determines whether lights-off data has been received from the terminal device A30. If this is determined to be "YES", the process moves to STA82, and if it is "NO", the process moves to STA81. In STA82, the illumination flag corresponding to the lighting aspect number included in the received lights-off data is released, and the process moves to STA83. In STA83, an order management screen display processing is performed. Specifically, an order management screen, in which the lighting aspects corresponding to the received lighting aspect number and the types of orders corresponding to the lighting aspects are changed as completed orders, is shown in the management display part A87, and the illumination flag update processing is completed.

### Lighting Processing of the Light Display Device by a Product Acquisition Event

Next, a processing performed by the main control device A80, when a player acquires a drink (or a prize related to the game, etc) as a product during the game, is explained. The main control device A80 executes the game program and performs a predetermined product acquisition event during this game. For example, a screen for enabling the player to select a product (drink, etc.) is shown in the sub-display part A61, as shown in Fig. 36, when the avatar corresponding to the player enters a drink shop. Here, the predetermined product acquisition event can be that in which the avatar of the player opens a treasure chest, acquires a product as a prize after fighting a monster, acquires a product by clearing a mini-game and the like within the game, purchases the product at a shop with currency within the game, obtains the product through the avatar of another player, studies a certain place within the game, opens something (for example, opens drawers, closets, etc. if in a scene inside of a house in the game), and collects a predetermined number of a predetermined item to enable exchange. The player performs the presentation for the acquisition of a product by clearing the predetermined conditions in these product acquisition events.

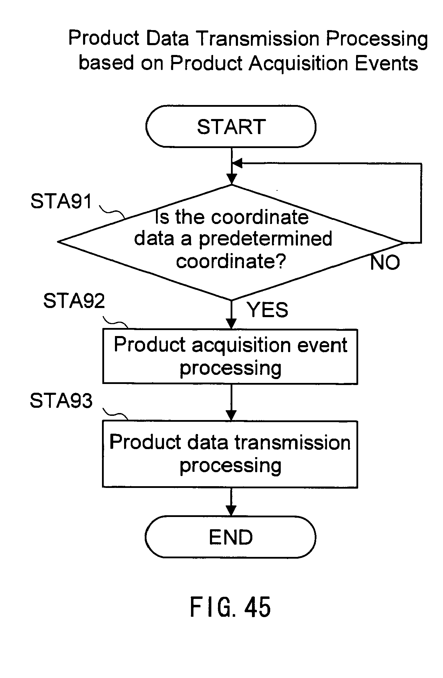

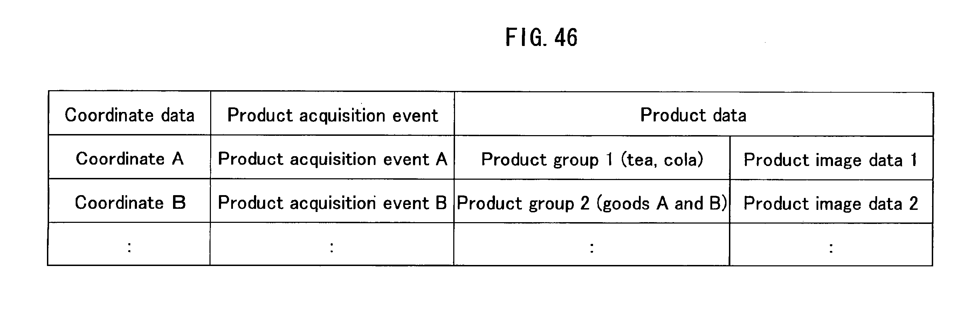

The lighting processing of the lighting display device by the product acquisition event during the game is explained based on Fig. 45 to Fig. 47. Fig. 45 is a flowchart of a product data transmission processing based on the product acquisition event performed by the main control device A80. The CPU A81 determines whether the coordinate data of the avatar of one player is a predetermined coordinate data (STA91). In this determination, the CPU A81 determines based on the product acquisition event corresponding table in Fig. 46. For example, the coordinate data pf the avatar is the coordinate data of the drink shop.

The product acquisition event corresponding table is stored in the memory A82 of the main control device A80. Here, the product data which are each corresponding data (information related to the product and product image data) are stored in the data base A84 and are also stored in the memory A82, accordingly. Here, one product data can be a product group including a plurality of products and can be one product only. For example, if the avatar enters a shop as the product acquisition event, because it is an aspect enabling the selection of a product from a plurality of products, one product data is a product group including a plurality of products. On the other hand, if the product acquisition event is an event where one type of product is acquired, the product data is that which includes one type of product. As shown in Fig. 46, applicable products can be, not only drinks, but also goods and the like.

Although, in Fig. 46, the product acquisition event and the coordinate data correspond in the product acquisition event corresponding table, the product acquisition event can be corresponded with predetermined conditions, such as the player clearing an event, being met (in other words, winning in a fight against a monster or the like, as described above).

Next, the CPU A81 performs a product acquisition event processing (STA92) when it is determined that the coordinate data of the avatar is a predetermined coordinate data. If the coordinate data of the avatar is not a predetermined coordinate data, the CPU A81 waits for processing in STA91, without performing the next processing. The CPU A81 transmits the product data corresponding to the product acquisition event corresponding table to the corresponding terminal device A30 (STA93) as the product acquisition event processing.

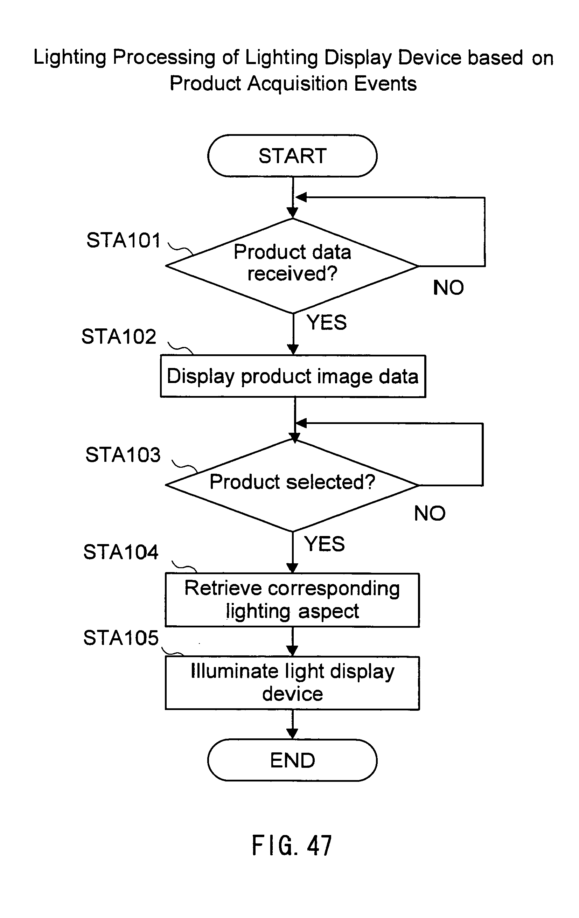

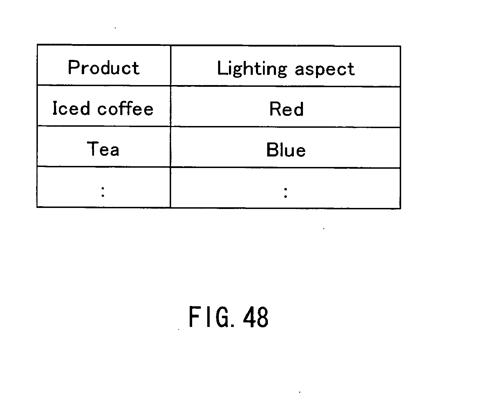

Next, a lighting processing of the light display device A325 performed by the terminal device A30 is explained, based on Fig. 47. The CPU A91 in the terminal device A30 determines whether product data has been received from the main control device A80 (ST A101). The CPU A91 shows the product image data included in the received product data in the sub-display part A61, when it is determined that the product data has been received (STA102). Here, the product image data can be an image data corresponding to one product or image data for enabling the player to select one product from a plurality of products, as in the order selection screen in Fig. 36. Next, the CPU A91 determines whether the player has selected a product via the input operation part A72 (STA103). The CPU A91 retrieves the lighting aspect corresponding to the selected product from the lighting aspect table (STA104) when it is determined that the player has selected a product via the input operation part A72. Fig. 48 shows an example of the lighting aspect table. For example, when the player selects iced coffee, "red" is selected as the lighting aspect. This lighting aspect table differs from the lighting aspect table in Fig. 35, and the content of the product and the lighting aspect is corresponded. In order to combine this with the lighting aspect table in Fig. 35, the product contents can be shown in a flashing state.

Next the CPU A91 performs illumination of the light display device A325 by the lighting aspect retrieved by the lighting aspect table (STA105).

According to the present embodiment, the following effects can be included.
(1) When the player calls for the manager of the game hall in order to receive services, such as delivery of drinks or repair work when a malfunction occurs in the terminal device A30, the player inputs into the input operation part A72 while seated in the seat A31 in the terminal device A30. The light display device A325 illuminates the light display device A325 included in the terminal device A30, based on the input from the input operation part A72. The light display device A325 is provided in a position which is visible from outside of the terminal device A325, which includes the light display device A325, and therefore, the manager can easily notice the light of the light display device and go to the player who is calling for the manager, in response. In other words, the player can smoothly and easily call for the manager.
(2) The player inputs into the input operation part A72 according to the type of service he desires, such as the type of drink he wants delivered or repair work when a malfunction occurs in the terminal device A30. The light display device A325 illuminates the light display device A325 with a differing lighting aspect, based on this input from the input operation part A72. Therefore, the manager can identify the lighting aspect of the light display device A325 and become aware of the type of services the player desires.
(3) The player inputs into the input operation part A72 according to the type of service he desires, such as the delivery of a drink or repair work when a malfunction occurs in the terminal device A30. The sub-control device A90 transmits the game input data corresponding to this input to the main control device A80. The CPU A81 determines the lighting aspect of the light display device A325 in the terminal device which transmitted the game input data, based on this received game input data. In addition, the CPU A81 determines the lighting aspect so that it is not the same as the lighting aspects of each of the light display devices in a plurality of terminal devices A30, when determining the lighting aspect of the light display device A325. Then, the main control device A80 transmits the determined lighting aspect as lighting aspect data to the sub-control device A90. The CPU A91 illuminates the light display device A325 according to the received lighting aspect data. Therefore, because the lighting display devices A325 provided in each terminal device A30 are lit with differing lighting aspects, the manager can match the content of the order and the lighting aspect of the light display device A325.
(4) Because the light display device A325 emits light of differing colors according to the input operation by the player, the manager can identify the light display device A325 with more clarity. In addition, because lights of differing colors are emitted, this is effective in the presentation of the game hall.
   The present invention is not limited to the foregoing embodiments and includes modifications, improvements and the like which achieve the objects of the present invention.
   Although, in the present embodiment, the light display device A325 is provided in the highest position in the terminal device A30, as a position which can be viewed from outside the terminal device A30, this is not limited thereto. For example, the light display device A325 can be provided anywhere, such as on the back part or side surface of the terminal device A30, as long as it can be viewed from outside the terminal device A30. The manager of the game hall can notice the light display device A325 more easily by changing the position of the light display device A325, according to the shape of the game hall and the shape of the play area A21.
(5) When the player calls for the manager of the game hall in order to receive services, such as delivery of drinks or repair work when a malfunction occurs in the terminal device A30, the player inputs into the input operation part 72 while seated in the seat A31 in the terminal device A30. The light display device A325 illuminates the light display device A325 included in the terminal device A30, based on the input from the input operation part A72. The light display device A325 is provided in a position which is visible from outside of the terminal device A30, which includes the light display device A325, and therefore, the manager can easily notice the light of the light display device A325 and go to the player who is calling for the manager, in response. In other words, the player can smoothly and easily call for the manager.
(6) The player inputs into the input operation part A72 according to the type of service he desires, such as the type of drink he wants delivered or repair work when a malfunction occurs in the terminal device A30. The light display device A325 illuminates the light display device A325 with a differing lighting aspect, based on this input from the input operation part A72. Therefore, the manager can identify the lighting aspect of the light display device A325 and become aware of the type of services the player desires.
(7) The player inputs into the input operation part A72 according to the type of service he desires, such as the delivery of a drink or repair work when a malfunction occurs in the terminal device A30. The sub-control device A90 transmits the game input data corresponding to this input to the main control device A80. The CPU A81 determines the lighting aspect of the light display device A325 in the terminal device which transmitted the game input data, based on this received game input data. In addition, the CPU A81 determines the lighting aspect so that it is not the same as the lighting aspects of each of the light display devices in a plurality of terminal devices A30, when determining the lighting aspect of the light display device A325. Then, the main control device A80 transmits the determined lighting aspect as lighting aspect data to the sub-control device A90. The CPU A91 illuminates the light display device A325 according to the received lighting aspect data. Therefore, because the lighting display devices A325 provided in each terminal device A30 are lit with differing lighting aspects, the manager can match the content of the order and the lighting aspect of the light display device A325.
(8) Because the light display device A325 emits light of differing colors according to the input operation by the player, the manager can identify the light display device A325 with more clarity. In addition, because lights of differing colors are emitted, this is effective in the presentation of the game hall.

The present invention is not limited to the foregoing embodiments and includes modifications, improvements and the like which achieve the objects of the present invention.

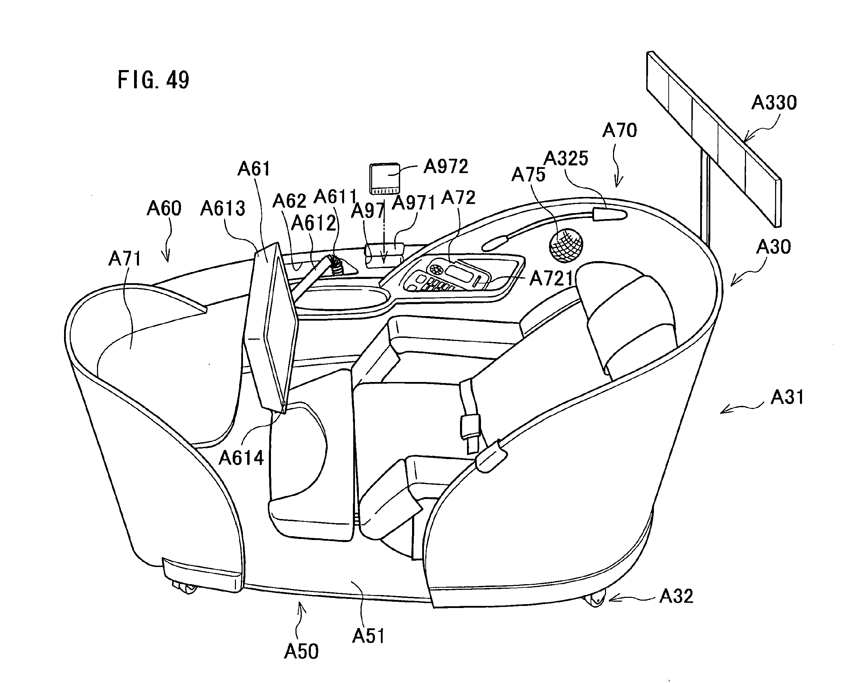

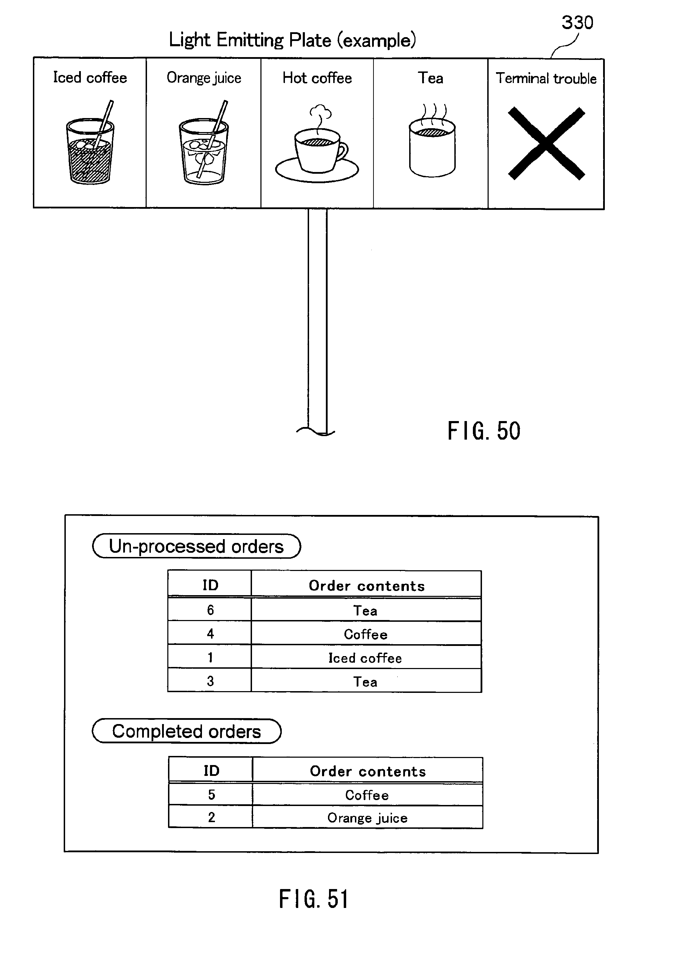

Another embodiment may be a mode in which a light-emitting plate A330 is provided in place of the light display device A325 described above, as shown in Figs. 49 and 50. The back-side of the seat shell A70 extends upward and can support the backrest A53 and the head rest A54. In addition, speakers A75 and light-emitting plate A330 are provided on both sides of the head rest A54 of the seat shell A70. The back-sides of the side surfaces of the seat shell A70 extend upward so that the player seated in the main seat body A50 cannot be viewed by other players.

A table A71 is attached from one side surface of the main seat body A50 to the front surface, on the upper edge of the seat shell A70. The space beneath this table A71 accepts the leg rest A521 and the foot rest A522 when the main seat body A50 is placed in bed mode.

The light-emitting plate A330 is disposed at the distal end of a rod-shaped support part mounted on the back surface of the seat shell A70. The light-emitting plate A330 is disposed in the highest position of the terminal device A30, which is in a position that is viewable from the exterior of the terminal device A30. In this manner, the manager or the like of the game hall can view the light-emitting plate from any position outside of the play area A21 by disposing the light-emitting plate A330 in the highest position of the terminal device A30.

The light-emitting plate A330 includes a plurality of transparent plates, and a light-emitting part is disposed inside each of the plates, and each of the plates independently emits light. Also, the image of a drink or the like is depicted on each plate, and the store staff or the like can be notified of an order for a drink or the like when the light-emitting part lights up.

In the present embodiment, the light-emitting plate A330 is disposed in the highest position of the terminal device A30, which is a position that can be viewed from the exterior of the terminal device A30, but no limitation is imposed by the foregoing. The light-emitting plate A330 may be disposed on the rear part or side surface of the seat A31 of the terminal device A30, for example, as long as the position can be viewed from the exterior of the terminal device A30. The manager who manages the game hall can easily view the light-emitting plate A330 by changing the position in which the light-emitting plate A330 is disposed, in accordance with the configuration of the game hall and the play area A21.

In this mode as well, the status of orders or the like from the players operating the terminal devices A30 is displayed on the management display part A87. The manager or store staff of the game hall can be aware of the status of orders or the like displayed on the management display part A87.

The light-emitting plate A330 includes a plurality of exchangeable transparent plates, and images or pictures of drinks or the like are depicted on the plates. A light-emitting part is provided inside the transparent plate, and each plate can be independently lighted and turned off.

The case in which the player places an order in this mode is described next using a display example (Fig. 36) of the order selection screen. When a calling operation is performed by an input from the input operation part A72, the order selection screen is shown in the sub-display part A61. This order selection screen is shown continuously until the player performs an order selection. In this display example, iced coffee, orange juice, hot coffee, tea, and terminal trouble are shown as the order contents, and the player is prompted to select from any of the order contents. When the player selects an image of drink or the like that the player desires to order from the order selection screen, the corresponding light-emitting plate lights up, and the store staff can be notified of a drink order. Also, when the image of terminal trouble is selected, the terminal trouble plate from among the light-emitting plate is lighted up, and the manager is notified. Because the terminal trouble plate lights up with a color that is different than the images of the other drink plates, the terminal trouble plate can easily be distinguished from a drink order.

A display example of the order management screen of this mode is described next with reference to Fig. 51. Fig. 37 shows a display example of the order management screen shown in the management display part A87 of the main control device 80. The order management screen is shown in the management display part A87 based on reception of order generation data and order completion data from the sub-control device A90. This order management screen is divided into an un-processed order column and a completed order column, and order contents included in the order data and the ID of the terminal corresponding to the order contents are shown in each column.

The order generation data is shown continuously in the un-processed order column beginning with the reception of the order generation data until the order completion data is received. When the store staff or the like has completed the delivery or other processing of the drink, a prescribed operation is performed from the input operation part 72 or the like of the terminal device. In accordance with this operation, the terminal device turns off the light-emitting plate, and simultaneously transmits order completion data to the main control device 80. After the order completion data has been received, the order is transferred as a completed order to the completed order column of the order management screen.

The flow in the case of this mode is described with reference to Fig. 40.

In STA41, the CPU A91 determines whether there has been a calling operation by input from the input operation part A72. If this is determined to be "YES", the process moves to STA42, and if it is "NO", the process moves to STA41. In STA42, the order selection screen display processing is performed. Specifically, the order selection screen (Fig. 36) is shown in the sub-display part A61, and the selection of order content is prompted. In STA43, the CPU A91 determines whether there has been a selection of the order by input from the input operation part A72. If this is determined to be "YES", the process moves to STA44, and if it is "NO", the process moves to STA43. In STA44, the order transmission processing is performed. Specifically, order data including the content of the selected order, to which the IP address of the terminal device A30 is added, is transmitted as game input data to the main control device A80, and the order data transmission processing is completed.

According to the mode described above, the following effects for enhancing the enjoyment of the game can be attained.

When the player calls for the store staff of the game hall in order to receive services, such as delivery of drinks or repair work when a malfunction occurs in the terminal device A30, the player inputs into the input operation part A72 while seated in the seat A31 in the terminal device A30. The CPU A91 of the sub-control device illuminates the corresponding plate of the light-emitting plate A330 included in the terminal device A30, based on the input from the input operation part A72. The light-emitting plate A330 is provided in a position which is visible from outside of the terminal device 30, which includes the light-emitting plate A330, and therefore, the store staff can easily notice the light of the light-emitting plate A330 and go to the player who is calling for the manager in response thereto. In other words, the player can smoothly and easily call for the manager.

Also, the player inputs into the input operation part A72 according to the type of service he desires, such as the type of drink he wants delivered or repair work when a malfunction occurs in the terminal device A30. The light-emitting plate A330 illuminates the corresponding plate, based on this input from the input operation part A72. Therefore, the manager can see the lighted light-emitting plate A330, and quickly become aware of an abnormality in the terminal device of a player.

### [Example 3]

### Overall Configuration of the Game Machine

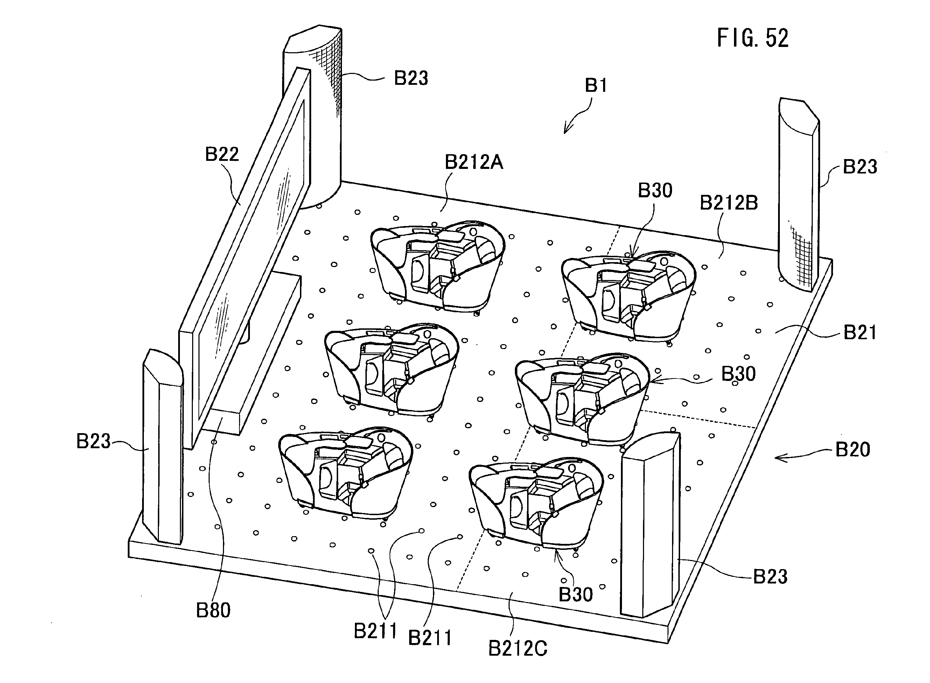

Fig. 52 is a perspective view showing an outward aspect of the game machine B1 according to an embodiment of the present invention.

The game machine B1 is a multi-player game machine, including a main game machine body B20 which includes a flat, rectangular play area B21 and a plurality of terminal devices B30 which are placed on this play area B21.

Aside form the play area B21, the main game machine body B20 includes a main display device B22 which is placed along one side of the play area B21, a speaker device B23 which is placed in the four corners of the play area B21, and a main control device B80 for controlling these main display device B22 and speaker device B23. The main display device B22 operates as a main display part.

The play area B21 is divided into a plurality of sub-areas B212. As these sub-areas B212, there are city areas B212A, ocean areas B212B, and forest areas B212C. In addition, IC tags B211 are buried in grid-form in the play area B21. Positional information of the inside of the play area B21 is stored to this IC tag B211.

The main display device B22 is a large projector display device showing images based on image data output from the main control device B80. The main display device B22 is not limited thereto and can also be a large monitor.

The main control device B80 can communicate with each terminal device B30 bi-directionally through wireless LAN and can provide each player with a common virtual space by executing the predetermined game program and bi-directionally communicating with each terminal device B30.

Each terminal device B30 is placed facing towards the main display device B22. This terminal device B30 is connected to the main control device B80 through wireless LAN and can be moved over the play area B21according to the instructions from the main control device B80 or by player operation.

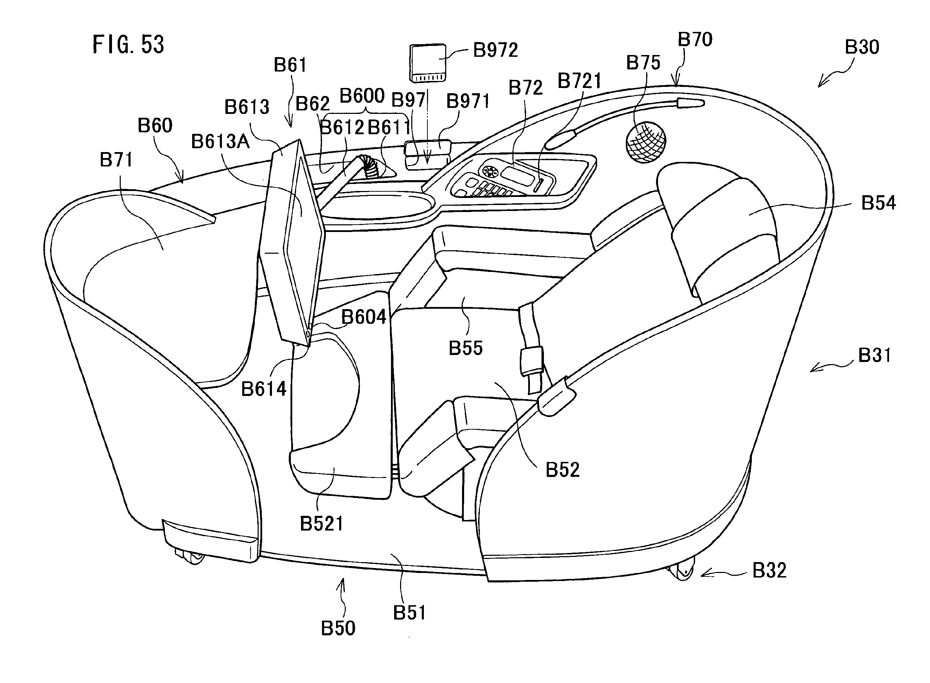

Fig. 53 is a perspective view showing an outward aspect of each terminal device B30.

The terminal device B30 includes a seat B31, and a traveling part 32, which is provided on the lower part of the seat B31, for moving the seat B31 over the play area B21. Here, this traveling part 32 is the same configuration of the foregoing traveling part 32 of the terminal device 30. Configuration of the Seat

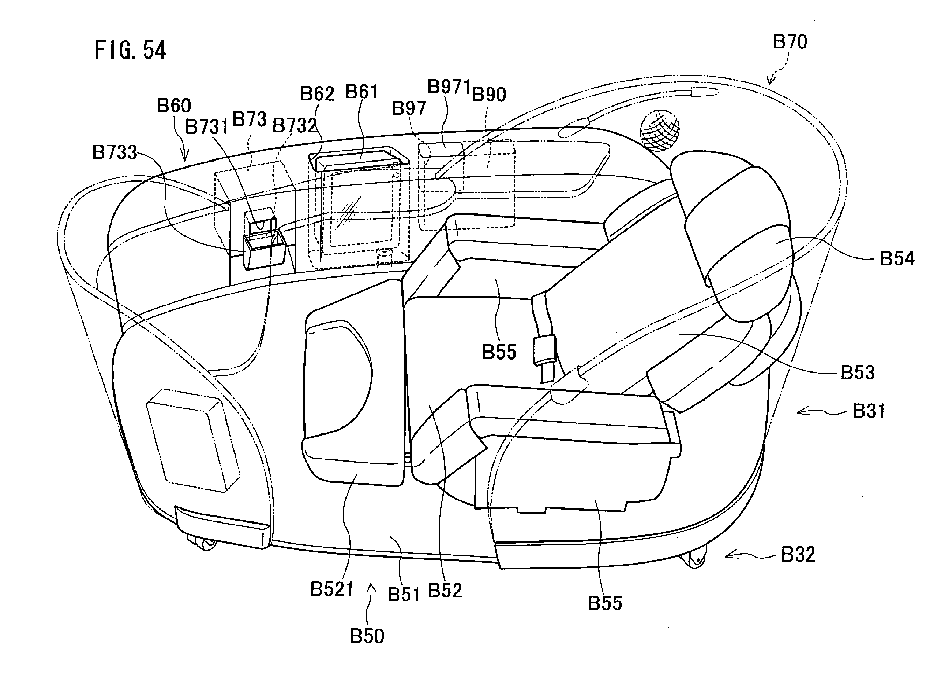

Fig. 54 is a perspective view of the seat B31 in seat mode.

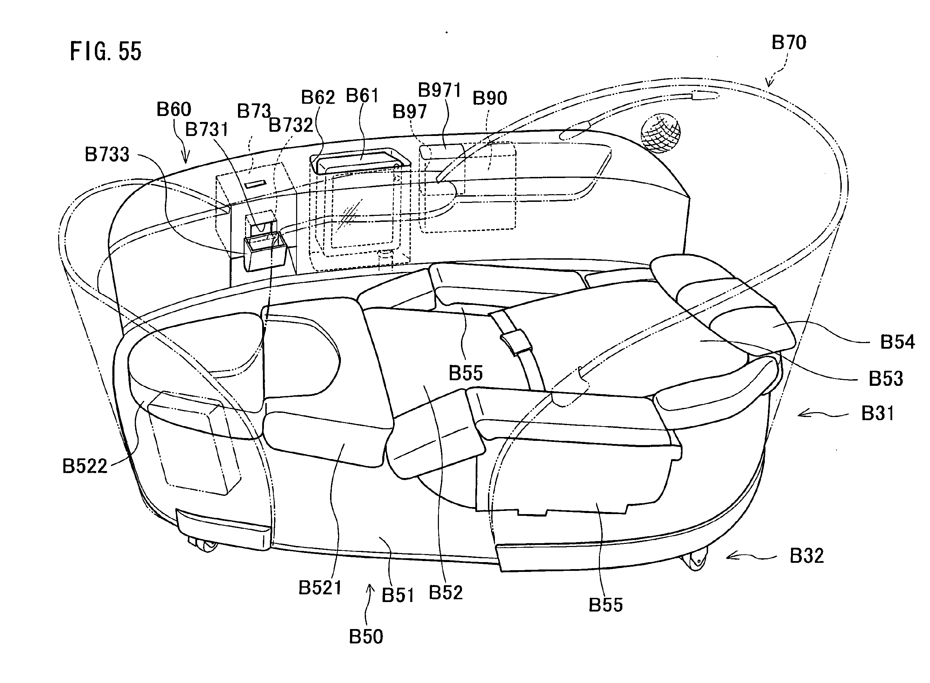

Fig. 55 is a perspective view of the seat B31 in bed mode.

Seat B31 includes a main seat body B50, a side unit B60 which is provided along one side surface of the main seat body B50, and a seat shell B70 which surrounds the main seat body B50 on three sides, excluding the other side surface side. This seat B31 includes a reclining function, and the mode thereof can be adjusted in multiple steps, between the seat mode shown in Fig. 54 and the bed mode shown in Fig. 55.

The main seat body B50 includes a flat base part B51, a seating part B52 which is provided on this base part B51, a backrest (backrest part) B53 which is attached to enable changing of its angle to the seating part B52, a head rest B54 which is provided on the top part of the backrest B53, and a pair of side arms B55 which are provided in positions on the seat surface of the seating part B52 and both sides of the backrest B53.

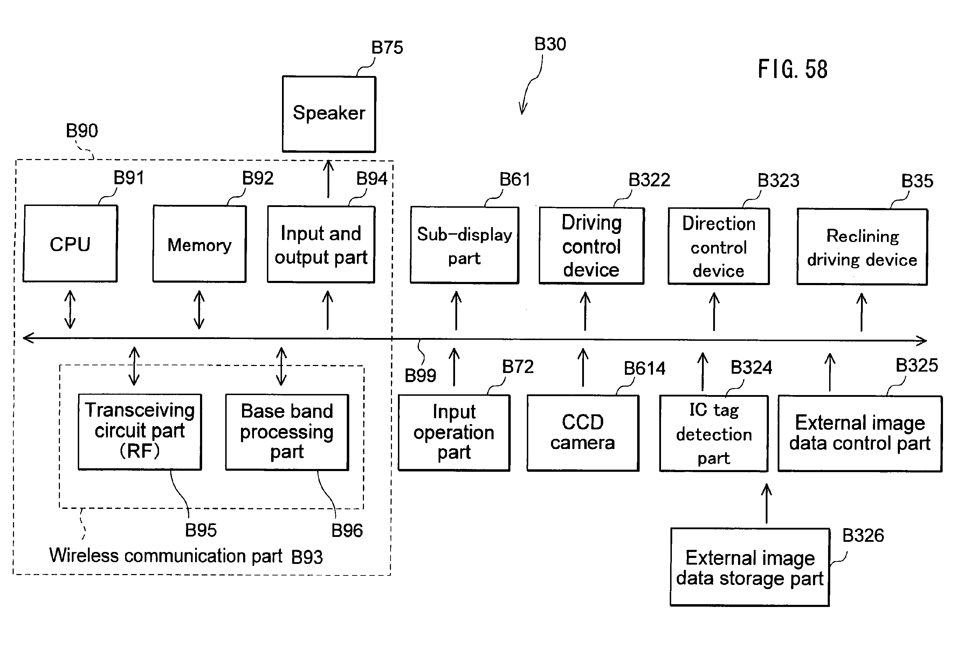

The seat B31 further includes a reclining driving device B35 for controlling the state of the reclining function of the seat B31. The reclining driving device B35 (refer to Fig. 58) operates as a reclining driving part and, at the least, tilts the backrest B53.

The seating part B52 moves back and forth on the base part B51 when the player operates the input operation part B72 (refer to Fig. 53; game controller). The main seat body B50 changes from the seat mode shown in Fig. 54 to the bed mode shown in Fig. 55, when this seating part B52 is slid forward, and forms a bed. Therefore the input operation part B72 operates as a position operation part for controlling the state of the reclining function of the seat B31. In addition, the input operation part B72 is placed in a position enabling the player to operate even when the seat B31 is in seat mode or bed mode.

The seating part B52 includes a leg rest B521 which is provided on the front surface side and a foot rest B522 which is stored in the tip of this leg rest B521. The leg rest B521 turns upward according to the sliding motion, when the seating part B52 is slid forward, and becomes a seat surface which continues from the seat surface of the seating part B52. At the same time, the foot rest B522 projects from the leg rest B521 and becomes a seat surface which continues from the leg rest B521.

The backrest B53 falls backward, according to the back and forth movement of the seat part B52 on the base part B51.

The front surface side of the side arm B55 turns slightly upward, when the main seat body B50 is placed in bed mode.

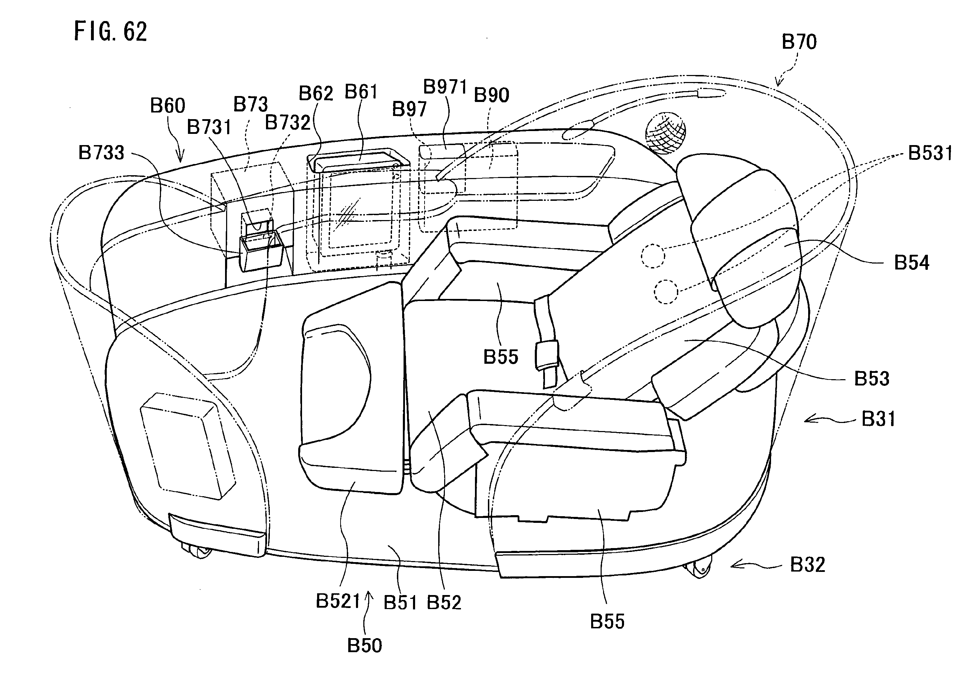

As another embodiment, a plurality of massage balls B531 and a massage ball driving device B36 for causing a plurality of massage balls B531 to slide is disposed inside the backrest B53, as shown in Figs. 62 and 64, and the player's back can be massaged. The player can operate the input operation part B72 to vary the massage position and strength of the massage balls B531 on the player's back.

A bag component, into which air can be injected, is embedded respectively within the seat surface of the seating part B52, the lower part of the backrest B53 (which comes into contact with the lower back of the player) and the head rest B54. When air is injected into these bag components by an air pump, the surface swells and can support the user while accommodating the contours of the body surface of the user.

The sub-display part B61 which is configured to include a liquid crystal display panel is stored in the side unit B60.

As shown in Fig. 53, the sub-display part B61 includes a first support component B600 which is supported by the side unit B60, and a flat, rectangular sub-monitor B613 which supported by the support component B600. The support component has a first support arm B611 and a second support arm B612 which is attached to the tip of the first support arm B611. The sub-monitor B613 has a flat, rectangular shape and, furthermore, is attached to the tip of the second support arm B612 and has an image display part B613A for performing liquid crystal display. The first support arm B611 can be extended and retracted freely in the direction vertical to the side unit B60. The second support arm B612 can extend and retract freely and can be fixed to an arbitrary angle to the axis direction of the first support arm B611. The sub-monitor B613 can be fixed to an arbitrary angle to the axis direction of the second support arm B612.

The sub-monitor B613 shows a game screen generated based on the game program executed in the CPU B81 of the main control device B80 and a game screen generated in the terminal device B30. Here, the sub-monitor B613 can combine and show the game screen generated based on the game program executed in the CPU B81 of the main control device B80 and the game screen generated in the terminal device B30. A small CCD camera B614 is embedded into the sub-monitor B613. This CCD camera B614 is used when creating an avatar in the game field. The image taken by the CCD camera B614 is displayed constantly in the sub-display part B61 in the terminal device B30, by operating an input operation part B72 (described hereafter). Because the expressions of the player per se can be viewed during the game in this way, enjoyment increases. In this case, the photographed image can be shown on the entire screen of the sub-monitor B613 or in one section of the screen.

A sub-monitor storage space B62 which extends in the vertical direction is provided in the side unit B60, and the foregoing first support arm B611, a second support arm B612, and a sub-monitor B613 are stored within the sub-monitor storage space B62. Here, the procedure for pulling out the sub-monitor A613 from the storage space A62 is the same as foregoing sub-monitor 613.

A sub-control device B90 which is connected by wireless LAN to the main control device B80 and a plurality of board storage slots B97 which configure this sub-control device B90 are provided within the side unit B60. Here, the sub-control device B90 operates as a sub-control part. The sub-control device B90 controls the sub-display part B61 and the traveling part 32, based on instructions from the main control device B80, as well as transmitting signals input by the input operation part B72 (described hereafter) to the main control device B80.

A cover part B971 is provided to open and close freely on the upper part of the board storage slots B97. By opening the cover part B971 and inserting a terminal control board B972 from above, as shown in Fig. 53, the terminal control board B972 can be attached to the board storage slot B97. The terminal control board B972 includes, for example, the wireless communication part B93 and the CPU B91.

The back-side of the seat shell B70 extends upward and can support the backrest B53 and the head rest B54. In addition, speakers B75 are provided on both sides of the head rest B54 of the seat shell B70. The back-sides of the side surfaces of the seat shell B70 extends upward so that the player seated in the main seat body B50 cannot be viewed by other players.

A table B71 is attached from one side surface of the main seat body B50 to the front surface, on the upper edge of the seat shell B70. The space beneath this table B71 accepts the leg rest B521 and the foot rest B522 when the main seat body B50 is placed in bed mode.

The input operation part B72 is provided in the vicinity of the side arm B55 on the table B71, or in other words, a position wherein the player can perform operations while seated in the main seat body B50, and includes a keyboard, a jog dial and the like. Other than a coin insertion opening and a start button, a card slot B721 for inserting credit cards and membership cards is provided in this input operation part B72.

Although the input operation part B72 is provided on the table B71 in the present embodiment, this is not limited thereto, and can be provided as a touch-panel on the sub-monitor B613.

A medal payout opening B731 from which medals are paid out from a medal collection part B73 provided within the side unit B60, and a medal receiving part 732 for receiving the medals which are paid out are provided below the table B71 and in front of the side arm B55. A holder, not shown, for attaching a medal storage container B733 is provided in the medal reception part B732. The medals may, for example,'be paid out according to a bet ratio in an event within the game program. For example, prescribed odds (bet ratio) are established by the participants for an event (the outcome or the like of horse racing and fighting) in the same manner as a bookmaker, and the players vote for the preferred ratio. Medals are paid out or otherwise awards in accordance with the odds based on the outcome or the like. The prize awarded by the bookmaker is not limited to medals, and items in the game environment may be used.

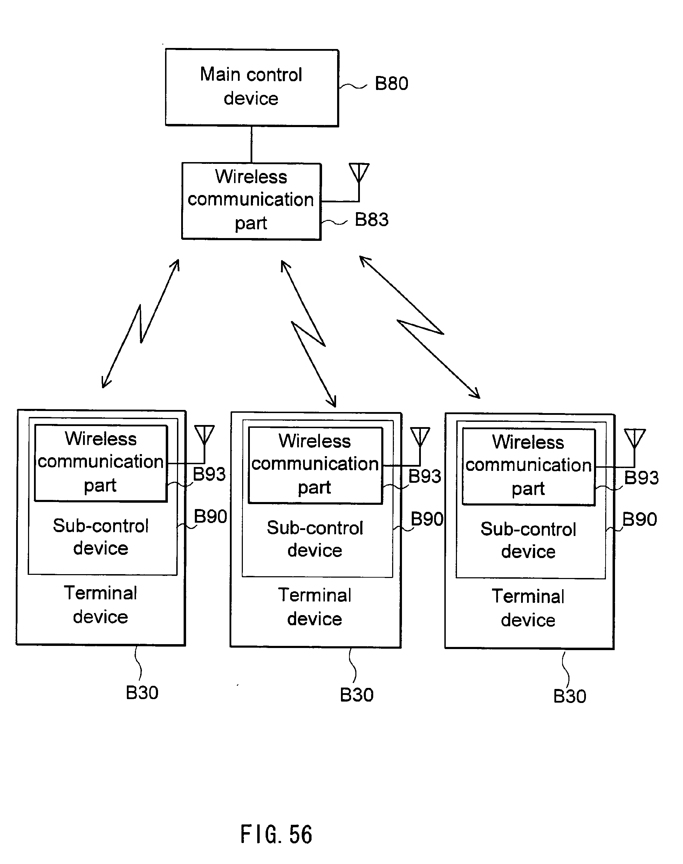

Fig. 56 is a block diagram of an overall configuration of the game machine B1.

In this game machine B1, the main control device B80 of the main game machine body B20 had a wireless communication part B83 and the sub-control device B90 of the terminal device B30 has a wireless communication part B93. These wireless communication parts B83 and B93 can be interconnected by a wireless LAN, and thus, the transfer of voice data and character data can be performed between the main control device B80 and the sub-control device B90. Configuration of the Main Control Device

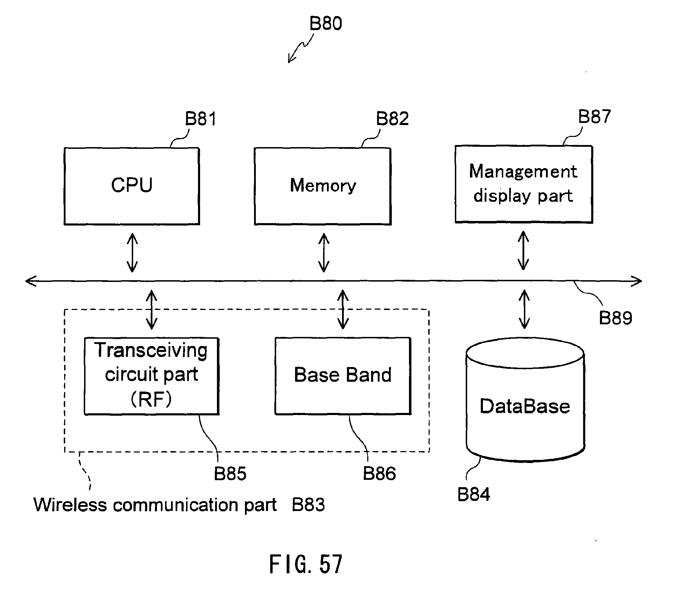

Fig. 57 is a block diagram showing the configuration of the main control device B80.

The main control device B80 has a CPU B81, a memory B82, a wireless communication part B83, and a database B84, which are connected to a data bus B89. The CPU B81 operates as a main control part. The database B84 operates as a memory part.

The wireless communication part B83 includes a transceiving circuit part (RF) B85 for transmitting and receiving signals with the sub-control device B90, and a base band processing part B86 for converting RF (Radio Frequency) signals received by the transceiving circuit part B85 into base band signals and also converting base band signals to be transmitted into RF signals.

The database B84 is a circuit board which includes a memory part to which a game program is stored or a storage medium (for example, a hard disk or ROM cassette) to which the game program is stored.

Specifically, a slot to which these circuit boards and storage mediums can be attached and removed is provided in the main control device B80. By attaching and removing these circuit boards and storage mediums from the slot, the game program stored to the database B84 can be replaced, accordingly, and other game programs can be executed. Replacing the game program is not limited to that via hardware, as such, and the game program can be replaced directly by downloading via a communication circuit.

CPU B81 transmits and receives data with the sub-control devices B90 of each terminal device B30, via the wireless communication part B83, by the procedure below.

Specifically, the CPU B81 converts data into packet data when transmitting data to the sub-control device B90 of the terminal device B30. At this time, the IP address of the identified terminal device B30, which is the destination, is added to the packet data.

In addition, the CPU B81 identifies the terminal device B30 which is the transmission source of the data when receiving data from the sub-control device B90 of the terminal device B30, based on the IP address added to the packet data.

The foregoing CPU B81 executes the game program and performs various processing as a result. In other words, the CPU B81 reads the game program stored in database B84 to the memory B82 and runs the game according to this game program.

Specifically, the CPU B81 receives data including game input data, described hereafter, respectively, from the plurality of terminal devices B30, and generates a single game data according to the game program, based on these data. Then, the CPU B81 generates image data which is shared with all of the terminal devices B30, based on the generated single game data, and outputs this data to the main control device B80.

Here, the single game data includes a plurality of operation character data which can be moved within the single game field generated according to the game program, based on the respective game input data of the plurality of terminal devices B30, and the positional data of this plurality of operation characters.

If a plurality of game input data is received from a plurality of terminal devices B30, the CPU B81 identifies the terminal device B30 which transmitted the game input data, based on the IP address, and moves the operation character of this identified terminal device B30 based on this game input data.

Furthermore, if the positional data of operation character of the identified terminal device B30, out of the plurality of terminal devices B30, meets predetermined conditions, the CPU B81 transmits, to the identified terminal device B30, movement signal data which designates the position of the terminal device B30.

In addition, during the game, in response to a request of the terminal device 30, the CPU B81 extracts the game program, information expressing the game status corresponding to the time-line in the game field at the time (namely, information expressing events and the like occurring in the game field) from the database B84 and transmits this to the terminal device B30, which is the request source, via wireless LAN. In addition, the CPU B81 receives information expressing the operation results of the player from each terminal device B30 and stores this in the memory B82.

The CPU B81 runs the game and stores the progress results of the game program to the database B84, based on the information expressing the operation results of the player stored to the memory B82.

Here, the information expressing the operation results of the player are, for example, selection results by the player from a selection shown to the player via the terminal device B30, based on the progress of the game program, or the results of the operation performed by the player of the character appearing in the game, and is information transmitted from the terminal device B30 as a result of the player operating their respective terminal devices B30. Other players can check the progress status of the current game stored to this database B84 (for example, high-score information, etc.).

As described hereafter, when the CPU B81 receives a signal indicating that a specific player has selected break mode, the CPU B81 places this specific player in a game halt state, for example, so that it is not disadvantageous to the game progression of this specific player. Furthermore, the CPU B81 outputs the information stating that the specific player has selected break mode as a break information signal, so as to show this information in the sub-display parts B61 of other players. Configuration of the Sub-Control Device

Fig. 58 is a block diagram showing the configuration of the sub-control device B90.

The sub-control device B90 has a CPU B91, a memory B92, a wireless communication part B93, and an input and output part B94 which is the interface with the speaker B75, which are connected to a data bus B99.

The wireless communication part B93 includes a transceiving circuit part (RF) B95 for transmitting and receiving signals with the main control device B80, and a base band processing part B96 for converting RF (Radio Frequency) signals received by the transceiving circuit part B95 into base band signals and also converting base band signals to be transmitted into RF signals.

The CPU B91 transmits and receives data with the main control device B80, via wireless communication part C93, by the procedure below.

Specifically, the CPU B91 divides data into packet data when transmitting data to the main control device B80. At this time, the IP address of the terminals device B30 which is the transmitting source is added to the packet data as an identifier for identifying respective terminal devices B30.

In addition, the CPU B91 receives the packet data if the IP address added to the packet data matches the IP address of the terminal device, when receiving data from the main control device B80, and destroys the packet data if it does not match.

The CPU B91 not only transmits and receives signals with the main control device B80, via the wireless communication part B93, but also controls the sub-display part B61, driving control device 322, and direction control device 323, based on the input signals from the input operation part B72, the CCD camera B614, and the IC tag detection part B324. The input operation part B72 operates as a reception part. The sub-display part B61 operates as a sub-display part.

Specifically, the IC tag detection part B324 reads positional information from the IC tag B211 and outputs this as current-positional data. The CPU B91 transmits the game input data (data regarding character information, identified selection information, etc.) according to the input from the input operation part B72, the face image data taken by the CCD camera B614, and the current-positional data from the IC tag detection part B324 to the main control device B80.

Furthermore, when receiving movement signal data which designates the position of the terminal device B30 from the main control device B80, the CPU B91 grasps the position of the terminal device B30 on the play area B21, based on current-positional data from the IC tag detection part B324, controls the driving control device 322 and the direction control device 323 of the traveling part 32, and moves the terminal device B30 to the position designated by the movement signal data.

In addition, the CPU B91 can drive the driving control device 322 and the direction control device 323 of the traveling part 32, according to the game input data which is input by operating the input operation part C72.

The CPU B91 executes the operation program stored in memory B92 and performs various processing, according to the program executed in CPU B81. In other words, when receiving a game program or information expressing the status corresponding to the time-line in the game environment at that time from the main control device B80, after storing information on the game program and the like, transmitted by the main control device B80, to the memory B92, the CPU B91 presents the various occurrences, such as events, occurring in the game environment at this time, in the sub-display part B61 and outputs sound effects from the speaker B75.

In addition, the CPU B91 drives the reclining driving device B35 and operates the reclining function of the seat B31, according to the player operation from the input operation part B72. Furthermore, the CPU B91 controls the progress of the game by the CPU B81. In other words, if the backrest B53 of the seat B31 is reclined lower than a predetermined angle by the input operation part B72, the CPU B91 outputs a signal indicating that the player has selected break mode to the CPU B81. Alternately, the CPU B91 outputs a signal indicating that the player has selected break mode to the CPU B81 in the same way, even when the player operates the input operation part B72 and selects break mode.

Therefore, the CPU B91 also acts as a reclining operation part and as a game progress control part.

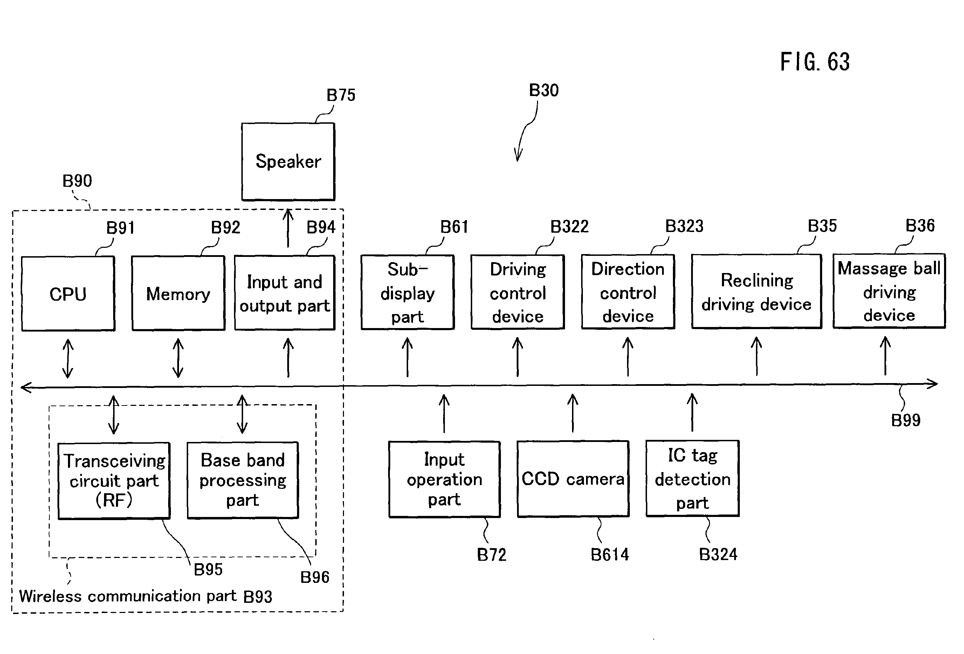

In addition, the CPU B91 drives the reclining driving device B35 and operates the reclining function of the seat B31, according to the player operation from the input operation part B72. Therefore, the CPU B91 also acts as a reclining control part. Also, the CPU B91 drives the massage ball control device according to the operation of the player from the input operation part B72 on the condition that prescribed actuation conditions are received from the main control device, as shown in Fig. 63. Therefore, the seat B31 also functions as a massage machine. Furthermore, the CPU B91 controls the progress of the game by the CPU B81. Therefore, the CPU B91 also acts as a game progress control part.

In addition, by operating the input operation part B72 while viewing the game content (image, letter information, etc.) shown in the sub-display part B61, the players using respective terminal devices B30 can operate the characters shown in the main display device B22, participate in the progress of the game by operations such as selecting from a selection by letters, and move the terminal device B30 to an identified position on the play area B21.

The external image data control part B326 controls external image data. Here, external image data refers to image data which differs from the content of the game progression which develops by the CPU B91 executing the game program (images other than the game screen). The reclining driving device B35 outputs a signal indicating that the backrest B53 of the seat B31 is reclined further than the predetermined angle to the CPU B91. In other words, the reclining driving device B35 includes a sensor (angle detection sensor, etc.) for detecting the predetermined angle. The CPU B91 which received this signal transmits a signal indicating that this terminal device B30 has selected break mode to the CPU B81 in the main control device B80. Alternatively, the CPU B91 outputs the signal indicating that the player has selected break mode to the CPU B81 in the same way, even when the player had operated the input operation part B72 and selected break mode. Here, break mode refers to a state in which an image which is unrelated to the game is output from the sub-display part B61 and the speaker B75. The main control device B80 which received this signal halts the game progression by the game program in the corresponding terminal device B30. Along with the output of this signal, the external image data control part B325 can control to show the external image data in the sub-display part B61. Here, the external image data control part B325 reads the external image data from the external image data memory part B326. In other words, the external image data memory part B326 can be a device to which predetermined video media, such as DVD, video tapes, and the like, are stored. The external image data control part B325 reads the video medium such as this from the external image data memory part B326 and shows the image in the sub-display part B61 (in this case, the sound of the video medium can be output from the speaker).

In addition, this can also be a DVD player or a video player, in which the external image data control part B325 and the external image data memory part are combined, or the external image data control part can include a television image reception part (which can also include audio) and show television images in the sub-display part B61 as the external image data (in this case, sound can be output from the speaker via the input and output part B94).

External image data control part B325 and external image data memory part B326 can be included in the main control device B80. In other words, it can be an aspect in which the CPU B91 of the terminal device B30 outputs the signal indicating that the break mode has been selected to the main control device B80, the main control device B80 halts the game in progress by the game program in the terminal device B30 (or, without halting), the CPU B81 in the main control device B80 transmits external image data to the terminal device B30, and the terminal device B30 which receives this transmitted external image data shows the image in the sub-display part B61. In this case, the main control device B80 can switch the image to an image other than the game image by the external image data control part B325 and the external image data memory part B326 in the terminal device B30, without halting the game progression by the game program in this terminal device B30. If the main control device B80 provides external image data to the terminal device B30, it is not necessary for each terminal device B30 to include an external image data control part B325 and an external image data memory part B326 and therefore, the number of components of the overall game machine can be reduced. Configuration of the Game Program

Next, a game program provided by the game machine B1 is explained. This game program is a role-playing game which is set in a fictional game environment which runs continuously by its own time-line. A plurality of towns exists in this fictional game environment, and guilds are formed respectively in each town.

Each player becomes an adventurer, visits each town, and aims to clear numerous events (quests) waiting in each guild by operating the avatar.

On the other hand, this game program generates a plurality of large events (macroquests) in the game field and forms a large plot to the story. Each player becomes involved in the large events (macroquests), while solving the foregoing events (quests), and solves the macroquest with other players while sometimes cooperating, sometimes fighting, and sometimes competing with each other.

This game program changes the plot of the game field by the operations of the terminal devices B30 of the players (game-play). In other words, the accumulation of the game-play (adventures) of each individual player creates the history of this game field.

In this way, this game program is a role-playing game wherein a plurality of players can all experience the flow of history in a fictional world. In addition, in this game field, history is created by a unique time-line which cannot be stopped, and therefore, the people appearing within this game field are not immortal, but will grow old as in the real world.

The game program is configured to write the name of the player who has solved an event in the macroquest or achieved accomplishments such as winning in a competition against another player to a chronology which is stored to the database B84. In this way, players who were successful in the macroquest can leave their name in the history of the game field.

The operation of the game machine B1 is explained, with reference to the main flow chart shown in Fig. 15.

In ST1, each player selects a terminal device B30 of their choice from the terminal devices B30 placed on the play area B21 and sits in the seat B31 of the selected terminal device B30. Next, in ST2, each player inserts a coin into a coin insertion opening in the input operation part B72 and presses the start switch. Then, in ST3, the locks of the sub-monitor B613 and the seat B31 of the game machine B1 are released and, in ST4, the player can pull out the sub-monitor B613 from the storage space B62 in the side unit B60 and adjust the mode of the seat B31.

In STS, the game machine B1 performs a game processing described hereafter. After the game is completed, in ST6, the game machine B1 stores the sub-monitor B613 and also returns the mode of the seat B31 to seat mode.

Fig. 16 is a flowchart of the game processing. When the game is started in ST11, the game program creates an avatar of the player on ST12.

In other words, the game program shows an avatar creating screen in the sub-display part B61. In this avatar creation screen, the player creates an avatar, which is an alter-ego of the player, when participating in the game program. When an image of the players face is taken by the CCD camera B614 and the player enters personal information and the name to be used in the game field to the input operation part B72, the game program creates an avatar based on this information and registers it to the database B84 of the main control device B80.

In ST13, the game program places the terminal device B30 in which the player is seated in the default position on the play area B21.

In other words, the towns in the game field are surrounded by the ocean or forests, or are large cities. Each game area is an ocean, a forest, or a large city. The play area B21 includes a plurality of sub-areas B212, such as a city area B212A, an ocean area B212B, and a forest area B212C, as stated earlier. These sub-areas B212 are quasi-spaces corresponding to the environment of the towns in the game environment.

Therefore, the game program sets the town each player is in, in the game field, and moves the terminal device B30 of the player to the sub-areas B212A, B212B, and B212C, corresponding to the town in which each player is, when the game begins. Alternatively, the terminal device B30 of the player is moved according to the operations of each player of the input operation part B72, and the town in which the player is in the game field is set according to this movement.

In ST14, the game program runs the game according to a unique time-line, generating macroquests in which a plurality of players participate and quests in which only one player participates, and completed the game in ST15.

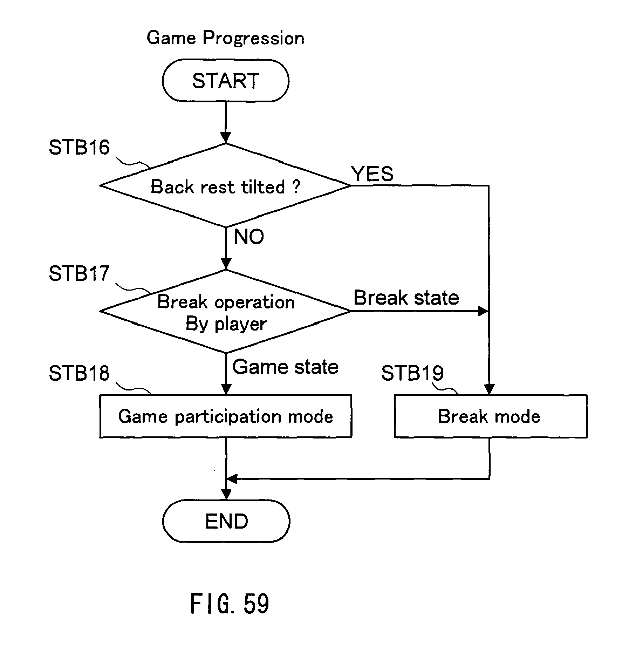

Fig. 59 is a flowchart of the game progression in the game program with regards to each player. In STB16, the CPU B91 detects whether the backrest B53 of a specific player is reclined farther than a predetermined angle. If the CPU B91 determines that the backrest B53 of the seat B31 is reclined farter than a predetermined angle by the input operation part B27, the CPU B91 outputs a signal indicating that the player has selected break mode to the CPU B81. If it is determined that the break mode has been selected, regardless of the operation by the player of the input operation part B72, the game program performs STB19 and, if it is not determined as such, the game program performs STB17.

In STB17, the game program determines whether the player has selected break mode by operating the input operation part B72. If it is determined that the break mode has been selected, regardless of the state of the reclining function, the game program performs STB19 and, if it is not determined as such, the game program performs STB18.

In STB18, the game program provides a game via the sub-display part B61, the speaker B75 and the like so as to enable the player to participate in the overall game and run the game with other players.

In STB19, the game program provides images and sound differing from the game (for example, images and music which enables the player to relax) as break mode, via the sub-display part B61, the speaker B75 and the like. Images and sound which differ from the game can be an aspect in which a demonstration image and music of the game are reproduced, an aspect in which external image data stored to the external image data memory part B326 is reproduced, as described above, or an aspect in which video, such as television, is output.

In another mode, in STB19, the game program may provide images and sound differing from the game overall (for example, images and music which enables the player to relax) via the sub-display part B61, the speaker B75, and the like, so that the player is not allowed to participate in the game overall. Furthermore, the player can be massaged as required by massage balls B531 included in the backrest 53.

Fig. 17 is a flowchart of each player in the game program.

Each player can perform an event chronology processing, guild processing, possessions processing, shop processing, status processing, and party processing, when the game participation mode (STB18) in Fig. 59 is selected.

When the player selects "event chronology processing", the game program shows the event chronology in the sub-display part B61 by reading the event chronology from the database B84 in the main control device B80 and performing event chronology processing.

In this event chronology, the respective dates and quest name of each quest solved in the game field is shown. Furthermore, when the player selects a quest name (event name), the game program shows the details of the selected event. Here, the details of the event are, for example, showing the player who solved the quest most quickly, if the winner is the player who solves the event (quest) most quickly, and shows the party if the winner is the party with the most number of cooperating players who have solved the event (quest).

When the player selects "guild", the game program performs a guild processing and shows a guild screen in the sub-display part B61. In this guild screen, the player can view the quests the player can try in the guild and select to go to another town in the game field.

When the player selects "quest" in the guild screen, the game program shows a list of selectable quests in the sub-display part B61. If the player selects the desired "quest" from this list, the game program executes the selected quest.

When the player selects "Go to another town" in the guild screen, the game program shows a list of towns which can be selected as a transfer destination in the sub-display part B61. If the player selects a desired town from this list, the game program moves the player to the selected town. When the game program moves the player to another town within the game environment, the terminal device B30 of each player is moved to the sub-areas B212 of the corresponding transfer destination town.

The player can select menus such as "guild", "possessions", and "shop", even in the transfer destination town.

When the player selects "possessions", the game program performs a possessions processing and shows a possessions (list of contents) screen, of weapons, tools, shoes, and the like in the sub-display part B61. If the player selects a specific possession in this possessions (list of contents) screen, the game program shows a plurality of items included in the selected possessions in the sub-display part B61. The player selects the desired item from these items and either "wear" or "dispose of" the selected item.

When the player selects "shop", the game program performs a shop processing and shows a shop screen in the sub-display part B61. This shop screen is a screen for barter exchanging items in possession or acquiring information from the shop owner, and the player can select either "listen" or "exchange".

When the player selects "exchange" in the shop screen, the game program shows a list of products in the sub-display part B61. The player can select a desired item from this product list.

When the player selects the desired item, the game program shows the items possessed by the player for exchanging with the selected desired item. When the player selects an item in possession for exchange, the game program shows the item posses by the player and the price thereof in the sub-display part B61.

When the player selects the desired item for exchange from the items in possession, shown here, the desired items in possession to be exchange are collected, and the player selects "execute", the game program executes an exchange of the desired item and the desired item in possession to be exchanged.

On the other hand, if the player selects "listen" in the shop screen, the game program shows "rumors" in the sub-display part B61. The player can acquire information in the game environment by the "rumors" shown in this screen.

When the player selects "status", the game program performs a status processing and shows a status screen in the sub-display part B61. This status screen shows the results of the player's accomplishments in the game environment, the possessions thereof and the like. Specifically, it shows name, title, fame, power, intelligence, number of monsters slain, number of quests cleared, number of people saved, and the like.

If the player selects any one of the items above, the game program shows the rankings related to this item in the sub-display part B61.

When the player selects "party", the game program performs a party processing and shows the names of fellow players in the sub-display part B61, if there are fellow players, and furthermore, shows "read mail", "send mail", "exchange item", "view status" and the like.

By selecting any one of the items above, the player can send and receive mail with fellow players, exchange items with fellow players, and view the status of fellow players.

Fig. 18 is a flowchart of the encounter processing when the player encounters another player on the game field.

In the progress of the game in ST14, the game program executes an encounter processing when the player encounters another player on the game environment.

In other words, in ST21, an encounter screen is shown in the sub-display part B61, and the player is prompted to select whether to make contact.

If the player selects "No", the process moves to ST24 and the encounter processing is terminated without forming a party. On the other hand, if the player selects "Yes", the process moves to ST22, and the game program transmits mail to the other player, and shows that the player is being invited to become a fellow player in the sub-display part B61 in the terminal device B30 of this player. Then, the game program prompts the other player to select whether to accept the invitation.

If the player receiving the invitation selects "Yes", the process moves to ST23 and the game program transmits the selected result to the player who is the inviter, shows that the player has become a fellow player in the sub-display part B61 of the player who is the inviter, a party is formed and the process is completed.

On the other hand, if the player receiving the invitation selects "No", the game program shows that the player could not be a fellow player to the player who is the inviter in the sub-display part B61, and the process moves to ST24, and terminates the encounter processing without forming a party.

Fig. 19 is a flowchart of the macroquest processing when a macroquest is generated in the game field.

If a macroquest involving a plurality of players is generated in ST31, the game program executes a macroquest processing.

In other words, if a macroquest is generated in ST31, the process moves to ST32, shows the players involved in this macroquest in the main display device B22, also moves the terminal devices B30 of the players involved in this macroquest to the sub-area B212A in front of the main display device B22, and places them so that the terminal devices B30 of opposing players are close to and facing each other.

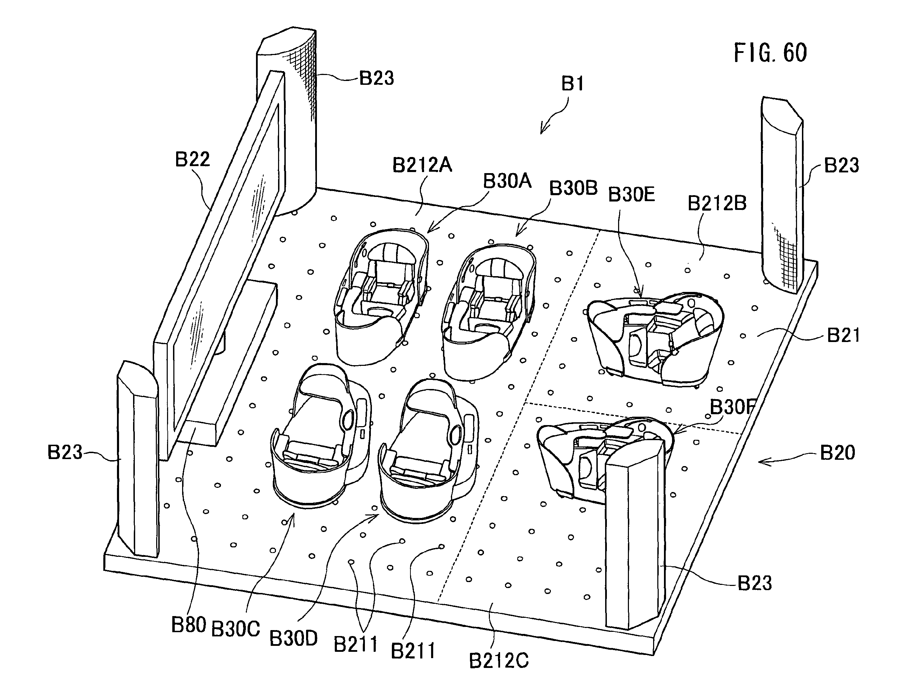

Specifically, as shown in Fig. 60, there are six terminal devices, B30A to B30F, placed on the play area B21. Among these, the players of terminal devices B30A, B30B, and B30E are one party, and the players of terminal devices B30C, B30D, and B30F are another party. Then, each player in terminal devices B30A to B30D are caught in the macroquest in the city area B212A and are placed such that the parties oppose each other. In contrast, because the players in terminal devices B30E and B30F are respectively in the ocean area B212B and the forest area B212C, they are not involved in the macroquest,' and thus, view the battle between the terminal devices B30A to B30D.

In order to clear the macroquest, the players caught in the macroquest select whether to call for help from fellow players in ST33.

If the player selects "No", the process moves to ST36.

On the other hand, if the player selects "Yes", the process moves to ST34, the game program transmits mail calling for help to the fellow players, and shows that help is being called for in the sub-display part B61 in the terminal device B30 of the player. Then, the game program prompts the fellow players to select whether to help the player.

If the fellow player whose help is requested selects "Yes", the process moves to ST35, and the game program transmits the selection results to the player requesting help and that the fellow player will participate is shown in the sub-display part B61 of the player. In addition, the game program shows the status of the gathering of newly participating fellow players in the main display device B22, and the terminal devices B30 of the newly participating fellow players are moved to the city area B212A in front of the main display device B22 and placed such that the terminal devices B30 of opposing players are close to and facing each other.

On the other hand, if the player whose help is requested selects "No", the game program shows that help had been denied in the sub-display part B61 of the player requesting for help, and the process moves to ST36.

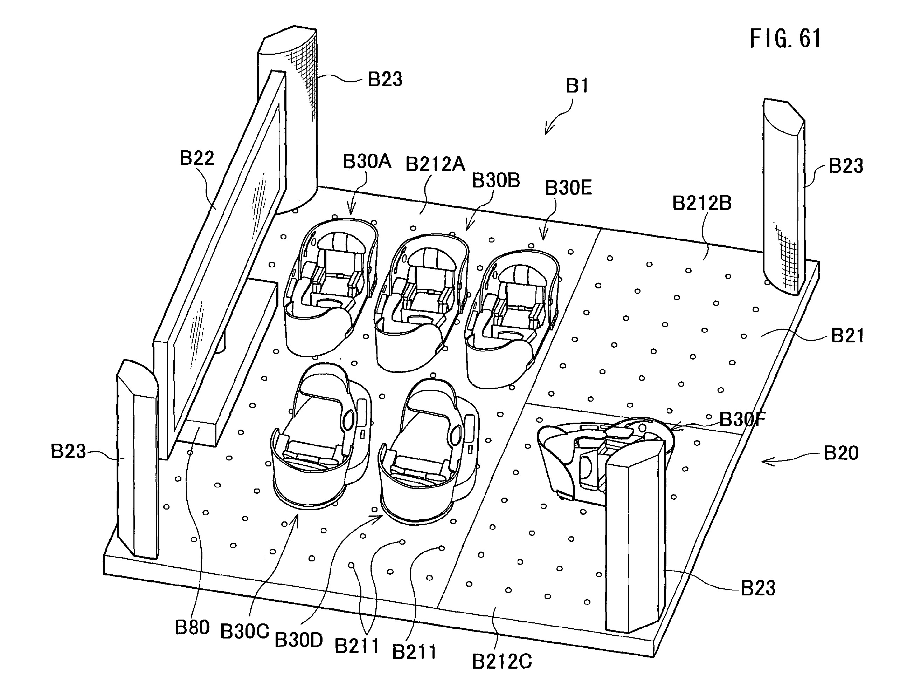

Specifically, as shown in Fig. 61, because the player in terminal device B30E is fellow players with the players in terminal devices B30A and B30B, this player's help is requested by the terminal devices B30A and B30B. The player in terminal device B30E, having agreed to help, is moved to the city area B212A and is placed in alignment with the terminal devices B30A and B30B.

On the other hand, although the player in terminal device B30F is fellow players with the players in terminal devices B30C and B30D, and this player's help is requested by the terminal devices B30C and B30D, he refuses to help and, therefore, remains in the forest area B212C.

In ST36, each player fights the opposing player or opposing party. Specifically, as shown in Fig. 61, the players of terminal devices B30A, B30B, and B30E and the players of terminal devices B30C and B30D fight in the city area B212A.

In this way, each player gets caught in a macroquest or is requested to help by fellow players caught in the macroquest, and whether to watch the battle between other players or to personally participate can be selected.

Therefore, because a traveling part 32 is provided in the terminal device B30 and is driven according to input from the input operation part B72, the terminal device B30 can be moved to a desired position on the player area B21 at the beginning of the game, and thus, each player can play the game by changing the position of the terminal device B30.

In addition, because the IP address is attached to the game input data by the sib-control device B90 of the terminal device B30 and the terminal device B30 to which the game input data is transmitted based on the IP address is identified by the main control device B80 of the main game machine body B20, the main game machine body B20 can accurately identify each terminal device B30, regardless of the position to which the terminal device B30 moves on the player area B21.

In addition, because the terminal device B30 includes a traveling part 32, this traveling part 32 is driven according to the movement signal data from the main control device B80, and the terminal device B30 moves to a predetermined sub area B212 according to the progression of the game, each player can play the game by changing the position of the terminal device B30.

In addition, by reflecting the positional relationship of a plurality of operation characters within the game area in the positional relationship of the plurality of terminal devices, the positional relationships between the operation characters in the game area can be presented more realistically on the play area, and thus, the enjoyment of the player is further enhanced. For example, if a plurality of players fight against each other, the players can be made aware that they are enemies by bringing the terminal devices B30 of the competing players closer together, and tension between the opposing players can be enhanced.

In addition, because the movement signal data is transmitted to a specific terminal device B30 from the main control device B80 using the IP address, each terminal device B30 can accurately identify movement signal data from the main game machine body B20, regardless of the position of the terminal device B30 on the play area B21.

In addition, because an IC tag detection part B324 is included in the terminal device B30, and the terminal device B30 is moved so as to become closer to the position designated by the movement signal data, while verifying the current position of the terminal device B30 by the current positional data detected by the IC tag detection part B324, the terminal device B30 can be moved to the designated position accurately.

Furthermore, because the game machine B1 includes a reclining function in the seat B31 of the terminal device B30, the player seated in the seat B31 of the terminal device B30 can take a break without leaving the terminal device of the game machine. In addition, according to the state of the reclining function in the terminal device B30, when it is determined that the player has operated the reclining function and is in a break state, the CPU B81 can, for example, control this player only in break mode. In this way, because it is not disadvantageous to the game progression of this player, even if the game operation is halted, the player can take a break at ease.

In another mode, because the game machine B1 furthermore has a massage mechanism included in the seat B31 of the terminal device B30, the player seated in the seat B31 of the terminal device B30 can take a break for a fixed period of time after the game is completed without moving away from the terminal device B30 of the game machine B1. Also, this time, i.e., the time in which the massage mechanism is operating can be set in accordance with the result of the game. In other words, the massage time can be extended or shortened in accordance with the game result or the number of points acquired by the player at the end of the game. For example, the main control device B80 or the terminal device B30 can set a massage time of 10 minutes when the number of game points is 1,000 or more, and a massage time of 5 minutes when the number of points is between 500 and 1,000 points; and the massage mechanism can be set to not operate when the number of points is less than the above.

The enjoyment at the end of the game can thereby be increased for the player, and determination and positive emotions related to long games can be added.

The present invention is not limited to the foregoing embodiments and includes modifications, improvements and the like which achieve the objects of the present invention.

## Claims

1. A game machine comprising:
a game controller for receiving input from a player;
a monitor for receiving externally or generating internally and showing a game screen, generated according to a multi-player fighting game program;
a seat for seating the player; and
a sensation generating means for generating sensations according to input from said game controller and input from an opposing player.

2. A game machine comprising:
a main game machine body which comprises a memory means for storing a game program and a main control means for executing said game program stored in said memory means; and
a plurality of terminal devices each of which comprise an input means, a sensation generating device for generating sensations in a player, a sub-control means connected to said main game machine body through wireless or wired connection, for transmitting game input data according to input from said input means to said main control means, and a sub-display means for showing image data;
wherein said main control means receives a plurality of game input data from said plurality of terminal devices, generates image data corresponding to each terminal device based on the game input data, transmits the generated image data to the corresponding terminal device;
wherein said sub-control means shows the received said image data in said sub-display means;
said terminal device comprises a seat for enabling the player to operate said input means while seated;
wherein said sub-control means includes a sensation generating device control means for controlling said sensation generating device;
wherein said game input data includes positional data of an operation character which can be moved over a single game area generated according to said game program; and
wherein in order to drive said sensation generating devices in said one terminal device and said other terminal devices according to the positional data of the said operation character and an environment data set for each of a plurality of game areas in said game area, said main control means transmits, to respective sub-control means, one or more sensation generating control signals stored according to the environment data set beforehand for each of a plurality of game areas.

3. The game machine according to claim 2, wherein:
said sensation generating device in said terminal device comprises: a plurality of storage containers for storing plural types of fragrances of differing scents;
a spray means for selectively spraying said fragrances stored in the plurality storage containers;
a memory means for storing table data in which the environment data set for each game area and the sensation generating control signal for providing sensation corresponding to this environment data are correlated; and
a sensation generating device driving means for selecting one storage container from said storage containers, based on said sensation generating control signal, and spraying the fragrance stored in the selected storage container with said spray means.

4. The game machine according to any of claims 2 and 3, wherein:
said terminal device comprises a traveling means for enabling movement in predetermined regions;
said main control means transmits a movement-control signal to said terminal device so that said plurality of terminal devices have a predetermined positional relationship through said traveling means and outputs a spotlight lighting control signal for lighting a spotlight to said plurality of terminal devices.

5. The game machine according to any of claims 2 and 3, wherein:
said sensation generating device in said terminal device comprises a mist generating device for generating fog-like mist; and
a sensation generating device driving means for driving said mist generating device driving means in response to the reception of said sensation generating control signal by said terminal device.

6. The game machine according to claim 5, wherein:
said mist generating device comprises a water storage container for storing water and a mist spray means for spraying water stored in the water storage container from the lower part of the seat; and
said sensation generating device driving means drives said mist spray means based on said sensation generating control signal.

7. A gaming machine comprising:
a main game machine body including a memory means for storing a game program, and a main control means for executing said game program stored in said memory means;
a plurality of terminal devices including an input means, a sensation generating device for generating sensations in a player, and a sub-control means connected to said main game machine body through wireless or wired connection, for transmitting game input data according to input from said input means to said main control means; and
a display means for displaying image based on image data output from said main control means;
wherein said main control means receives said plurality of game input data from said plurality of terminal devices, generates a single game data according to said game program based on this plurality of game input data, and generates and outputs to said display means image data which is shared by all terminal devices based on this single game data;
said terminal device includes a seat for enabling the player to operate said input means while seated;
said sub-control means includes a sensation generating device control means for controlling said sensation generating device;
the single game data generated in said main control means comprises positional data of a plurality of operation characters, which can be moved within a single game area generated according to the game program based on respective game input data input by the input means of said plurality of terminal devices; and
when the positional data of one operation character which is motion-operated by one terminal device among said plurality of terminal devices and positional data of another operation character which is motion-operated by another terminal device among said plurality of terminal devices meet predetermined conditions, said main control means transmits one or more sensation generating control signals stored beforehand to respective sub-control means, in order to drive said sensation generating devices in the one terminal device and the other terminal devices.

8. The game machine according to any of claims 2, 3 and 7 wherein:
said main gaming body comprises a play area in which said plurality of terminal devices is placed;
said terminal device comprises a moving means, which is provided on the lower part of said seat, for moving said terminal device on said play area;
said sub-control means comprises a movement control means for driving said moving means according to a movement-control signal from an external source and moving said terminal device to the predetermined position; and
said main control means comprises a movement-control signal transmitting means for transmitting said movement-control signal to the specified terminal device, when the positional data of the operation character of a specific terminal device among said plurality of terminal devices meet the predetermined condition.

9. A game device comprising:
a control means for receiving game data generated according to a game program; an input means; a display means; and a seat with a head rest for enabling the player to operate said input means while seated;
wherein said control means is connected to a spray means for spraying fragrance-containing air from the head rest, and causes said spray means to spray said fragrance in accordance with input data that is input via said input means by the player as a condition for starting the game based on said game program.

10. The game device according to claim 9, wherein
said control means outputs and displays a fragrance selection screen on said display means in prescribed conditions, and causes said spray means to spray the fragrance in accordance with selection input data of the player on said fragrance selection screen.

11. A game machine comprising:
a game controller for receiving input from a player;
a monitor for receiving externally or generating internally and showing a game screen, generated according to a multi-player fighting game program; and
a seat for seating the player;
wherein said seat further includes a light display means for showing requests to the outside through light emissions in a plurality of distinct optical patterns.

12. A game machine comprising:
a main game machine body which comprises a memory means for storing a game program and a main control means for executing said game program stored in said memory means; and
a plurality of terminal devices which comprise an input means, and a sub-control means, connected to said main game machine body through wireless or wired connection, for transmitting game input data according to input from said input means to said main control means; and
a display means for showing images based on image data output from said main control means;
wherein said terminal device comprises a seat for enabling the player to operate said input means while seated, and a light display means for emitting light;
said sub-control means comprises a light control means for lighting said light display means, based on input by said input means; and
said light display means is provided in a position which can be viewed from outside of said terminal device to which said light display means is provided.

13. The game machine according to claim 12, wherein;
said light display means emits light with a plurality of lighting aspect; and
said light control means illuminates said light display means in a predetermine lighting aspect, according to the input from said input means.

14. The game machine according to claim 13 wherein:
said terminal device further comprises a moving means which is provided on the lower part of said seat, for moving said terminal device;
said sub-control means further comprises a movement control means which is connected to said main game machine body through wireless or wired connection, for driving said moving means according to a input from said input means;
said light control means illuminates said light display means according to lighting aspect data from an external source;
said main control means further comprises a lighting aspect determination means for determining the lighting aspect of the light display means of the terminal device which transmitted the game input data, based on the game input data received from said sub-control means; and
said main control means transmits the determined lighting aspects as lighting aspect data.

15. The game machine according to any of claims 12 to 14, wherein;
said light display means comprises a light emission means for emitting light of differing colors.

16. The game machine according to any of claims 12 to 14, wherein:
said terminal device comprises a sub-display means for showing said image data;
said game program includes a product acquisition event which is generated according to the operation of said input means;
said main control means comprises a product memory means for storing product data of a product corresponding to said product acquisition event, and in which the player operating said terminal device transmits product data according to said product acquisition event to said terminal device, within the game environment realized by said game program;
said sub-control means displays said product image data included in said product data in said sub-display means according to the received product data; and
said light control means illuminates said light display means with the lighting aspect corresponding to said product, according to the selection of said product made by the player, based on said product image data.

17. The game machine according to any of claims 12 to 14, wherein:
said light display means comprises a light emission means for emitting light of differing colors; and
said light control means enables said light emission means of differing colors to illuminate according to the product acquired by the player in said game program.

18. A game device comprising:
a control means for receiving game data generated according to the game program; an input means; a display means; a seat for enabling the player to operate said input means while seated; and a light-emitting means disposed in a viewable position from the exterior of said game device;
wherein said light-emitting means comprises a plurality of transparent plates on which images of a plurality of drinks are drawn, and
said control means outputs and displays a selection screen for drinks or the like on said display means in accordance with an operation by the player from said input means, and causes said light-emitting means to light up the plate that corresponds to said selection input data in accordance with the selection input data of the player on said selection screen for drinks or the like.

19. A game machine comprising:
a game controller for receiving input from a player;
a monitor for receiving externally or generating internally and showing a game screen, generated according to a game program; and
a seat for seating the player;
wherein said seat comprises a reclining function, a sensor for detecting the angle at which the backrest of said seat is reclined by said reclining function, and a control part for halting the progress of the game by said game program or switching the game screen shown in said monitor to another image, according to the angle detected by said sensor.

20. A game machine comprising:
a main game machine body which comprises a main control means for generating image data according to the game program regulating the progress of the game, game input data, and said progress of the game, and a main display means for showing images based on said image data; and
a terminal device which comprises a reception means for receiving input from the player and outputting said game input data, a sub-display means which is provided so as to face the player, and a seat which enables the player to operate said reception means while seated;
wherein a reclining function for changing the position of the player and a position operation means for operating the reclining function are provided in said seat; and
said seat comprises a reclining function, a sonsor for detecting the angle at which the backrest of said seat is reclined by said reclining function, and a control means for halting the progress of the game by the game program or switching the game screen shown in said sub-display means to another image, according to the angle detected by said sensor.

21. The game machine according to any of claims 19 and 20, wherein:
said seat further comprises a backrest part for supporting the back of the player, a reclining driving means for tilting said backrest part, and a reclining operation means for operating said reclining driving means;
wherein said main control means is controlled when the gradient angle of said backrest part is within the range of a predetermined angle.

22. A game machine comprising:
a main game machine body which comprises a main control means for generating image data according to the game program regulating the progress of the game, game input data, and said progress of the game, and a main display means for showing images based on said image data; and
a terminal device which comprises a reception means for receiving input from the player and outputting said game input data, a sub-display means which is provided so as to face the player, and a seat which enables the player to operate said reception means while seated; wherein:
a reclining function for changing the position of the player and a position operation means for operating the reclining function are provided in said seat; and
said terminal device further comprises a game progress control means for controlling the progress of the game carried out by said main control means.

23. The game device according to claim 22, comprising a plurality of said terminal devices.

24. The game machine according to the claim 23, wherein
said main game machine body further includes a memory means for storing said game program, and a main control means for executing said game program;
each terminal device comprises a sub-control means for transmitting said game input data to said main control means;
said sub-control means is wirelessly connected to said main game machine body; and
said main control means generates single units of game data according to said game input data, said game program, and the state of said reclining mechanism of each terminal device, and generates and outputs to said sub-display unit shared image data that is shared with each terminal device according to the single units of game data.

25. The game machine according to any of claims 22 to 24, wherein:
said seat further comprises a backrest part for supporting the back of the player, a reclining drive means for tilting the backrest part, and a reclining operation means for driving the reclining drive means; and
said game progress control means controls said main control means when the tilt angle of said backrest part is in a prescribed angle range.

26. The game machine according to any of claims 22 to 24, wherein:
said seat comprises a massage ball for massaging the back of the player, and a massage ball drive means for pivoting the massage ball; and
said game progress control means furthermore operates said massage ball drive means when the tilt angle of the backrest part is in a prescribed angle range.

27. A game device comprising:
a control means for receiving game data generated according to a game program; an input means; a display means; and a seat enabling the player to operate said input means while seated;
wherein said seat comprises a massage ball for massaging the back of the player, and a massage ball drive means for pivoting the massage ball; and
said control means is connected to said massage ball drive means, and determines that the game has reached a prescribed result when said game based on said game program has ended, and sets the time for actuating said massage ball drive means.
